(19) Europäisches Patentamt
European Patent Office
Office européen des brevets

(11) **EP 4 648 512 A1**

(12) **EUROPEAN PATENT APPLICATION**
published in accordance with Art. 153(4) EPC

(43) Date of publication:
**12.11.2025 Bulletin 2025/46**

(21) Application number: **24738490.2**

(22) Date of filing: **03.01.2024**

(51) International Patent Classification (IPC):
**H04W 72/0446** $^{(2023.01)}$

(52) Cooperative Patent Classification (CPC):
**H04W 72/044; H04W 72/0446; H04W 72/53**

(86) International application number:
**PCT/CN2024/070388**

(87) International publication number:
**WO 2024/146557 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.01.2023 CN 202310008060**

(71) Applicant: **Vivo Mobile Communication Co., Ltd.
Dongguan, Guangdong 523863 (CN)**

(72) Inventors:
• **YUAN, Jiangwei
Dongguan, Guangdong 523863 (CN)**
• **WU, Hao
Dongguan, Guangdong 523863 (CN)**

(74) Representative: **Murgitroyd & Company
165-169 Scotland Street
Glasgow G5 8PL (GB)**

(54) **PMI COMBINATION COEFFICIENT FEEDBACK METHOD AND APPARATUS, AND TERMINAL AND STORAGE MEDIUM**

(57) This application discloses a PMI combination coefficient feedback method and apparatus, a terminal, and a storage medium, and pertains to the wireless communication field. The PMI combination coefficient feedback method in embodiments of this application includes: The terminal determines a target non-zero combination coefficient indication manner used to feed back a PMI combination coefficient; or the terminal sends a parameter related to a target PMI combination coefficient, where the parameter related to the target PMI combination coefficient includes at least one of the following: a non-zero combination coefficient indication bitmap, indicating positions of all non-zero combination coefficients; a non-zero combination coefficient amplitude indication, indicating amplitudes of all the non-zero combination coefficients; and a non-zero combination coefficient phase indication, indicating phases of all the non-zero combination coefficients.

200                                                    S210

A terminal determines a target non-zero combination coefficient indication manner used to feed back a PMI combination coefficient

S212

The terminal sends a parameter related to a target PMI combination coefficient

FIG. 2

**Description**

This application claims priority to Chinese Patent Application No. 202310008060.7, filed with the China National Intellectual Property Administration on January 4, 2023 and entitled "PMI COMBINATION COEFFICIENT FEEDBACK METHOD AND APPARATUS, TERMINAL, AND STORAGE MEDIUM", which is incorporated herein by reference in its entirety.

**TECHNICAL FIELD**

This application pertains to the field of wireless communication technologies, and specifically relates to a precoding matrix indicator (Precoding matrix indicator, PMI) combination coefficient feedback method and apparatus, a terminal, and a storage medium.

**BACKGROUND**

For medium-to-high-speed channel state information (Channel State Information, CSI) feedback, a Rel 16 Type2 codebook is enhanced in a related technology. If a network-side device configures a terminal to feed back PMIs of future N4 time domain units (Time Domain Unit, TD Unit), the PMIs of the N4 time domain units can be compressed in a Doppler Domain (Doppler Domain). Q Doppler domain basis vectors are selected, and a compressed combination coefficient is further fed back to reduce feedback overheads. A specific PMI matrix is in the following form, where $W_1$ is a matrix formed by spatial-domain basis vectors, $\widetilde{W}_2$ is a combination coefficient matrix, $W_f$ is a matrix formed by frequency-domain basis vectors, and $W_d$ is a matrix formed by Doppler-domain basis vectors. When N4=1, a PMI matrix form is the same as a PMI matrix form of Rel 16 eType2.

$$W_1\widetilde{W}_2\left(W_f\otimes W_d\right)^H$$

However, a technical solution for how the terminal feeds back a PMI combination coefficient in this case is not provided in the related technology.

**SUMMARY**

Embodiments of this application provide a PMI combination coefficient feedback method and apparatus, a terminal, and a storage medium, to resolve a problem of feeding back a PMI combination coefficient in a combination coefficient matrix obtained through a plurality of time domain unit channels.

According to a first aspect, a PMI combination coefficient feedback method is provided, including: A terminal determines a target non-zero combination coefficient indication manner used to feed back a PMI combination coefficient; or the terminal sends a parameter related to a target PMI combination coefficient, where the parameter related to the target PMI combination coefficient includes at least one of the following: a non-zero combination coefficient indication bitmap, indicating positions of all non-zero combination coefficients; a non-zero combination coefficient amplitude indication, indicating amplitudes of all the non-zero combination coefficients; and a non-zero combination coefficient phase indication, indicating phases of all the non-zero combination coefficients.

According to a second aspect, a PMI combination coefficient feedback apparatus is provided, including: a determining module, configured to determine a target non-zero combination coefficient indication manner used to feed back a PMI combination coefficient; or a sending module, configured to send a parameter related to a target PMI combination coefficient, where the parameter related to the target PMI combination coefficient includes at least one of the following: a non-zero combination coefficient indication bitmap, indicating positions of all non-zero combination coefficients; a non-zero combination coefficient amplitude indication, indicating amplitudes of all the non-zero combination coefficients; and a non-zero combination coefficient phase indication, indicating phases of all the non-zero combination coefficients.

According to a third aspect, a terminal is provided. The terminal includes a processor and a memory. The memory stores a program or instructions that are executable on the processor, and when the program or the instructions are executed by the processor, the steps of the method according to the first aspect are implemented.

According to a fourth aspect, a terminal is provided, including a processor and a communication interface. The processor is configured to implement the steps of the method according to the first aspect, and the communication interface is configured to communicate with an external device.

According to a fifth aspect, a readable storage medium is provided. The readable storage medium stores a program or instructions, and when the program or the instructions are executed by a processor, the steps of the method according to the first aspect are implemented.

According to a sixth aspect, a chip is provided. The chip includes a processor and a communication interface. The communication interface is coupled to the processor. The processor is configured to run a program or instructions to implement the steps of the method according to the first aspect.

According to a seventh aspect, a computer program/program product is provided. The computer program/program product is stored in a storage medium. The computer program/program product is executed by at least one processor to implement the steps of the method according to the first aspect.

In embodiments of this application, a terminal determines a target non-zero combination coefficient indication manner used to feed back a PMI combination coefficient, so that the target non-zero combination coefficient indication manner can be used to feed back a PMI combination coefficient in a combination coefficient matrix obtained through a plurality of time domain unit channels. In addition, in embodiments of this application, when feeding back the PMI combination coefficient, the terminal can feed back a parameter related to a target PMI combination coefficient, and indicate the PMI combination coefficient by using the parameter related to the target PMI combination coefficient, to feed back the PMI combination coefficient.

## BRIEF DESCRIPTION OF DRAWINGS

FIG. 1 is a block diagram of a wireless communication system applicable to an embodiment of this application;
FIG. 2 is a schematic flowchart of a PMI combination coefficient feedback method according to an embodiment of this application;
FIG. 3 is a schematic diagram of a CSI reporting manner according to an embodiment of this application;
FIG. 4 is a schematic diagram of a structure of a PMI combination coefficient feedback apparatus according to an embodiment of this application;
FIG. 5 is a schematic diagram of a structure of a communication device according to an embodiment of this application; and
FIG. 6 is a schematic diagram of a hardware structure of a terminal according to an embodiment of this application.

## DESCRIPTION OF EMBODIMENTS

The following clearly describes technical solutions in embodiments of this application with reference to accompanying drawings in embodiments of this application. Clearly, the described embodiments are merely a part rather than all of the embodiments of this application. All other embodiments obtained by a person of ordinary skill in the art based on embodiments of this application shall fall within the protection scope of this application.

Terms "first", "second", and the like in the specification and claims of this application are used to distinguish between similar objects instead of describing a specified order or sequence. It should be understood that, terms used in this way is interchangeable under appropriate circumstances, so that embodiments of this application can be implemented in a sequence other than that illustrated or described herein. Moreover, the terms "first" and "second" typically distinguish between objects of one category rather than limiting a quantity of objects. For example, there can be one or more first objects. In addition, "or" in the specification and claims represents at least one of the connected objects. For example, "A or B" includes three solutions, that is, solution 1: including A and not including B; solution 2: including B and not including A; and solution 3: including both A and B. The character "/" in the specification and claims generally indicates an "or" relationship between associated object.

It should be noted that, a technology described in embodiments of this application is not limited to a long term evolution (Long Term Evolution, LTE)/LTE-advanced (LTE-Advanced, LTE-A) system, and can be further used for other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. Terms "system" and "network" are often used interchangeably in embodiments of this application. The technology described can be used for the systems and radio technologies described above, as well as other systems and radio technologies. The following describes a new radio (New Radio, NR) system for illustrative purposes, and NR terms are used in most of the following descriptions. However, these technologies are also applicable to applications such as a 6th generation (6th Generation, 6G) communication system other than NR system applications.

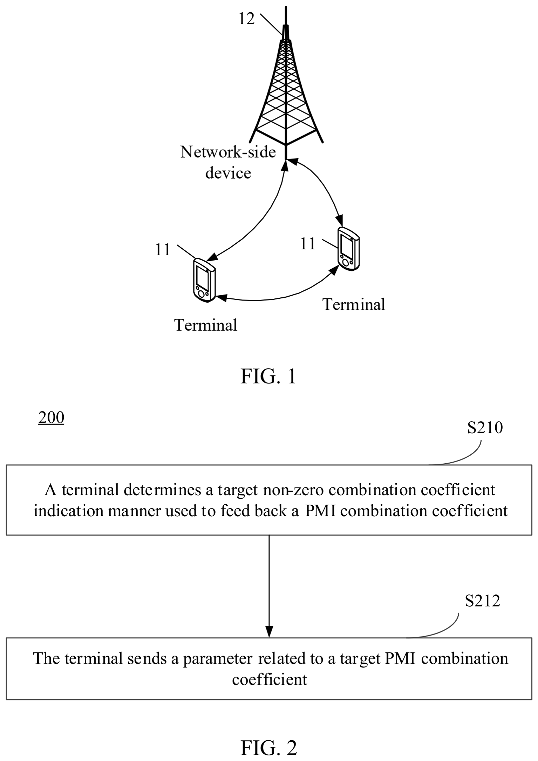

FIG. 1 is a block diagram of a wireless communication system applicable to an embodiment of this application. The wireless communication system includes a terminal 11 and a network-side device 12. The terminal 11 can be a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, for example, a refrigerator, a television, a laundry machine, or a furniture), a gaming console, a personal computer (personal computer, PC), a teller machine, a self-service machine, or another terminal-side device. The wearable device includes a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. It should be noted that a specific type of the terminal 11 is not limited in embodiments of this application. The network-side device 12 can include an access network device and/or a core network device. The access network device can also be referred to as a radio access network device, a radio access network (Radio Access Network, RAN), a radio access network function, or a radio access network unit. The access network device can include a base station, a WLAN access point, a WiFi node, or the like. The base station can be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or another appropriate term in the field. Provided that a same technical effect is achieved, the base station is not limited to a specific technical vocabulary. It should be noted that in embodiments of this application, only a base station in an NR system is used as an example for description, and a specific type of the base station is not limited.

With reference to the accompanying drawings, the following describes in detail a PMI combination coefficient feedback solution provided in embodiments of this application by using some embodiments and application scenarios thereof.

FIG. 2 is a schematic flowchart of a PMI combination coefficient feedback method according to an embodiment of this application. The method 200 can be performed by a terminal. In other words, the method can be performed by software or hardware installed on the terminal. As shown in FIG. 2, the method can include the following steps.

S210: The terminal determines a target non-zero combination coefficient indication manner used to feed back a PMI combination coefficient.

In this embodiment of this application, the terminal determines the target non-zero combination coefficient indication manner used to feed back a combination coefficient in a PMI combination coefficient matrix obtained through a plurality of time domain unit channels, so that the target non-zero combination coefficient indication manner used by the terminal can better feed back the combination coefficient in the PMI combination coefficient matrix obtained through the plurality of time domain unit channels.

Possible non-zero combination coefficient indication manners of a time domain PMI include the following:

Manner 1: The terminal feeds back Q two-dimensional non-zero combination coefficient indication bitmaps, where each non-zero combination coefficient indication bitmap corresponds to one selected Doppler-domain basis vector, and a length of each bitmap is 2*L*M. M represents a quantity of frequency-domain basis vectors selected by the terminal, Q represents a quantity of Doppler-domain basis vectors selected by the terminal, and L represents a quantity of spatial-domain basis vectors in a polarization direction selected by the terminal.

Manner 2: A two-stage non-zero combination coefficient indication, where the first stage is a two-dimensional non-zero combination coefficient indication bitmap (Non-Zero Coefficients Indication Bitmap, NZCI Bitmap) whose length is M*Q, and bits indicated as 1 in the first-stage non-zero combination coefficient indication bitmap represent one pair of frequency-domain basis vector and Doppler-domain basis vector that are selected by the terminal. It is assumed that the first-stage non-zero combination coefficient indication bitmap includes S pairs of frequency-domain basis vector and Doppler-domain basis vector that are selected by the terminal. In this case, the second-stage non-zero combination coefficient indication bitmap is a two-dimensional non-zero combination coefficient indication bitmap whose length is 2*L*S (indicating a position of a non-zero combination coefficient), where each row corresponds to a selected spatial-domain basis vector, and each column corresponds to a selected pair of frequency-domain basis vector and Doppler-domain basis vector. M represents a quantity of frequency-domain basis vectors selected by the terminal, Q represents a quantity of Doppler-domain basis vectors selected by the terminal, and L represents a quantity of spatial-domain basis vectors in a polarization direction selected by the terminal.

Manner 3: A two-stage non-zero combination coefficient indication bitmap, where the first stage is a two-dimensional non-zero combination coefficient indication bitmap (NZC bitmap) whose length is 2*L*Q, and bits indicated as 1 in the first-stage non-zero combination coefficient indication bitmap represent one pair of spatial-domain basis vector and Doppler-domain basis vector that are selected by the terminal. It is assumed that the first-stage non-zero combination coefficient indication bitmap includes S pairs of spatial-domain basis vector and Doppler-domain basis vector that are selected by the terminal. In this case, the second-stage non-zero combination coefficient indication bitmap is a two-dimensional non-zero combination coefficient indication bitmap whose length is M*S (indicating a position of a non-zero combination coefficient), where each row corresponds to a selected frequency-domain basis vector, and each column corresponds to a selected pair of spatial-domain basis vector and Doppler-domain basis vector. M represents a quantity of frequency-domain basis vectors selected by the terminal, Q represents a quantity of Doppler-domain basis vectors selected by the terminal, and L represents a quantity of spatial-domain basis vectors in a polarization direction selected by the terminal.

Manner 4: A two-stage non-zero combination coefficient indication bitmap, where the first stage is a two-dimensional non-zero combination coefficient indication bitmap (NZC bitmap) whose length is 2*L*M, L represents a quantity of spatial-domain basis vectors in a polarization direction selected by the terminal, M represents a quantity of frequency-domain basis vectors selected by the terminal, and bits indicated as 1 in the first-stage non-zero combination coefficient indication bitmap represent one pair of frequency-domain basis vector and spatial-domain basis vector that are selected by the terminal. It is assumed that the first-stage non-zero combination coefficient indication bitmap includes S pairs of frequency-domain basis vector and spatial-domain basis vector that are selected by the terminal. In this case, the second-stage non-zero combination coefficient indication bitmap is a two-dimensional non-zero combination coefficient indication bitmap whose length is Q*S (indicating a position of a non-zero combination coefficient), where each row corresponds to a selected Doppler basis vector, and each column corresponds to a selected pair of frequency-domain basis vector and spatial-domain basis vector. Q represents a quantity of Doppler-domain basis vectors selected by the terminal.

However, the foregoing several non-zero combination coefficient indication manners have advantages and disadvantages. To better perform non-zero combination coefficient indication, in this embodiment of this application, the terminal determines the target non-zero combination coefficient indication manner used to feed back the PMI combination coefficient.

S212: The terminal sends a parameter related to a target PMI combination coefficient.

In this embodiment of this application, the parameter related to the target PMI combination coefficient can include at least one of the following:

a non-zero combination coefficient indication bitmap, indicating positions of all non-zero combination coefficients;
a non-zero combination coefficient amplitude indication, indicating amplitudes of all the non-zero combination coefficients; and
a non-zero combination coefficient phase indication, indicating phases of all the non-zero combination coefficients.

It should be noted that, in this embodiment of this application, S210 and S212 can be separately performed, or S212 can be performed after S210. For example, after determining the target non-zero combination coefficient indication manner, the terminal can send the parameter related to the target PMI combination coefficient by using the target non-zero combination coefficient indication in S212. Alternatively, after obtaining the PMI combination coefficient matrix, the terminal can directly perform S212 to feed back the parameter related to the target PMI combination coefficient. The following separately describes various optional implementations of S210 and S212.

(1) S210

In an optional implementation, the target non-zero combination coefficient indication manner can include: feeding back two non-zero combination coefficient indication bitmaps, where the first one of two non-zero combination coefficient indication bitmaps indicates positions of S basis vector pairs selected for all transport layers and fed back by the terminal, the second one of two non-zero combination coefficient indication bitmaps indicates a position of a non-zero combination coefficient at each transport layer, and S is an integer greater than 0.

In the foregoing optional implementation, the S basis vector pairs can be frequency domain-Doppler domain basis vector pairs, can be spatial domain-Doppler domain basis vector pairs, or can be frequency domain-spatial domain basis vector pairs. For example, the first one of two non-zero combination coefficient indication bitmaps indicates the S frequency domain-Doppler domain basis vector pairs selected and fed back by the terminal, or the first one of two non-zero combination coefficient indication bitmaps indicates the S spatial domain-Doppler domain basis vector pairs selected and fed back by the terminal, or the first one of two non-zero combination coefficient indication bitmaps indicates the S frequency domain-spatial domain basis vector pairs selected and fed back by the terminal.

In the foregoing optional implementation, the first one of two non-zero combination coefficient indication bitmaps is shared by all transport layers, and a length can be: L*M (corresponding to the S basis vector pairs being frequency domain-spatial domain basis vector pairs), or L*Q (corresponding to the S basis vector pairs being frequency domain-Doppler domain basis vector pairs), or M*Q (corresponding to the S basis vector pairs being spatial domain-Doppler domain basis vector pairs). For example, if there is a non-zero coefficient in a position at any layer, one bit in the first one of two non-zero combination coefficient indication bitmaps (bitmap) is identified as 1. the second one of two non-zero combination coefficient indication bitmaps indicates the position of the non-zero combination coefficient at each transport layer, and a length can be S\*L\*v, Q\*S\*v, or M\*S\*v. For example, a position identified as 1 in the first one of two non-zero combination coefficient indication bitmaps is indicated by a bitmap at each layer (per layer) in the second one of two non-zero combination coefficient indication bitmaps.

M represents a quantity of frequency-domain basis vectors selected by the terminal or configured by a network-side device when a transmission rank is v, Q represents a quantity of Doppler-domain basis vectors selected by the terminal or configured by the network-side device when the transmission rank is v, L represents a quantity of spatial-domain basis vectors in a polarization direction selected by the terminal, and v is the transmission rank (Rank).

In the foregoing optional implementation, optionally, a value of S includes one of the following:

(1) A preset value explicitly or implicitly configured by the network-side device. For example, the network-side device (for example, a base station) can configure the value of S by using higher layer signaling, or configure a parameter, and the terminal obtains the value of S through the parameter.
(2) One of a plurality of candidate values explicitly or implicitly configured by the network-side device. For example, the network-side device can configure a plurality of candidate values of S by using the higher layer signaling, and the terminal selects one candidate value. Optionally, in the optional implementation, the terminal can indicate, to the network-side device, the candidate value selected by the terminal.
(3) A value of S determined by the terminal based on a maximum or minimum value of S explicitly or implicitly configured by the network-side device. For example, the network-side device can configure a maximum value of S, and the terminal determines, based on the maximum value of S, a value of S that does not exceed the maximum value of S. For another example, the network-side device can configure a minimum value of S, and the terminal determines, based on the minimum value of S, a value of S that is not less than the minimum value of S. In the optional implementation, optionally, the value of S determined by the terminal can be fed back to the network-side device.
(4) A value determined by the terminal based on a first scaling factor configured by the network-side device. In the optional implementation, optionally, the terminal can feed back a value of S to the network-side device.
(5) A value of S determined by the terminal based on a maximum or minimum value of S determined based on the first scaling factor configured by the network-side device. The terminal can determine the maximum value of S or the minimum value of S based on the first scaling factor, so as to determine the value of S based on the maximum value of S or the minimum value of S. For example, the value of S is greater than or equal to the minimum value of S, or the value of S is less than or equal to the maximum value of S. Optionally, the terminal can feed back the value of S to the network-side device.

In an optional implementation, the terminal can determine the target non-zero combination coefficient indication manner based on a non-zero combination coefficient indication manner indicated by the higher layer signaling.

For example, the network-side device can indicate, by using the higher layer signaling, a non-zero combination coefficient indication manner as one of the following:

1. feeding back Q non-zero combination coefficient indication bitmaps, where each non-zero combination coefficient indication bitmap is associated with one selected Doppler-domain basis vector, and Q represents a quantity of Doppler-domain basis vectors;
2. feeding back one non-zero combination coefficient indication bitmap, where the non-zero combination coefficient indication bitmap is associated with Q Doppler-domain basis vectors;
3. feeding back two non-zero combination coefficient indication bitmaps, where the first one of two non-zero combination coefficient indication bitmaps indicates S frequency domain-Doppler domain basis vector pairs selected by the terminal, and the second one of two non-zero combination coefficient indication bitmaps indicates a position of a non-zero combination coefficient;
4. feeding back two non-zero combination coefficient indication bitmaps, where the first one of two non-zero combination coefficient indication bitmaps indicates S spatial domain-Doppler domain basis vector pairs selected by the terminal, and the second one of two non-zero combination coefficient indication bitmaps indicates a position of a non-zero combination coefficient; and
5. feeding back two non-zero combination coefficient indication bitmaps, where the first one of two non-zero combination coefficient indication bitmaps indicates S frequency domain-spatial domain basis vector pairs selected by the terminal, and the second one of two non-zero combination coefficient indication bitmaps indicates a position of a non-zero combination coefficient.

For the Q fed-back non-zero combination coefficient indication bitmaps, each non-zero combination coefficient indication bitmap is associated with one or more transport layers; for the one fed-back non-zero combination coefficient indication bitmap, the non-zero combination coefficient indication bitmap is associated with one or more transport layers; and for the two fed-back non-zero combination coefficient indication bitmaps, the first one of two non-zero combination coefficient indication bitmaps is associated with one or more transport layers, and the second one of two non-zero combination coefficient indication bitmaps is associated with one or more transport layers.

In an optional implementation, the terminal can also determine the target non-zero combination coefficient indication manner based on a first target parameter, where the first target parameter includes at least one of the following: a quantity of spatial-domain basis vectors selected by the terminal or configured by the network-side device, a quantity of frequency-domain basis vectors selected by the terminal or configured by the network-side device, a quantity of Doppler-domain basis vectors selected by the terminal or configured by the network-side device, and the first scaling factor. The first scaling factor can be a constant selected by the terminal or configured by the network-side device.

Optionally, a quantity of basis vectors selected by the terminal or configured on a network side can be a quantity of basis vectors obtained by the terminal based on a channel state information reference signal, where in this case, the terminal may need to feed back a corresponding quantity of basis vectors to a network; or can be a quantity of basis vectors obtained by the terminal based on network-side higher layer signaling or a default rule.

In the foregoing optional implementation, optionally, the terminal may obtain the first target parameter from a second PMI parameter configuration configured by the network-side device by using the higher layer signaling, where the second PMI parameter configuration includes the first target parameter. The higher layer signaling can be radio resource control (Radio Resource Control, RRC) layer signaling, or can be medium access control (Medium Access Control, MAC) layer signaling. Further, the higher layer signaling can be downlink control information (Downlink Control Information, DCI).

In an optional implementation, that the terminal determines the target non-zero combination coefficient indication manner based on the first target parameter includes at least one of the following:

(1) In a case that a first condition is met, determine that the target non-zero combination coefficient indication manner is feeding back two non-zero combination coefficient indication bitmaps, where the first one of two non-zero combination coefficient indication bitmaps indicates S frequency domain-Doppler domain basis vector pairs selected by the terminal, the second one of two non-zero combination coefficient indication bitmaps indicates a position of a non-zero combination coefficient, and the first condition includes at least one of the following: a first target value is less than or equal to 0, M is less than or equal to L, and Q is less than or equal to L, where the first target value is one of the following: L*Beta+1-L, v*L*Beta+1-v*L, Q*M+L*S-Q*L*M, and Q*M+L*S*v-Q*L*M*v.

For example, when L*Beta+1-L<0 or L*Beta+1-L<=0, two non-zero combination coefficient indication bitmaps are selected and fed back. the first one of two non-zero combination coefficient indication bitmaps indicates the S frequency domain-Doppler domain basis vector pairs selected by the terminal, and the second one of two non-zero combination coefficient indication bitmaps indicates the position of the non-zero combination coefficient.

For another example, when v*L*Beta+1-v*L<0 or v*L*Beta+1-v*L<=0, two non-zero combination coefficient indication bitmaps are selected and fed back. the first one of two non-zero combination coefficient indication bitmaps indicates the S frequency domain-Doppler domain basis vector pairs selected by the terminal, and the second one of two non-zero combination coefficient indication bitmaps indicates the position of the non-zero combination coefficient.

For another example, when M<L or Q<L, or M<=L or Q<=L, two non-zero combination coefficient indication bitmaps are selected and fed back. the first one of two non-zero combination coefficient indication bitmaps indicates the S frequency domain-Doppler domain basis vector pairs selected by the terminal, and the second one of two non-zero combination coefficient indication bitmaps indicates the position of the non-zero combination coefficient.

For another example, when Q*M+L*S-Q*L*M<0 or Q*M+L*S-Q*L*M<=0, two non-zero combination coefficient indication bitmaps are selected and fed back. the first one of two non-zero combination coefficient indication bitmaps indicates the S frequency domain-Doppler domain basis vector pairs selected by the terminal, and the second one of two non-zero combination coefficient indication bitmaps indicates the position of the non-zero combination coefficient.

For another example, when Q*M+L*S*v-Q*L*M*v<0 or Q*M+L*S*v-Q*L*M*v<=0, two non-zero combination coefficient indication bitmaps are selected and fed back. the first one of two non-zero combination coefficient indication bitmaps indicates the S frequency domain-Doppler domain basis vector pairs selected by the terminal, and the second one of two non-zero combination coefficient indication bitmaps indicates the position of the non-zero combination coefficient.

(2) In a case that a second condition is met, determine that the target non-zero combination coefficient indication manner is feeding back two non-zero combination coefficient indication bitmaps, where the first one of two non-zero combination coefficient indication bitmaps indicates S spatial domain-Doppler domain basis vector pairs selected by the terminal, the second one of two non-zero combination coefficient indication bitmaps indicates a position of a non-zero combination coefficient, and the second condition includes at least one of the following: a second target value is less than or equal to 0, M is greater than or equal to Q, and M is greater than or equal to L, where the second target value is one of the following: M*Beta+1-M, v*M*Beta+1-v*M, L*Q+M*S-Q*L*M, and L*Q+M*S*v-Q*L*M*v.

For example, when M*Beta+1-M<0 or M*Beta+1-M<=0, two non-zero combination coefficient indication bitmaps are selected and fed back. the first one of two non-zero combination coefficient indication bitmaps indicates the S spatial domain-Doppler domain basis vector pairs selected by the terminal, and the second one of two non-zero combination coefficient indication bitmaps indicates the position of the non-zero combination coefficient.

For another example, when v*M*Beta+1-v*M<0 or v*M*Beta+1-v*M<=0, two non-zero combination coefficient indication bitmaps are selected and fed back. the first one of two non-zero combination coefficient indication bitmaps indicates the S spatial domain-Doppler domain basis vector pairs selected by the terminal, and the second one of two non-zero combination coefficient indication bitmaps indicates the position of the non-zero combination coefficient.

For another example, when M>L or M>Q, or M>=L or M>=Q, two non-zero combination coefficient indication bitmaps are selected and fed back. the first one of two non-zero combination coefficient indication bitmaps indicates the S spatial domain-Doppler domain basis vector pairs selected by the terminal, and the second one of two non-zero combination coefficient indication bitmaps indicates the position of the non-zero combination coefficient.

For another example, when L*Q+M*S-Q*L*M<0 or L*Q+M*S-Q*L*M<=0, two non-zero combination coefficient indication bitmaps are selected and fed back. the first one of two non-zero combination coefficient indication bitmaps indicates the S spatial domain-Doppler domain basis vector pairs selected by the terminal, and the second one of two non-zero combination coefficient indication bitmaps indicates the position of the non-zero combination coefficient.

For another example, when L*Q+M*S*v-Q*L*M*v<0 or L*Q+M*S*v-Q*L*M*v<=0, two non-zero combination coefficient indication bitmaps are selected and fed back. the first one of two non-zero combination coefficient indication bitmaps indicates the S spatial domain-Doppler domain basis vector pairs selected by the terminal, and the second one of two non-zero combination coefficient indication bitmaps indicates the position of the non-zero combination coefficient.

(3) In a case that a third condition is met, determine that the target non-zero combination coefficient indication manner is feeding back two non-zero combination coefficient indication bitmaps, where the first one of two non-zero combination coefficient indication bitmaps indicates S spatial domain-frequency domain basis vector pairs selected by the terminal, the second one of two non-zero combination coefficient indication bitmaps indicates a position of a non-zero combination coefficient, and the third condition includes at least one of the following: a third target value is less than or equal to 0, Q is less than or equal to M, and Q is greater than or equal to L, where the third target value is one of the following: Q*Beta+1-Q, v*Q*Beta+1-v*Q, L*M+Q*S-Q*L*M, and L*M+Q*S*v-Q*L*M*v.

For example, when Q*Beta+1-Q<0 or Q*Beta+1-Q<=0, two non-zero combination coefficient indication bitmaps are selected and fed back. the first one of two non-zero combination coefficient indication bitmaps indicates the S spatial domain-frequency domain basis vector pairs selected by the terminal, and the second one of two non-zero combination coefficient indication bitmaps indicates the position of the non-zero combination coefficient.

For another example, when v*Q*Beta+1-v*Q<0 or v*Q*Beta+1-v*Q<=0, two non-zero combination coefficient indication bitmaps are selected and fed back. the first one of two non-zero combination coefficient indication bitmaps indicates the S spatial domain-frequency domain basis vector pairs selected by the terminal, and the second one of two non-zero combination coefficient indication bitmaps indicates the position of the non-zero combination coefficient.

For another example, when Q>L or Q<M, or Q>=L or Q<=M, two non-zero combination coefficient indication bitmaps are selected and fed back. the first one of two non-zero combination coefficient indication bitmaps indicates the S spatial domain-frequency domain basis vector pairs selected by the terminal, and the second one of two non-zero combination coefficient indication bitmaps indicates the position of the non-zero combination coefficient.

For another example, when L*M+Q*S-Q*L*M<0 or L*M+Q*S-Q*L*M<=0, two non-zero combination coefficient indication bitmaps are selected and fed back. the first one of two non-zero combination coefficient indication bitmaps indicates the S spatial domain-frequency domain basis vector pairs selected by the terminal, and the second one of two non-zero combination coefficient indication bitmaps indicates the position of the non-zero combination coefficient.

For another example, when L*M+Q*S*v-Q*L*M*v<0 or L*M+Q*S*v-Q*L*M*v<=0, two non-zero combination coefficient indication bitmaps are selected and fed back. the first one of two non-zero combination coefficient indication bitmaps indicates the S spatial domain-frequency domain basis vector pairs selected by the terminal, and the second one of two non-zero combination coefficient indication bitmaps indicates the position of the non-zero combination coefficient.

(4) In a case that any one of the first condition, the second condition, or the third condition is not met, determine that the target non-zero combination coefficient indication manner is: feeding back Q non-zero combination coefficient indication bitmaps, where each non-zero combination coefficient indication bitmap is associated with one selected Doppler basis vector; or feeding back one non-zero combination coefficient indication bitmap, where the non-zero combination coefficient indication bitmap is associated with Q Doppler basis vectors.

In the foregoing optional implementations, L represents the quantity of spatial-domain basis vectors selected by the terminal or configured by the network-side device, M represents the quantity of frequency-domain basis vectors selected by the terminal or configured by the network-side device, Q represents the quantity of Doppler-domain basis vectors selected by the terminal or configured by the network-side device, Beta represents the first scaling factor, the first scaling factor can be selected by the terminal or configured by the network-side device, and S represents a quantity of basis vector pairs selected by the terminal. L can be a quantity of spatial-domain basis vectors in one polarization direction, or can be a sum of quantities of spatial-domain basis vectors in two polarization directions, and generally represents the sum of quantities of spatial-domain basis vectors in two polarization directions.

In the foregoing optional implementation, optionally, for the value of S, refer to the foregoing description. Details are not described herein again.

In the foregoing optional implementation, the target non-zero combination coefficient indication manner can be determined based on at least one of the quantity of spatial-domain basis vectors selected by the terminal or configured by the network-side device, the quantity of frequency-domain basis vectors selected by the terminal or configured by the network-side device, the quantity of Doppler-domain basis vectors selected by the terminal or configured by the network-side device, and the first scaling factor.

For example, when the first scaling factor configured by the network-side device is equal to 0.75, and when the quantity of frequency-domain basis vectors selected by the terminal meets the following: M>4 or M>=4, the terminal selects and feeds back two non-zero coefficient indication bitmaps. The first non-zero coefficient indication bitmap indicates the S spatial domain-Doppler domain basis vector pairs selected by the terminal, and the second non-zero coefficient indication bitmap indicates the position of the non-zero coefficient.

For another example, when the first scaling factor configured by the network-side device is equal to 0.75, and when the quantity of Doppler-domain basis vectors selected by the terminal meets the following Q>4 or Q>=4, two non-zero coefficient indication bitmaps are selected and fed back. The first non-zero coefficient indication bitmap indicates the S spatial domain-frequency domain basis vector pairs selected by the terminal, and the second non-zero coefficient indication bitmap indicates the position of the non-zero coefficient.

For another example, when the first scaling factor configured by the network-side device is equal to 0.75, and when the quantity of spatial-domain basis vectors selected by the terminal meets the following: L>2 or L>=2, two non-zero coefficient indication bitmaps are selected and fed back. The first non-zero coefficient indication bitmap indicates the S frequency domain-Doppler domain basis vector pairs selected by the terminal, and the second non-zero coefficient indication bitmap indicates the position of the non-zero coefficient.

For another example, when the first scaling factor is equal to 0.5, and when M>2 or M>=2, two non-zero coefficient indication bitmaps are selected and fed back. The first non-zero coefficient indication bitmap indicates the S spatial domain-Doppler domain basis vector pairs selected by the terminal, and the second non-zero coefficient indication bitmap indicates the position of the non-zero coefficient.

For another example, when the first scaling factor is equal to 0.5, and when Q>2 or Q>=2, two non-zero coefficient indication bitmaps are selected and fed back. The first non-zero coefficient indication bitmap indicates the S spatial domain-frequency domain basis vector pairs selected by the terminal, and the second non-zero coefficient indication bitmap indicates the position of the non-zero coefficient.

In an optional implementation, the terminal can alternatively obtain, based on an association relationship that is between a first PMI parameter configuration and a non-zero combination coefficient indication manner and that is stipulated in a protocol or a determining manner that is of the first PMI parameter configuration and the non-zero combination coefficient indication manner and that is stipulated in the protocol, the target non-zero combination coefficient indication manner associated with the first PMI parameter configuration, where the first PMI parameter configuration is one of the following: a PMI parameter configuration configured by the network-side device by using the higher layer signaling, and a PMI parameter configuration selected by the terminal, where a part of parameters in the first PMI parameter configuration are configured by the network-side device by using the higher layer signaling, and the other part of parameters are PMI parameters selected by the terminal. The higher layer signaling can be RRC layer signaling, or can be MAC layer signaling. Further, the higher layer signaling can be DCI. For example, it is stipulated in the protocol that each group of PMI parameter configurations is associated with one non-zero combination coefficient indication manner. After receiving a group of PMI parameter configurations configured by the network-side device, the terminal can determine that a non-zero combination coefficient indication manner associated with the group of PMI parameter configurations is the target non-zero combination coefficient indication manner. The PMI parameter configuration includes the first target parameter. In other words, the PMI parameter configuration includes at least one of the following: the quantity of spatial-domain basis vectors, the quantity of frequency-domain basis vectors, the quantity of Doppler-domain basis vectors, and the first scaling factor.

In one or more optional implementations, the first scaling factor can be used to determine a maximum quantity or quantity of one of the following selected by the terminal: spatial domain-Doppler domain basis vector pairs, spatial domain-frequency domain basis vector pairs, and frequency domain-Doppler domain basis vector pairs.

In one or more optional implementations, the first scaling factor is further used to determine a maximum quantity or quantity of non-zero combination coefficients fed back by the terminal.

For example, an upper limit of the quantity of non-zero combination coefficients fed back by the terminal is an upper limit of the quantity of spatial domain-Doppler domain basis vector pairs selected by the terminal multiplied by the quantity of frequency-domain basis vectors selected by the terminal, or an upper limit of the quantity of spatial domain-frequency domain basis vector pairs selected by the terminal multiplied by the quantity of Doppler-domain basis vectors selected by the terminal, or an upper limit of the quantity of frequency domain-Doppler domain basis vector pairs multiplied by the quantity of spatial-domain basis vectors selected by the terminal.

In an optional implementation, in a case that two non-zero combination coefficient indication bitmaps are fed back, the terminal can indicate, in a first part of a CSI report (Part1 of the report), a quantity of bits that are in the first one of two non-zero combination coefficient indication bitmaps and whose values are a preset value (for example, 1), that is, the quantity of spatial domain-Doppler domain basis vector pairs, the quantity of spatial domain-frequency domain basis vector pairs, or the quantity of frequency domain-Doppler domain basis vector pairs.

In an optional implementation, to enable the network-side device to learn of the target non-zero combination coefficient indication manner determined by the terminal, after S210, the method can further include: The terminal indicates the target non-zero combination coefficient indication manner by using the first part of the CSI report.

In an optional implementation, the terminal can indicate a non-zero combination coefficient indication manner by using Part1 of the CSI report. In this optional implementation, the terminal can carry identification information of the target non-zero combination coefficient indication manner in the first part of the CSI report.

For example, the network-side device configures a plurality of non-zero combination coefficient indication manners (a manner 1, a manner 2, and a manner 3) by using the higher layer signaling, and the terminal indicates a selected indication manner by using 2 bits in Part1 of the CSI report, where 00 corresponds to the manner 1, 01 corresponds to the manner 2, and 10 corresponds to the manner 3.

The terminal can alternatively implicitly indicate a non-zero combination coefficient indication manner by using Part1 of the CSI report. For example, the terminal indicates a first target quantity of non-zero combination coefficients in the first part of the CSI report, where the first target quantity is a specified quantity corresponding to the target non-zero combination coefficient indication manner. The network-side device can determine the non-zero combination coefficient indication manner based on an agreement and a quantity of non-zero combination coefficients.

For another example, the terminal can indicate, in the first part of the CSI report, a second target quantity of bits that are in the first one of two non-zero combination coefficient indication bitmaps and whose values are a preset value, where the second target quantity is a specified quantity corresponding to the target non-zero combination coefficient indication manner. The network-side device determines the non-zero combination coefficient indication manner based on the quantity of bits.

According to the foregoing technical solutions provided in embodiments of this application, the terminal can select an appropriate indication manner as far as possible, to implement maximum reduction of feedback overheads.

(2) S212

In a related technology, coefficients of a PMI coefficient are $i_1$ and $i_2$, where $i_1$ includes $i_{1,1}$, $i_{1,2}$, $i_{1,5}$, $i_{1,6,l}$, $i_{1,7,l}$, and $i_{1,8,l}$ and $i_2$ includes $i_{2,3,l}$, $i_{2,4,l}$, and $i_{2,5,l}$, where $l$ is equal to one or more values in 1, 2, 3, and 4. If a rank (RI) value v is 2, $l$=1, 2; or if an RI value v is 4, $l$= 1, 2, 3, 4.

Herein,

$i_{1,1}$ indicates a sequence number of an orthogonal DFT vector group, and is equal to $[q_1, q_2]$, where $q_1 \in \{0,1, ... , O_1 - 1\}$, $q_2 \in \{0,1, ... , O_2 - 1\}$, and $O_1$, $O_2$ is an oversampling factor configured by a network.

$i_{1,2}$ indicates sequence numbers of Y vectors in the orthogonal discrete Fourier transform (DFT) vector group indicated by $i_{1,1}$, and is equal to $i_{1,2} \in \left\{0,1, ... , \binom{N_1 N_2}{L} - 1\right\}$, where $N1$, $N2$ is a port quantity parameter configured by the network, Y is a quantity of DFT vectors indicated by the network, and $\binom{N_1 N_2}{Y}$ indicates a combination quantity of Y beams (beam) selected from $N_1 N_2$ beams.

$i_{1,5}$ indicates a start position $M_{initial}$ of a window whose length is $2M_v$, and a value range is $i_{1,5} \in \{0,1, ..., 2M_v - 1\}$, where $M_v$ indicates a quantity of time domain taps. Note: $i_{1,5}$ exists only in a case that $N_3 > 19$, and when $N_3 \leq 19$, $i_{1,5}$=0 and the terminal does not need to feed back the coefficient.

$i_{1,6,l}$ indicates positions of $M_v$ tap coefficients fed back by the layer $l$ in $N_3$ tap coefficients. A value range has two cases. When $N_3 > 19$, a value range is $i_{1,6,l} \in \left\{0,1, ... , \binom{2M_v - 1}{M_v - 1} - 1\right\}$, or when $N_3 \leq 19$, the value range is $i_{1,6,l} \in \left\{0,1, ... , \binom{N_3 - 1}{M_v - 1} - 1\right\}$. Feedback is performed in a combination number manner.

$i_{1,7,l}$ is a non-zero combination coefficient indication of the layer $l$, is a bit sequence, and has a total length of $2YM_v$.

$i_{1,8,l}$ is a strongest coefficient indication of the layer $l$, and a value range is $i_{1,8,l} \in \{0,1, ... ,2Y - 1\}$, where for rank=1 transmission, $i_{1,8,l}$ represents an $i_{1,8,l}$th non-zero combination coefficient, and for transmission greater than rank=1, $i_{1,8,l}$ represents an $i_{1,8,l}$th coefficient.

$i_{2,3,l}$ is a quantization indication of two polarization amplitude coefficients, each amplitude coefficient is a bit string of 4 bits, and each bit string corresponds to a quantization value. An amplitude coefficient of polarization in which a strongest coefficient is located is not fed back, and is assumed to be 1.

$i_{2,4,l}$ is a quantization indication of amplitude coefficients of all tap coefficients of the layer $l$, each amplitude coefficient is a bit string of 3 bits, each codepoint corresponds to a quantization value, and $2YM_v$ amplitude coefficients are obtained in total. An amplitude coefficient of the strongest coefficient is not fed back, and is assumed to be 1. Remaining coefficients feed back only amplitude non-zero combination coefficients. Therefore, a quantity of total feedback coefficients of the layer $l$ is $K_{NZ,l}$ - 1, where $K_{NZ,l}$ represents a quantity of amplitude non-zero combination coefficients of the layer $l$.

$i_{2,5,l}$ is a quantization indication of phase coefficients of all tap coefficients of the layer $l$, each coefficient is a bit string of 4 bits, each codepoint corresponds to a quantization value, and $2LM_l$ phase coefficients are obtained in total. A phase coefficient of the strongest coefficient is not fed back, and is assumed to be 0. Remaining coefficients feed back only phase coefficients corresponding to the amplitude non-zero combination coefficients. Therefore, a quantity of total feedback coefficients of the layer $l$ is $K_{NZ,l}$ - 1, where $K_{NZ,l}$ represents the quantity of amplitude non-zero combination coefficients.

A specific mapping order of coefficients is shown in the following Table 1.

**Table 1**

| CSI part | | Content | Value |
|---|---|---|---|
| CSI part1 | | Indicating a quantity $K_{NZ}$ of non-zero combination coefficients of all layers, used to determine values of PMI coefficients in Part2 | For rank1 transmission, a length is $\lceil \log_2 K_0 \rceil$ ; and for transmission whose rank is greater than 1, a length is $\lceil \log_2 2 K_0 \rceil$ , where $K_0 = \lceil \beta 2 Y M_0 \rceil$ |
| CSI part2 | Group0 | $i_{1,1}$, $i_{1,2}$, $i_{1,8,l}$ | $i_{1,1}$: $\lceil \log_2 O_1 O_2 \rceil$ $$\left\lceil \log_2 \binom{N_1 N_2}{Y} \right\rceil$$ $i_{1,2}$: $i_{1,8,l}$: for rank v=1 transmission, $\lceil \log_2 K_{NZ} \rceil$ ; and for rank v>1 transmission, $\lceil \log_2 2Y \rceil$ |
| | Group1 | High-priority elements of $i_{1,5}$, $i_{1,6,l}$, and $i_{1,7,l}$, high-priority elements of $i_{2,3,l}$ and $i_{2,4,l}$, and high-priority elements of $i_{2,5,l}$ | $i_{1,7,l}$: $v2YM_v - \lfloor K_{NZ}/2 \rfloor$ $i_{2,4,l}$: $\lceil K_{NZ}/2 \rceil - v$ $i_{2,5,l}$: $\lceil K_{NZ}/2 \rceil - v$ |
| | Group2 | Low-priority elements of $i_{1,7,l}$, low-priority elements of $i_{2,4,l}$, and low-priority elements of $i_{2,5,l}$ | $i_{1,7,l}$: $\lfloor K_{NZ}/2 \rfloor$ $i_{2,4,l}$: $\lfloor K_{NZ}/2 \rfloor$ $i_{2,5,l}$: $\lfloor K_{NZ}/2 \rfloor$ |

Element priorities of $i_{2,4,l}$, $i_{2,5,l}$, and $i_{1,7,l}$ are determined based on a priority value calculated for each bit. A lower priority value indicates a higher priority, and a calculation formula is as follows:

$$\mathrm{Pri}(l, i, f) = 2 * Y * v * \pi(f) + v * i + l$$

Herein, $\pi(f) = min\left(2 * n_{3,l}^{(f)}, 2 * \left(N_3 - n_{3,l}^{(f)}\right) - 1\right)$, $l=0,1,...,v$-1, $i=0,1,...,2Y$-1, $f=0,1,...,M_v$ - 1.

It can be learned from the formula $\pi(f)$ that a value range of the formula is $\pi(f) \in 0,1, ..., N_3$-1, and a sequence of

$n_{3,l}^{(f)}$ corresponding to values in ascending oder is 0, $N_3$ - *1,1*, $N_3$ - *2,2*, $N_3$ - *3* ....

It can be learned from the formula Pri(l, i, f) that a weight of $\pi(f)$ is the largest, followed by *i*, and then followed by *l*. Therefore, a sequence of priorities from high to low is shown in Table 2.

**Table 2**

| Priorities from high to low | A first coefficient in 2Y coefficients of a first layer in a first delay |
| --- | --- |
| | ... |
| | A first coefficient in 2Y coefficients of an $l^{th}$ layer in the first delay |
| | ... |
| | A $2Y^{th}$ coefficient in 2Y coefficients of the first layer in the first delay |
| | ... |
| | A $2Y^{th}$ coefficient in 2Y coefficients of the $l^{th}$ layer in the first delay |
| | ... |
| | A first coefficient in 2Y coefficients of a first layer in an $N_3^{th}$ delay |
| | ... |
| | A first coefficient in 2Y coefficients of an $l^{th}$ layer in the $N_3^{th}$ delay |
| | ... |
| | A $2Y^{th}$ coefficient in 2Y coefficients of the first layer in the $N_3^{th}$ delay |
| | ... |
| | A $2Y^{th}$ coefficient in 2Y coefficients of the $l^{th}$ layer in the $N_3^{th}$ delay |
| | ... |

When a non-zero combination coefficient indication is a two-stage indication (that is, two non-zero combination coefficient indication bitmaps are fed back), bits indicated as 1 in a first-stage non-zero combination coefficient indication (namely, the first one of two non-zero combination coefficient indication bitmaps) may correspond to a plurality of non-zero combination coefficients. However, a manner in a related technology is that one bit corresponds to one combination coefficient. In this case, a feedback manner of the non-zero combination coefficient indication bitmap needs to be improved, to ensure that the network can correctly obtain all non-zero combination coefficients and positions of the non-zero combination coefficients in spatial domain, time domain, and frequency domain.

Therefore, in an optional implementation of this embodiment of this application, the S212 can include one of the following:

(1) In a case that the two non-zero combination coefficient indication bitmaps are fed back, map the first one of two non-zero combination coefficient indication bitmaps to a group 1 in a second part of the CSI report for sending, and map the second one of two non-zero combination coefficient indication bitmaps to the group 1 and a group 2 in the second part of the CSI report for sending. For example, the first one of two non-zero combination coefficient indication bitmaps (with a length of L*Q, L*M, M*Q, v*L*Q, v*L*M, or v*M*Q) is mapped to Group1 in Part2 of the CSI report, and the second one of two non-zero combination coefficient indication bitmaps is mapped to Group1 and Group2 in Part2 of the CSI report.

(2) In a case that the two non-zero combination coefficient indication bitmaps are fed back, map the first one of two non-zero combination coefficient indication bitmaps to a group 1 and a group 2 in a second part of the CSI report for sending, and map the second one of two non-zero combination coefficient indication bitmaps to the group 1 and the group 2 in the second part of the CSI report for sending. For example, the first one of two non-zero combination coefficient indication bitmaps (with a length of L*Q, L*M, M*Q, v*L*Q, v*L*M, or v*M*Q) is mapped to Group1 and Group2 in Part2 of the CSI report, and the second one of two non-zero combination coefficient indication bitmaps is mapped to Group1 and Group2 in Part2 of the CSI report.

In the foregoing optional implementation, for a mapping manner of the first non-zero combination coefficient in the two non-zero combination coefficient indication bitmaps (bitmap), the following two implementations can be used:

Manner 1: The first stage indicates to map a two-dimensional bitmap (namely, the first one of two non-zero combination coefficient indication bitmaps) of a basis vector pair selected by the terminal to a group (Group1) in part2 of the CSI in a priority sequence. In this manner, the second stage indicates to map a two-dimensional bitmap (namely, the second one of two non-zero combination coefficient indication bitmaps) of positions of non-zero combination coefficients selected by the terminal to Group1 and Group2 in part2 of the CSI in a priority sequence. Optionally, a sequence of a dimension associated with the basis vector pair in the second-stage two-dimensional bitmap is the same as a sequence of a basis vector pair indicated or determined by the first-stage bitmap.

Manner 2: The first stage indicates to map a bitmap (namely, the first one of two non-zero combination coefficient indication bitmaps) of a basis vector pair selected by the terminal to Group1 and Group2 in part2 of the CSI in a priority sequence. In this manner, the second stage indicates to map a bitmap (namely, the second one of two non-zero combination coefficient indication bitmaps) of positions of non-zero combination coefficients selected by the terminal to Group1 and Group2 in part2 of the CSI in a priority sequence. Optionally, a second-stage bitmap that is indicated by a part mapped from a first-stage bitmap to Group1 in part2 of the CSI and that is associated with the basis vector pair selected by the terminal is partially mapped to Group1 in part2 of the CSI, and a second-stage bitmap that is indicated by a part mapped from a first-stage bitmap to Group2 in part2 of the CSI and that is associated with the basis vector pair selected by the terminal is partially mapped to Group2 in part2 of the CSI.

The following separately describes the two manners.

Manner 1:

When the first one of two non-zero combination coefficient indication bitmaps is mapped to the group 1 in the second part of the CSI report, a mapping order (namely, mapping priorities) of bits in the first one of two non-zero combination coefficient indication bitmaps can be first determined, and then the bits in the first one of two non-zero combination coefficient indication bitmaps are mapped to Group 1 in part 2 of the CSI report based on the mapping order. Therefore, in an optional implementation, mapping the first one of two non-zero combination coefficient indication bitmaps (whose length can be L*Q, L*M, M*Q, v*L*Q, v*L*M, or v*M*Q) to the group 1 in the second part of the CSI report can include the following steps:

Step 1: Determine a first value associated with each bit in the first one of two non-zero combination coefficient indication bitmaps.

Step 2: Determine a mapping order of each bit in the first one of two non-zero combination coefficient indication bitmaps based on the first value associated with each bit. For example, sorting can be performed in descending order of first values, and a mapping priority of a bit that is associated with a non-zero combination coefficient with a smaller or larger first value is higher.

Step 3: Map each bit in the first one of two non-zero combination coefficient indication bitmaps to the group 1 in the second part of the CSI report based on the mapping order.

In the foregoing optional implementation, when two non-zero combination coefficient indication bitmaps are fed back, a mapping order of bits in a non-zero combination coefficient indication bitmap corresponding to each combination coefficient can be determined based on a first value associated with each combination coefficient, so that bits in the first one of two non-zero combination coefficient indication bitmaps can be mapped to Group1 in part2 part of the CSI report based on the mapping order.

In an optional implementation, a first value associated with any bit in the first one of two non-zero combination coefficient indication bitmaps is determined based on at least one of the following:

(1) a spatial-domain basis vector sequence number associated with a combination coefficient corresponding to the bit;

(2) a spatial-domain basis vector index associated with the combination coefficient corresponding to the bit;

(3) a frequency-domain basis vector sequence number associated with the combination coefficient corresponding to the bit;

(4) a frequency-domain basis vector index associated with the combination coefficient corresponding to the bit;

(5) a Doppler-domain basis vector sequence number associated with the combination coefficient corresponding to the bit;

(6) a Doppler-domain basis vector index associated with the combination coefficient corresponding to the bit;

(7) a layer sequence number associated with the combination coefficient corresponding to the bit;

(8) a layer index associated with the combination coefficient corresponding to the bit;

(9) a spatial-domain basis vector index associated with a strongest coefficient;

(10) a spatial-domain basis vector sequence number associated with the strongest coefficient;

(11) a frequency-domain basis vector sequence number associated with the strongest coefficient;

(12) a frequency-domain basis vector index associated with the strongest coefficient;

(13) a Doppler-domain basis vector sequence number associated with the strongest coefficient; and

(14) a Doppler-domain basis vector index associated with the strongest coefficient.

In the foregoing optional implementation, a basis vector sequence number refers to a sequence number of a basis vector in all or complete basis vector sets. In other words, the sequence number is one of parameters for generating the basis vector. A basis vector index refers to an index of a basis vector located in a part of basis vector sets selected by the terminal. For example, if the terminal selects three basis vectors whose basis vector sequence numbers are 0/2/5, the basis vector 0 corresponds to a basis vector index 0, the basis vector 2 corresponds to an index 1, and the basis vector 5 corresponds to an index 2.

In an optional implementation, for any bit in the first one of two non-zero combination coefficient indication bitmaps, a first value associated with the bit can be obtained in any one of the following manners:

(1) Determine the first value associated with the bit based on the transmission rank, the quantity of spatial-domain basis vectors selected by the terminal or configured by the network-side device, a function value of a frequency-domain basis vector index of a combination coefficient corresponding to the bit, a function value of a spatial-domain basis vector index of the combination coefficient corresponding to the bit, and a transport layer at which the combination coefficient corresponding to the bit is located.

For example, the first value Pri($l, i, f$) associated with the bit can be calculated based on the following formula:

$$\mathrm{Pri}(l, i, f) = v * \mathrm{L} * \pi(f) + v * a(i) + l$$

Herein, v is the transmission rank, L is the quantity of spatial-domain basis vectors selected by the terminal or configured by the network-side device, $f = 0, 1, \ldots, M - 1$ represents the frequency-domain basis vector index of the combination coefficient corresponding to the bit, M represents a quantity of frequency-domain basis vectors selected by the terminal or configured by the network-side device in the rank v, $\pi(f)$ represents a function value related to the frequency-domain basis vector index $f$, $a(i)$ represents a function value related to the spatial-domain basis vector index, $i = 0, 1, \ldots, L - 1$ represents the spatial-domain basis vector index of the combination coefficient corresponding to the bit, and $l = 0, 1, \ldots, v - 1$ represents a sequence number or an index of the transport layer (layer) at which the combination coefficient corresponding to the bit is located.

M is a quantity of frequency-domain basis vectors configured by the network-side device or selected by the terminal, and the quantity indicates that the terminal needs to select M spatial-domain basis vectors from candidate sets.

(2) Determine the first value associated with the bit based on the transmission rank, the quantity of spatial-domain basis vectors selected by the terminal or configured by the network-side device, a function value of a Doppler-domain basis vector index of the combination coefficient corresponding to the bit, the function value of spatial-domain basis vector index of the combination coefficient corresponding to the bit, and the transport layer at which the combination coefficient corresponding to the bit is located.

For example, the first value Pri($l, i, q$) associated with the bit can be calculated based on the following formula:

$$\mathrm{Pri}(l, i, q) = v * \mathrm{L} * \mathrm{b}(q) + v * a(i) + l$$

For meanings of $v, L, i, a(i)$, and $l$, refer to the foregoing descriptions. $q = 0, 1, \ldots, Q - 1$ represents the Doppler-domain basis vector index of the combination coefficient corresponding to the bit, $Q$ represents the quantity of frequency-domain basis vectors selected by the terminal or configured by the network-side device in the rank v, and $\mathrm{b}(q)$ represents a function value related to the Doppler-domain basis vector index. $Q$ may not be related to the rank v. For example, the terminal can select a same $Q$ value for all transmission ranks, or the network-side device configures a same $Q$ value for all transmission ranks.

In this embodiment, Q can be a quantity of Doppler-domain basis vectors configured by the network-side device or selected by the terminal, and the quantity of Doppler-domain basis vectors indicates that the terminal needs to select Q Doppler-domain basis vectors from candidate sets.

(3) Determine the first value associated with the bit based on the transmission rank, the quantity of Doppler-domain basis vectors selected by the terminal or configured by the network-side device in the transmission rank, the function value of the spatial-domain basis vector index of the combination coefficient corresponding to the bit, the function value of the Doppler-domain basis vector index of the combination coefficient corresponding to the bit, and the transport layer at which the combination coefficient corresponding to the bit is located.

For example, the first value Pri(*l, i, q*): associated with the bit can be calculated based on the following formula:

$$\text{Pri}(l, i, q) = v * \text{Q} * a(i) + v * \text{b}(q) + l$$

For a meaning of each parameter, refer to the foregoing description.

(4) Determine the first value associated with the bit based on the transmission rank, a quantity of time domain units configured by the network-side device, the function value of the spatial-domain basis vector index of the combination coefficient corresponding to the bit, the function value of the Doppler-domain basis vector index of the combination coefficient corresponding to the bit, and the transport layer at which the combination coefficient corresponding to the bit is located.

For example, the first value Pri(*l, i, q*): associated with the bit can be calculated based on the following formula:

$$\text{Pri}(l, i, q) = v * \text{N}_4 * a(i) + v * \text{b}(q) + l$$

N4 is the quantity of time domain units configured by the network-side device, and the quantity of time domain units can determine a length of a Doppler-domain basis vector and a quantity of Doppler-domain basis vectors in a Doppler-domain basis vector candidate set. For meanings of other parameters, refer to the foregoing related descriptions.

(5) Determine the first value associated with the bit based on the transmission rank, a quantity of frequency domain units configured by the network-side device, the function value of the Doppler-domain basis vector index of the combination coefficient corresponding to the bit, the function value of the frequency-domain basis vector index of the combination coefficient corresponding to the bit, and the transport layer at which the combination coefficient corresponding to the bit is located.

For example, the first value Pri(*l, f, q*) associated with the bit can be calculated based on the following formula:

$$\text{Pri}(l, f, q) = v * \text{N}_3 * \text{b}(q) + v * \pi(f) + l$$

N3 is the quantity of frequency domain units configured by the network-side device, and the quantity of frequency domain units determines a length of a frequency-domain basis vector and a quantity of frequency-domain basis vectors in a frequency-domain basis vector candidate set. For meanings of other parameters, refer to the foregoing related descriptions

(6) Determine the first value associated with the bit based on the transmission rank, a quantity of frequency-domain vectors selected by the terminal or configured by the network-side device in the transmission rank, the function value of the Doppler-domain basis vector index of the combination coefficient corresponding to the bit, the function value of the frequency-domain basis vector index of the combination coefficient corresponding to the bit, and the transport layer at which the combination coefficient corresponding to the bit is located.

For example, the first value Pri(*l, f, q*) associated with the bit can be calculated based on the following formula:

$$\text{Pri}(l, f, q) = v * \text{M} * \text{b}(q) + v * \pi(f) + l$$

For a meaning of each parameter, refer to the foregoing related description. Details are not described herein again.

(7) Determine the first value associated with the bit based on the transmission rank, the quantity of time domain units configured by the network-side device, the function value of the frequency-domain basis vector index of the combination coefficient corresponding to the bit, the function value of the Doppler-domain basis vector index of the combination coefficient corresponding to the bit, and the transport layer at which the combination coefficient corresponding to the bit is located.

For example, the first value Pri(*l, f, q*) associated with the bit can be calculated based on the following formula:

$$\text{Pri}(l, f, q) = v * \text{N}_4 * \pi(f) + v * \text{b}(q) + l$$

For a meaning of each parameter, refer to the foregoing related description. Details are not described herein again.

(8) Determine the first value associated with the bit based on the transmission rank, the quantity of Doppler-domain basis vectors selected by the terminal or configured by the network-side device in the transmission rank, the function value of the frequency-domain basis vector index of the combination coefficient corresponding to the bit, the function value of the Doppler-domain basis vector index of the combination coefficient corresponding to the bit, and the transport layer at which the combination coefficient corresponding to the bit is located.

For example, the first value Pri(*l, f, q*) associated with the bit can be calculated based on the following formula:

$$\mathrm{Pri}(l, f, q) = v * Q * \pi(f) + v * \mathrm{b}(q) + l$$

For a meaning of each parameter, refer to the foregoing related description. Details are not described herein again.

(9) Determine the first value associated with the bit based on the function value of the frequency-domain basis vector index of the combination coefficient corresponding to the bit, the function value of the spatial-domain basis vector index of the combination coefficient corresponding to the bit, and the transport layer at which the combination coefficient corresponding to the bit is located.

For example, the first value Pri(*l, i, f*) associated with the bit can be calculated based on the following formula:

$$\mathrm{Pri}(l, i, f) = \pi(f) + a(i) + l$$

For a meaning of each parameter, refer to the foregoing related description. Details are not described herein again.

(10) Determine the first value associated with the bit based on the function value of the Doppler-domain basis vector index of the combination coefficient corresponding to the bit, the function value of the spatial-domain basis vector index of the combination coefficient corresponding to the bit, and the transport layer at which the combination coefficient corresponding to the bit is located.

For example, the first value Pri(*l, i, q*) associated with the bit can be calculated based on the following formula:

$$\mathrm{Pri}(l, i, q) = \mathrm{b}(q) + a(i) + l$$

For a meaning of each parameter, refer to the foregoing related description. Details are not described herein again.

(11) Determine the first value associated with the bit based on the function value of the frequency-domain basis vector index of the combination coefficient corresponding to the bit, the function value of the Doppler-domain basis vector index of the combination coefficient corresponding to the bit, and the transport layer at which the combination coefficient corresponding to the bit is located.

For example, the first value Pri(*l, i, q*) associated with the bit can be calculated based on the following formula:

$$\mathrm{Pri}(l, f, q) = \pi(f) + \mathrm{b}(q) + l$$

For a meaning of each parameter, refer to the foregoing related description. Details are not described herein again.

(12) Determine the first value associated with the bit based on the transmission rank, the function value of the frequency-domain basis vector index of the combination coefficient corresponding to the bit, the function value of the spatial-domain basis vector index of the combination coefficient corresponding to the bit, and the transport layer at which the combination coefficient corresponding to the bit is located.

For example, the first value Pri(*l, i, f*) associated with the bit can be calculated based on the following formula:

$$\mathrm{Pri}(l, i, f) = v * (\pi(f) + a(i)) + l$$

For a meaning of each parameter, refer to the foregoing related description. Details are not described herein again.

(13) Determine the first value associated with the bit based on the transmission rank, the function value of the Doppler-domain basis vector index of the combination coefficient corresponding to the bit, the function value of the spatial-domain basis vector index of the combination coefficient corresponding to the bit, and the transport layer at which the combination coefficient corresponding to the bit is located.

For example, the first value Pri(*l, i, q*) associated with the bit can be calculated based on the following formula:

$$\mathrm{Pri}(l, i, q) = v * (\mathrm{b}(q) + a(i)) + l$$

For a meaning of each parameter, refer to the foregoing related description. Details are not described herein again.

(14) Determine the first value associated with the bit based on the transmission rank, the function value of the frequency-domain basis vector index of the combination coefficient corresponding to the bit, the function value of the Doppler-domain basis vector index of the combination coefficient corresponding to the bit, and the transport layer at which the combination coefficient corresponding to the bit is located.

For example, the first value Pri(*l, f, q*) associated with the bit can be calculated based on the following formula:

$$\text{Pri}(l, f, q) = v * (\pi(f) + \text{b}(q)) + l$$

For a meaning of each parameter, refer to the foregoing related description. Details are not described herein again.

(15) Determine the first value associated with the bit based on the quantity of spatial-domain basis vectors selected by the terminal or configured by the network-side device, the function value of the frequency-domain basis vector index of the combination coefficient corresponding to the bit, and the function value of the spatial-domain basis vector index of the combination coefficient corresponding to the bit.

For example, the first value Pri(*l, i, f*) associated with the bit can be calculated based on the following formula:

$$\text{Pri}(l, i, f) = \text{L} * \pi(f) + a(i)$$

For a meaning of each parameter, refer to the foregoing related description. Details are not described herein again.

(16) Determine the first value associated with the bit based on the quantity of spatial-domain basis vectors selected by the terminal or configured by the network-side device, the function value of the Doppler-domain basis vector index of the combination coefficient corresponding to the bit, and the function value of the spatial-domain basis vector index of the combination coefficient corresponding to the bit.

For example, the first value Pri(*l, i, q*) associated with the bit can be calculated based on the following formula:

$$\text{Pri}(l, i, q) = \text{L} * \text{b}(q) + a(i)$$

For a meaning of each parameter, refer to the foregoing related description. Details are not described herein again.

(17) Determine the first value associated with the bit based on the quantity of frequency-domain basis vectors selected by the terminal or configured by the network-side device in the transmission rank, the function value of the spatial-domain basis vector index of the combination coefficient corresponding to the bit, and the function value of the Doppler-domain basis vector index of the combination coefficient corresponding to the bit.

For example, the first value Pri(*l, i, q*) associated with the bit can be calculated based on the following formula:

$$\text{Pri}(l, i, q) = \text{Q} * a(i) + \text{b}(q)$$

For a meaning of each parameter, refer to the foregoing related description. Details are not described herein again.

(18) Determine the first value associated with the bit based on the quantity of time domain units configured by the network-side device, the function value of the spatial-domain basis vector index of the combination coefficient corresponding to the bit, and the function value of the Doppler-domain basis vector index of the combination coefficient corresponding to the bit.

For example, the first value Pri(*l, i, q*) associated with the bit can be calculated based on the following formula:

$$\text{Pri}(l, i, q) = \text{N}_4 * a(i) + \text{b}(q)$$

For a meaning of each parameter, refer to the foregoing related description. Details are not described herein again.

(19) Determine the first value associated with the bit based on the quantity of frequency domain units configured by the network-side device, the function value of the Doppler-domain basis vector index of the combination coefficient corresponding to the bit, and the function value of the spatial-domain basis vector index of the combination coefficient corresponding to the bit.

For example, the first value Pri(*l*, *f*, *q*) associated with the bit can be calculated based on the following formula:

$$\text{Pri}(l, f, q) = \text{N}_3 * \text{b}(q) + \pi(f)$$

For a meaning of each parameter, refer to the foregoing related description. Details are not described herein again.

(20) Determine the first value associated with the bit based on the quantity of frequency-domain basis vectors selected by the terminal or configured by the network-side device in the transmission rank, the Doppler-domain basis vector index of the combination coefficient corresponding to the bit, and the spatial-domain basis vector index of the combination coefficient corresponding to the bit.

For example, the first value Pri(*l*, *f*, *q*) associated with the bit can be calculated based on the following formula:

$$\text{Pri}(l, f, q) = \text{M} * \text{b}(q) + \pi(f)$$

For a meaning of each parameter, refer to the foregoing related description. Details are not described herein again.

(21) Determine the first value associated with the bit based on the quantity of time domain units configured by the network-side device, the function value of the frequency-domain basis vector index of the combination coefficient corresponding to the bit, and the function value of the Doppler-domain basis vector index of the combination coefficient corresponding to the bit.

For example, the first value Pri(*l*, *f*, *q*) associated with the bit can be calculated based on the following formula:

$$\text{Pri}(l, f, q) = \text{N}_4 * \pi(f) + \text{b}(q)$$

For a meaning of each parameter, refer to the foregoing related description. Details are not described herein again.

(22) Determine the first value associated with the bit based on the quantity of Doppler-domain basis vectors selected by the terminal or configured by the network-side device in the transmission rank, the function value of the frequency-domain basis vector index of the combination coefficient corresponding to the bit, and the function value of the Doppler-domain basis vector index of the combination coefficient corresponding to the bit.

For example, the first value Pri(*l*, *f*, *q*) associated with the bit can be calculated based on the following formula:

$$\text{Pri}(l, f, q) = Q * \pi(f) + \text{b}(q)$$

For a meaning of each parameter, refer to the foregoing related description. Details are not described herein again.

(23) Determine the first value associated with the bit based on the function value of the frequency-domain basis vector index of the combination coefficient corresponding to the bit and the function value of the spatial-domain basis vector index of the combination coefficient corresponding to the bit.

For example, the first value Pri(*l*, *i*, *f*) associated with the bit can be calculated based on the following formula:

$$\text{Pri}(l, i, f) = \pi(f) + a(i)$$

For a meaning of each parameter, refer to the foregoing related description. Details are not described herein again.

(24) Determine the first value associated with the bit based on the function value of the Doppler-domain basis vector index of the combination coefficient corresponding to the bit and the function value of the spatial-domain basis vector index of the combination coefficient corresponding to the bit.

For example, the first value Pri(*l*, *i*, *q*) associated with the bit can be calculated based on the following formula:

$$\text{Pri}(l, i, q) = \text{b}(q) + a(i)$$

For a meaning of each parameter, refer to the foregoing related description. Details are not described herein again.

(25) Determine the first value associated with the bit based on the function value of the frequency-domain basis vector index of the combination coefficient corresponding to the bit and the function value of the Doppler-domain basis vector index of the combination coefficient corresponding to the bit.

For example, the first value Pri($l$, $f$, $q$) associated with the bit can be calculated based on the following formula:

$$\text{Pri}(l, f, q) = \pi(f) + \text{b}(q)$$

For a meaning of each parameter, refer to the foregoing related description. Details are not described herein again.

According to the foregoing optional implementations, a first value associated with each bit can be determined based on a parameter related to each bit, and then a mapping order of each bit can be determined.

In the foregoing optional implementations, a case that first values associated with a plurality of bits in the first one of two non-zero combination coefficient indication bitmaps are the same may exist. For this case, in an optional implementation, the determining a mapping order of each bit in the first one of two non-zero combination coefficient indication bitmaps based on the first value associated with each bit includes:

for a plurality of bits whose first values are the same, determining a mapping order of each of the plurality of bits based on at least one of the following:

> a bit whose corresponding combination coefficient is associated with a small spatial-domain basis vector sequence number or spatial-domain basis vector index is preferentially mapped, in other words, a mapping priority of the bit whose corresponding combination coefficient is associated with a small spatial-domain basis vector sequence number or spatial-domain basis vector index is higher;
> a bit whose corresponding combination coefficient is associated with a small frequency-domain basis vector sequence number or frequency-domain basis vector index is preferentially mapped, in other words, a mapping priority of the bit whose corresponding combination coefficient is associated with a small frequency-domain basis vector sequence number or frequency-domain basis vector index is higher;
> a bit whose corresponding combination coefficient is associated with a small Doppler-domain basis vector sequence number or Doppler-domain basis vector index is preferentially mapped, in other words, a mapping priority of the bit whose corresponding combination coefficient is associated with a small Doppler-domain basis vector sequence number or Doppler-domain basis vector index is higher; and
> a bit whose corresponding combination coefficient is associated with a small layer sequence number or layer index is preferentially mapped, in other words, a mapping priority of the bit whose corresponding combination coefficient is associated with a small layer sequence number or layer index is higher.

In the foregoing optional implementation, a mapping order of a plurality of bits can be determined in a case that first values associated with the plurality of bits are the same.

In the foregoing one or more optional implementations, $\pi(f)$ represents a function value related to the frequency-domain basis vector index $f$, $a(i)$ represents a function value related to the spatial-domain basis vector index, and b(q) represents a function value related to the Doppler-domain basis vector index. In an optional implementation, $\pi(f)$, $a(i)$ and b($q$) may be calculated in one of the following manners:

(1)

$$\pi(f) = \text{f};$$

(2)

$$a(i) = i;$$

(3)

$$\text{b}(q) = q;$$

(4)

$$\pi(f) = \text{f} - \text{f}_{\text{ref}};$$

(5)

$$a(i) = i - i_{\text{ref}};$$

(6)

$$b(q) = q - q_{\text{ref}};$$

(7)

$$\pi(f) = min(|f - f_{\text{ref}}|, M_v - |f - f_{\text{ref}}|)$$

(8)

$$a(i) = min(|i - i_{\text{ref}}|, L_i - |i - i_{\text{ref}}|)$$

(9)

$$b(q) = min(|q - q_{\text{ref}}|, Q - |q - q_{\text{ref}}|)$$

(10)

$$\pi(f) = min\left(2 * f, 2 * \left(M - f + f_{ref}\right) - 1\right);$$

(11)

$$a(i) = min(2 * (i - i_{\text{ref}}), 2 * (L_i - i + i_{\text{ref}}) - 1);$$

(12)

$$b(q) = min(2 * (q - q_{\text{ref}}), 2 * (Q - q + q_{\text{ref}}) - 1);$$

(13)

$$\pi(f) = n_{3,l}^{(f)};$$

(14)

$$b(q) = n_{4,l}^{(q)};$$

(15)

$$\pi(f) = n_{3,l}^{(f)} - n_{3,l,ref}^{(f)};$$

(16)

$$b(q) = n_{4,l}^{(q)} - n_{4,l,ref}^{(q)};$$

(17)

$$\pi(f) = min\left(\left|n_{3,l}^{(f)} - n_{3,l,ref}^{(f)}\right|, N_3 - \left|n_{3,l}^{(f)} - n_{3,l,ref}^{(f)}\right|\right);$$

(18)

$$b(q) = min(|n_{4,l}^{(q)} - n_{4,l,ref}^{(q)}|, N_4 - |n_{4,l}^{(q)} - n_{4,l,ref}^{(q)}|);$$

(19)

$$\pi(f) = min\left(2 * n_{3,l}^{(f)}, 2 * \left(N_3 - n_{3,l}^{(f)} + n_{3,l,ref}^{(f)}\right) - 1\right);$$

and

(20)

$$b(q) = min\left(2 * (n_{4,l}^{(q)} - n_{4,l,ref}^{(q)}), 2 * \left(N_4 - n_{4,l}^{(q)} + n_{4,l,ref}^{(q)}\right) - 1\right).$$

Herein, min ($\cdot$) represents taking a minimum value, and $|\cdot|$ represents taking an absolute value. $i_{ref}$ represents a reference spatial-domain basis vector index associated with a spatial-domain basis vector index i, and reference spatial-domain basis vector indexes associated with different i may be the same or different. Generally, each polarization direction is associated with one reference spatial-domain basis vector index. All spatial-domain basis vector indexes i associated with the polarization direction are associated with a same reference spatial-domain basis vector index. A spatial-domain basis vector index associated with the strongest coefficient is a reference spatial-domain basis vector index. The reference spatial-domain basis vector index can also be a basis vector index indicated by the terminal, or can be a basis vector index obtained based on a default rule.

$q_{ref}$ represents a reference Doppler-domain basis vector index associated with a Doppler-domain basis vector index q. Generally, a Doppler-domain basis vector index associated with the strongest coefficient is a reference Doppler-domain basis vector index. The reference Doppler-domain basis vector index can also be a basis vector index indicated by the terminal, or can be a basis vector index obtained based on a default rule (for example, a basis vector of q=0 is a reference). $f_{ref}$ represents a reference frequency-domain basis vector index associated with a frequency-domain basis vector index f. Generally, a frequency-domain basis vector index associated with the strongest coefficient is a reference frequency-domain basis vector index. The reference frequency-domain basis vector index can also be a basis vector index indicated by the terminal, or can be a basis vector index obtained based on a default rule (for example, a basis vector of f=0 is a reference). $L_i$ represents a quantity of spatial-domain basis vectors associated with the spatial-domain basis vector index i. Generally, $L_i$ represents a quantity of spatial-domain basis vectors associated with a polarization direction associated with the spatial-domain basis vector index i. $n_{4,l}^{(q)}$ represents a Doppler-domain basis vector sequence number associated with the Doppler-domain basis vector index q for layer *l*. $n_{4,l,ref}^{(q)}$ represents a reference Doppler-domain basis vector sequence number associated with the Doppler-domain basis vector index q for layer *l*. Generally, a Doppler-domain basis vector sequence number associated with the strongest coefficient is a reference Doppler-domain basis vector sequence number. The reference Doppler-domain basis vector sequence number can also be a basis vector sequence number indicated by the terminal, or can be a basis vector sequence number obtained based on a default rule (for example, a basis vector sequence number of q=0 is a reference or a basis vector sequence number whose sequence number is 0 is a reference). $n_{3,l}^{(f)}$ represents a frequency-domain basis vector sequence number associated with the frequency-domain basis vector index f for layer *l*. $n_{3,l,ref}^{(f)}$ represents a reference frequency-domain basis vector sequence number associated with the frequency-domain basis vector index f for layer *l*. Generally, a frequency-domain basis vector sequence number associated with the strongest coefficient is a reference frequency-domain basis vector sequence number. The reference Doppler-domain basis vector sequence number can also be a basis vector sequence number indicated by the terminal, or can be a basis vector sequence number obtained based on a default rule (for example, a basis vector sequence number of q=0 is a reference or a basis vector sequence number whose sequence number is 0 is a reference).

Manner 2:

When the first one of two non-zero combination coefficient indication bitmaps is mapped to the group 1 and the group 2 in the second part of the CSI report, the first one of two non-zero combination coefficient indication bitmaps can be first divided into two sub-bitmaps, and then one sub-bitmap is mapped to the group 1 and the other sub-bitmap is mapped to the group 2. Therefore, in an optional implementation, the mapping the first one of two non-zero combination coefficient indication bitmaps to the group 1 and the group 2 in the second part of the CSI report can include the following steps:

Step 1: Determine a first value associated with each bit in the first one of two non-zero combination coefficient indication bitmaps.
Step 2: Determine a mapping order of each bit in the first one of two non-zero combination coefficient indication bitmaps based on the first value associated with each bit.
Step 3: Divide the first one of two non-zero combination coefficient indication bitmaps into a first sub-bitmap and a second sub-bitmap based on the mapping order, map the first sub-bitmap to the group 1 in the second part of the CSI report for sending, and map the second sub-bitmap to the group 2 in the second part of the CSI report for sending.

The first value is the same as the first value in Manner 1. For details, refer to the description about the first value in Manner 1. Details are not described herein again.
In an optional implementation, a quantity of bits included in the first sub-bitmap is one of the following:

$$L*Q–X1;$$

$$L*M–X1;$$

$$M*Q–X1;$$

$$V*L*Q–X1;$$

$$V*L*M–X1;$$

and

$$V*M*Q–X1.$$

L represents the quantity of spatial-domain basis vectors selected by the terminal or configured by the network-side device, M represents the quantity of frequency-domain basis vectors selected by the terminal or configured by the network-side device, Q represents the quantity of Doppler-domain basis vectors selected by the terminal or configured by the network-side device, v is the transmission rank, X1 is an integer greater than 0, and X1 is obtained based on one of the following: a default rule, an indication of the network-side device, and terminal determining. Optionally, in a case that X1 is determined by the terminal, the terminal can feed back a value of X1 in part1 of the CSI report.
In the foregoing optional implementation, a mapping order of bits in the first one of two non-zero combination coefficient indication bitmaps is determined based on the first value, the first one of two non-zero combination coefficient indication bitmaps is divided into two parts, namely, the first sub-bitmap and the second sub-bitmap, based on the sequence, the first sub-bitmap is mapped to Group1, and the second sub-bitmap is mapped to Group2. Group1 includes L*Q-X1 or L*M-X1 or M*Q-X1 or v*L*Q-X1 or v*L*M-X1 or v*M*Q-X1 high-priority bits, that is, first L*Q-X1 or L*M-X1 or L*M-X1 or M*Q-X1 or v*L*Q-X1 or v*L*M-X1 or v*M*Q-X1 bits with high mapping priorities. Group2 includes X low-priority bits. For example, Group2 includes $\lfloor S/2 \rfloor$ low-priority bits. S is a quantity of basis vector pairs selected by the terminal.
In Manner 1 and Manner 2, for the second one of two non-zero combination coefficient indication bitmaps, in an optional implementation, the mapping the second one of two non-zero combination coefficient indication bitmaps to the group 1 and the group 2 in the second part of the CSI report for sending can include the following steps:

Step 1: Determine a second value associated with each bit in the second one of two non-zero combination coefficient indication bitmaps.

Step 2: Determine a mapping order of each bit in the second one of two non-zero combination coefficient indication bitmaps based on the second value associated with each bit.

Step 3: Divide the second one of two non-zero combination coefficient indication bitmaps into a third sub-bitmap and a fourth sub-position based on the mapping order. For example, a part of bits with high mapping order priorities in the second one of two non-zero combination coefficient indication bitmaps are classified into the third sub-bitmap, and the remaining bits are classified into the fourth sub-bitmap.

Step 4: Map the third sub-bitmap to the group 1 in the second part of the CSI report for sending, and map the fourth sub-bitmap to the group 2 in the second part of the CSI report for sending.

In this optional implementation, bits with high mapping priorities in the second one of two non-zero combination coefficient indication bitmaps are mapped to the group 1 in the second part of the CSI report for sending, and bits with low mapping priorities are mapped to the group 2 in the second part of the CSI report for sending, so that the bits with high mapping priorities can be sent first.

Optionally, a quantity of bits included in the third sub-bitmap is one of the following:

$$S*Q-X2;$$

$$S*M-X2;$$

$$S*L-X2;$$

$$V*S*Q-X2;$$

$$V*S*M-X2;$$

and

$$V*S*L-X2.$$

S is a quantity of basis vector pairs indicated by the first one of two non-zero combination coefficient indication bitmaps, L is the quantity of spatial-domain basis vectors selected by the terminal or configured by the network-side device, Q is the quantity of Doppler-domain basis vectors selected by the terminal or configured by the network-side device, M is the quantity of frequency-domain basis vectors selected by the terminal or configured by the network-side device, v is the transmission rank, X2 is an integer greater than 0, and X2 is obtained based on a default rule or indicated by the network-side device or determined by the terminal.

In the foregoing optional implementation, the second one of two non-zero combination coefficient indication bitmaps is divided into two parts based on the mapping order, and is separately mapped to Group1 and Group2. Group1 includes S*Q-X2 or S*M-X2, S*L-X2, v*S*Q-X2, v*S*M-X2, or v*S*L-X2 high-priority bits, and Group2 includes X2 low-priority bits. S represents the quantity of basis vector pairs indicated by the first one of two non-zero combination coefficient indication bitmaps (a quantity of bits whose bitmap is 1). For a value of S, refer to the foregoing related description.

In an optional implementation, the terminal can determine X2 based on one of the following (1) to (3).

(1) Quantity of basis vector pairs indicated by the first one of two non-zero combination coefficient indication bitmaps included in the group 2 in the second part of the CSI report.

For example, if Group2 in part2 of the CSI report includes $\lfloor S/2 \rfloor$ pairs of basis vectors indicated by the first one of two non-zero combination coefficient indication bitmaps, Group2 includes X2 low-priority bits, that is, $\lfloor S/2 \rfloor*Q$ or $\lfloor S/2 \rfloor*M$ or $\lfloor S/2 \rfloor*L$ low-priority bits. $\lfloor . \rfloor$ represents flooring.

For another example, if Group2 in part2 of the CSI report includes $\lfloor S/2 \rfloor$ pairs of basis vectors indicated by the first one of two non-zero combination coefficient indication bitmaps, Group2 includes X2 low-priority bits, that is, $\lfloor S/2 \rfloor$ or

$\lfloor S/2 \rfloor$ or $\lceil S/2 \rceil$ low-priority bits. $\lfloor . \rfloor$ represents flooring.

(2) Quantity of basis vector pairs included in the first part of the CSI report.

For example, Group2 includes X2 low-priority bits, that is $\lfloor S/2 \rfloor *Q$ or $\lfloor S/2 \rfloor *M$ or $\lfloor S/2 \rfloor *L$ low-priority bits. S is a quantity of basis vector pairs indicated by part1.

For another example, Group2 includes X2 low-priority bits, that is, $\lfloor S/2 \rfloor$ or $\lfloor S/2 \rfloor$ or $\lfloor S/2 \rfloor$ low-priority bits. S is a quantity of basis vector pairs indicated by part1.

(3) Quantity of non-zero combination coefficients included in the first part of the CSI report.

For example, Group2 includes $\lfloor K_{NZ}/2 \rfloor$ low-priority bits. $K_{NZ}$ is the quantity of non-zero combination coefficients included in the first part of the CSI report.

In an optional implementation, a second value associated with any bit in the second one of two non-zero combination coefficient indication bitmaps is determined based on at least one of the following:

(1) a frequency domain-Doppler domain basis vector pair sequence number associated with a combination coefficient corresponding to the bit;
(2) a frequency domain-Doppler domain basis vector pair index associated with the combination coefficient corresponding to the bit;
(3) a spatial domain-Doppler domain basis vector pair sequence number associated with the combination coefficient corresponding to the bit;
(4) a spatial domain-Doppler domain basis vector pair index associated with the combination coefficient corresponding to the bit;
(5) a spatial domain-frequency domain basis vector pair sequence number associated with the combination coefficient corresponding to the bit;
(6) a spatial domain-frequency domain basis vector pair index associated with the combination coefficient corresponding to the bit;
(7) a spatial-domain basis vector sequence number associated with the combination coefficient corresponding to the bit;
(8) a spatial-domain basis vector index associated with the combination coefficient corresponding to the bit;
(9) a frequency-domain basis vector sequence number associated with the combination coefficient corresponding to the bit;
(10) a frequency-domain basis vector index associated with the combination coefficient corresponding to the bit;
(11) a Doppler-domain basis vector sequence number associated with the combination coefficient corresponding to the bit;
(12) a Doppler-domain basis vector index associated with the combination coefficient corresponding to the bit;
(13) a spatial-domain basis vector index associated with a strongest coefficient;
(14) a spatial-domain basis vector sequence number associated with the strongest coefficient;
(15) a frequency-domain basis vector sequence number associated with the strongest coefficient;
(16) a frequency-domain basis vector index associated with the strongest coefficient;
(17) a Doppler-domain basis vector sequence number associated with the strongest coefficient;
(18) a Doppler-domain basis vector index associated with the strongest coefficient;
(19) a layer sequence number associated with the combination coefficient corresponding to the bit; and
(20) a layer index associated with the combination coefficient corresponding to the bit.

Based on at least one of the foregoing (1) to (20), the terminal can determine the second value associated with any bit in the second one of two non-zero combination coefficient indication bitmaps, so as to determine a mapping order of bits.

In an optional implementation, for any bit in the second one of two non-zero combination coefficient indication bitmaps, the terminal can obtain, in any one of the following manners (1) to (22), the second value associated with the bit.

(1) Determine the second value associated with the bit based on the quantity of spatial-domain basis vectors selected by the terminal or configured by the network-side device, a function value of a basis vector pair index associated with a combination coefficient corresponding to the bit, and a function value of a spatial-domain basis vector index associated with the combination coefficient corresponding to the bit, where the basis vector pair index includes one of a spatial domain-frequency domain basis vector pair index, a spatial domain-Doppler domain basis vector pair index, and a frequency domain-Doppler domain basis vector pair index, and the basis vector pair index in the following optional implementations is the same as the basis vector pair index.

For example, the second value Pri(*l, i, s*) associated with the bit can be calculated by using the following formula:

$$\text{Pri}(l, i, s) = \text{L} * \text{c}(s) + a(i)$$

Herein, $i = 0,1, \ldots, L - 1$ represents a spatial-domain basis vector index corresponding to the bit, $c(s)$ represents a function value related to the spatial domain-frequency domain basis vector pair index corresponding to the bit, or a function value related to the spatial domain-Doppler domain basis vector pair index, or a function value related to the frequency domain-Doppler domain basis vector pair index, $s = 0,1, \ldots, S - 1$ represents an index of a basis vector pair corresponding to the bit in all basis vector pairs selected by the terminal, $l = 0,1, \ldots, v - 1$ represents a sequence number or an index of a layer (layer) at which the combination coefficient corresponding to the bit is located, L represents the quantity of spatial-domain basis vectors selected by the terminal or configured by the network-side device, and $a(i)$ represents a function value related to the spatial-domain basis vector index of the combination coefficient corresponding to the bit.

(2) Determine the second value associated with the bit based on a quantity of basis vector pairs selected by the terminal or configured by the network-side device, the function value of the basis vector pair index associated with the combination coefficient corresponding to the bit, and the function value of the spatial-domain basis vector index associated with the combination coefficient corresponding to the bit.

For example, the second value Pri($l$, $i$, $s$) associated with the bit can be calculated by using the following formula:

$$\text{Pri}(l, i, s) = \text{S} * a(i) + \text{c}(s)$$

S represents the quantity of basis vector pairs selected by the terminal. For example, a quantity upper limit of S can be determined based on a network configuration, and a specifically selected quantity of terminals can be fed back in part1 of the CSI report. For a specific value, refer to the foregoing related description. For meanings of other parameters, refer to the foregoing descriptions. Details are not described herein again.

(3) Determine the second value associated with the bit based on a quantity of Doppler-domain basis vectors selected by the terminal or configured by the network-side device in a current transmission rank, the function value of the basis vector pair index associated with the combination coefficient corresponding to the bit, and a function value of a Doppler-domain basis vector index associated with the combination coefficient corresponding to the bit.

For example, the second value Pri($l$, $s$, $q$) associated with the bit can be calculated by using the following formula:

$$\text{Pri}(l, s, q) = \text{Q} * \text{c}(s) + \text{b}(q)$$

Q represents the quantity of Doppler-domain basis vectors selected by the terminal or configured by the network-side device in the transmission rank v, and b(q) represents the Doppler-domain basis vector index of the combination coefficient corresponding to the bit. For meanings of other parameters, refer to the foregoing descriptions. Details are not described herein again.

(4) Determine the second value associated with the bit based on a quantity of time domain units configured by the network-side device, the function value of the basis vector pair index associated with the combination coefficient corresponding to the bit, and the function value of the Doppler-domain basis vector index associated with the combination coefficient corresponding to the bit.

For example, the second value Pri($l$, $s$, $q$) associated with the bit can be calculated by using the following formula:

$$\text{Pri}(l, s, q) = \text{N}_4 * \text{c}(s) + \text{b}(q)$$

$N_4$ represents the quantity of time domain units configured by the network-side device. For meanings of other parameters, refer to the foregoing descriptions. Details are not described herein again.

(5) Determine the second value associated with the bit based on a quantity of basis vector pairs selected by the terminal or configured by the network-side device, the function value of the Doppler-domain basis vector index associated with the combination coefficient corresponding to the bit, and the function value of the basis vector pair index associated with the combination coefficient corresponding to the bit.

For example, the second value Pri($l$, $s$, $q$) associated with the bit can be calculated by using the following formula:

$$\text{Pri}(l, s, q) = \text{S} * \text{b}(q) + \text{c}(s)$$

For a meaning of each parameter, refer to the foregoing description. Details are not described herein again.

(6) Determine the second value associated with the bit based on a quantity of frequency domain units configured by the network-side device, the function value of the basis vector pair index associated with the combination coefficient corresponding to the bit, and a function value of a frequency-domain basis vector index associated with the combination coefficient corresponding to the bit.

For example, the second value Pri(*l*, *f*, *s*) associated with the bit can be calculated by using the following formula:

$$\text{Pri}(l, f, s) = N_3 * c(s) + \pi(f)$$

Herein, $\pi(f)$ represents the function value related to the frequency-domain basis vector index *f* associated with the combination coefficient corresponding to the bit, $f = 0, 1, \ldots, M - 1$ represents the frequency-domain basis vector index, and *M* represents the quantity of frequency-domain basis vectors selected by the terminal or configured by the network-side device in the rank v. For meanings of other parameters, refer to the foregoing descriptions. Details are not described herein again.

(7) Determine the second value associated with the bit based on a quantity of frequency-domain basis vectors selected by the terminal or configured by the network-side device in the current transmission rank, the function value of the basis vector pair index associated with the combination coefficient corresponding to the bit, and the function value of the frequency-domain basis vector index associated with the combination coefficient corresponding to the bit.

For example, the second value Pri(*l*, *f*, *s*) associated with the bit can be calculated by using the following formula:

$$\text{Pri}(l, f, s) = M * c(s) + \pi(f)$$

For a meaning of each parameter, refer to the foregoing description. Details are not described herein again.

(8) Determine the second value associated with the bit based on the quantity of basis vector pairs selected by the terminal or configured by the network-side device, the function value of the frequency-domain basis vector index associated with the combination coefficient corresponding to the bit, and the function value of the basis vector pair index associated with the combination coefficient corresponding to the bit.

For example, the second value Pri(*l*, *f*, *s*) associated with the bit can be calculated by using the following formula:

$$\text{Pri}(l, f, s) = S * \pi(f) + c(s)$$

For a meaning of each parameter, refer to the foregoing description. Details are not described herein again.

(9) Determine the second value associated with the bit based on the function value of the basis vector pair index associated with the combination coefficient corresponding to the bit and the function value of the spatial-domain basis vector index associated with the combination coefficient corresponding to the bit.

For example, the second value Pri(*l, i, s*) associated with the bit can be calculated by using the following formula:

$$\text{Pri}(l, i, s) = c(s) + a(i)$$

For a meaning of each parameter, refer to the foregoing description. Details are not described herein again.

(10) Determine the second value associated with the bit based on the function value of the Doppler-domain basis vector index associated with the combination coefficient corresponding to the bit and the function value of the basis vector pair index associated with the combination coefficient corresponding to the bit.

For example, the second value Pri(*l, s, q*) associated with the bit can be calculated by using the following formula:

$$\text{Pri}(l, s, q) = b(q) + c(s)$$

For a meaning of each parameter, refer to the foregoing description. Details are not described herein again.

(11) Determine the second value associated with the bit based on the function value of the basis vector pair index associated with the combination coefficient corresponding to the bit and the function value of the frequency-domain basis vector index associated with the combination coefficient corresponding to the bit.

For example, the second value Pri(*l*, *f*, *s*) associated with the bit can be calculated by using the following formula:

$$\text{Pri}(l, f, s) = \pi(f) + c(s)$$

For a meaning of each parameter, refer to the foregoing description. Details are not described herein again.

(12) Determine the second value associated with the bit based on a transmission rank, the quantity of spatial-domain basis vectors selected by the terminal or configured by the network-side device, the function value of the basis vector pair index associated with the combination coefficient corresponding to the bit, the function value of the spatial-domain basis vector index associated with the combination coefficient corresponding to the bit, and a transport layer at which the combination coefficient corresponding to the bit is located.

For example, the second value Pri(*l, i, s*) associated with the bit can be calculated by using the following formula:

$$\mathrm{Pri}(l, i, s) = v * \mathrm{L} * c(s) + v * a(i) + l$$

For a meaning of each parameter, refer to the foregoing description. Details are not described herein again.

(13) Determine the second value associated with the bit based on the transmission rank, the quantity of basis vector pairs selected by the terminal or configured by the network-side device, the function value of the spatial-domain basis vector index associated with the combination coefficient corresponding to the bit, the function value of the basis vector pair index associated with the combination coefficient corresponding to the bit, and the transport layer at which the combination coefficient corresponding to the bit is located.

For example, the second value Pri(*l, i, s*) associated with the bit can be calculated by using the following formula:

$$\mathrm{Pri}(l, i, s) = v * \mathrm{S} * a(i) + v * c(s) + l$$

For a meaning of each parameter, refer to the foregoing description. Details are not described herein again.

(14) Determine the second value associated with the bit based on the transmission rank, the quantity of Doppler-domain basis vectors selected by the terminal or configured by the network-side device in the transmission rank, the function value of the basis vector pair index associated with the combination coefficient corresponding to the bit, the function value of the Doppler-domain basis vector index associated with the combination coefficient corresponding to the bit, and the transport layer at which the combination coefficient corresponding to the bit is located.

For example, the second value Pri(*l, s, q*) associated with the bit can be calculated by using the following formula:

$$\mathrm{Pri}(l, s, q) = \mathrm{v} * \mathrm{Q} * c(s) + \mathrm{v} * b(q) + l$$

For a meaning of each parameter, refer to the foregoing description. Details are not described herein again.

(15) Determine the second value associated with the bit based on the transmission rank, the quantity of time domain units configured by the network-side device, the function value of the basis vector pair index associated with the combination coefficient corresponding to the bit, the function value of the Doppler-domain basis vector index associated with the combination coefficient corresponding to the bit, and the transport layer at which the combination coefficient corresponding to the bit is located.

For example, the second value Pri(*l, s, q*) associated with the bit can be calculated by using the following formula:

$$\mathrm{Pri}(l, s, q) = v * N_4 * c(s) + v * b(q) + l$$

For a meaning of each parameter, refer to the foregoing description. Details are not described herein again.

(16) Determine the second value associated with the bit based on the transmission rank, the quantity of basis vector pairs selected by the terminal or configured by the network-side device, the function value of the Doppler-domain basis vector index associated with the combination coefficient corresponding to the bit, the function value of the basis vector pair index associated with the combination coefficient corresponding to the bit, and the transport layer at which the combination coefficient corresponding to the bit is located.

For example, the second value Pri(*l, s, q*) associated with the bit can be calculated by using the following formula:

$$\mathrm{Pri}(l, s, q) = \mathrm{v} * \mathrm{S} * b(q) + \mathrm{v} * c(s) + l$$

For a meaning of each parameter, refer to the foregoing description. Details are not described herein again.

(17) Determine the second value associated with the bit based on the transmission rank, the quantity of frequency domain units configured by the network-side device, the function value of the basis vector pair index associated with the combination coefficient corresponding to the bit, the function value of the Doppler-domain basis vector index associated with the combination coefficient corresponding to the bit, and the transport layer at which the combination coefficient corresponding to the bit is located.

For example, the second value Pri(*l, f, s*) associated with the bit can be calculated by using the following formula:

$$\mathrm{Pri}(l, f, s) = \mathrm{v} * \mathrm{N}_3 * c(s) + \mathrm{v} * \pi(f) + l$$

For a meaning of each parameter, refer to the foregoing description. Details are not described herein again.

(18) Determine the second value associated with the bit based on the transmission rank, the quantity of frequency-domain basis vectors selected by the terminal or configured by the network-side device in the transmission rank, the function value of the basis vector pair index associated with the combination coefficient corresponding to the bit, the function value of the Doppler-domain basis vector index associated with the combination coefficient corresponding to the bit, and the transport layer at which the combination coefficient corresponding to the bit is located.

For example, the second value Pri($l$, $f$, $s$) associated with the bit can be calculated by using the following formula:

$$\mathrm{Pri}(l, f, s) = v * M * c(s) + v * \pi(f) + l$$

For a meaning of each parameter, refer to the foregoing description. Details are not described herein again.

(19) Determine the second value associated with the bit based on the transmission rank, the quantity of basis vector pairs selected by the terminal or configured by the network-side device, the function value of the basis vector pair index associated with the combination coefficient corresponding to the bit, the function value of the frequency-domain basis vector index associated with the combination coefficient corresponding to the bit, and the transport layer at which the combination coefficient corresponding to the bit is located.

For example, the second value Pri($l$, $f$, $s$) associated with the bit can be calculated by using the following formula:

$$\mathrm{Pri}(l, f, s) = v * S * \pi(f) + v * c(s) + l$$

For a meaning of each parameter, refer to the foregoing description. Details are not described herein again.

(20) Determine the second value associated with the bit based on the transmission rank, the quantity of spatial-domain basis vectors selected by the terminal or configured by the network-side device, the function value of the spatial-domain basis vector index associated with the combination coefficient corresponding to the bit, and the transport layer at which the combination coefficient corresponding to the bit is located.

For example, the second value Pri($l$, $i$, $s$) associated with the bit can be calculated by using the following formula:

$$\mathrm{Pri}(l, i, s) = v * (c(s) + a(i)) + l$$

For a meaning of each parameter, refer to the foregoing description. Details are not described herein again.

(21) Determine the second value associated with the bit based on the transmission rank, the quantity of spatial-domain basis vectors selected by the terminal or configured by the network-side device, the function value of the Doppler-domain basis vector index associated with the combination coefficient corresponding to the bit, and the transport layer at which the combination coefficient corresponding to the bit is located.

For example, the second value Pri($l$, $s$, $q$) associated with the bit can be calculated by using the following formula:

$$\mathrm{Pri}(l, s, q) = v * (b(q) + c(s)) + l$$

For a meaning of each parameter, refer to the foregoing description. Details are not described herein again.

(22) Determine the second value associated with the bit based on the transmission rank, the quantity of spatial-domain basis vectors selected by the terminal or configured by the network-side device, the function value of the frequency-domain basis vector index associated with the combination coefficient corresponding to the bit, and the transport layer at which the combination coefficient corresponding to the bit is located.

For example, the second value Pri($l$, $f$, $s$) associated with the bit can be calculated by using the following formula:

$$\mathrm{Pri}(l, f, s) = v * (\pi(f) + c(s)) + l$$

For a meaning of each parameter, refer to the foregoing description. Details are not described herein again.

In the foregoing optional implementations, $\pi(f)$ represents the function value related to the frequency-domain basis vector index $f$, $a(i)$ represents the function value related to the spatial-domain basis vector index, $b(q)$ represents the function value related to the Doppler-domain basis vector index, and $c(s)$ represents the function value related to the spatial domain-frequency domain basis vector pair index, or the function value related to the spatial domain-Doppler domain basis vector pair index, or the function value related to the frequency domain-Doppler domain basis vector pair index. A possible calculation manner of these function values includes one of the following:

    i.

$$\pi(f) = \mathrm{f};$$

ii.

$$a(i) = i;$$

iii.

$$\mathrm{b}(q) = q;$$

iv.

$$\pi(f) = \mathrm{f} - \mathrm{f}_{\mathrm{ref}};$$

v.

$$a(i) = i - i_{\mathrm{ref}};$$

vi.

$$\mathrm{b}(q) = q - q_{\mathrm{ref}};$$

vii.

$$\pi(f) = min(|\mathrm{f} - \mathrm{f}_{\mathrm{ref}}|, M_v - |\mathrm{f} - \mathrm{f}_{\mathrm{ref}}|);$$

viii.

$$a(i) = min(|i - i_{\mathrm{ref}}|, L_i - |i - i_{\mathrm{ref}}|);$$

ix.

$$\mathrm{b}(q) = min(|q - q_{\mathrm{ref}}|, Q - |q - q_{\mathrm{ref}}|);$$

x.

$$\pi(f) = min\big(2 * f, 2 * \big(M - f + f_{ref}\big) - 1\big);$$

xi.

$$\mathrm{a}(i) = min(2 * (i - i_{\mathrm{ref}}), 2 * (L_i - i + i_{\mathrm{ref}}) - 1);$$

xii.

$$\mathrm{b}(q) = min(2 * (q - q_{\mathrm{ref}}), 2 * (Q - q + q_{\mathrm{ref}}) - 1);$$

xiii.

$$\pi(f) = n_{3,l}^{(f)};$$

xiv.

$$b(q) = n_{4,l}^{(q)};$$

xv.

$$\pi(f) = n_{3,l}^{(f)} - n_{3,l,ref}^{(f)};$$

xvi.

$$b(q) = n_{4,l}^{(q)} - n_{4,l,ref}^{(q)};$$

xvii.

$$\pi(f) = min\left(\left|n_{3,l}^{(f)} - n_{3,l,ref}^{(f)}\right|, N_3 - \left|n_{3,l}^{(f)} - n_{3,l,ref}^{(f)}\right|\right);$$

xviii.

$$b(q) = min(|n_{4,l}^{(q)} - n_{4,l,ref}^{(q)}|, N_4 - |n_{4,l}^{(q)} - n_{4,l,ref}^{(q)}|);$$

xix.

$$\pi(f) = min\left(2 * n_{3,l}^{(f)}, 2 * \left(N_3 - n_{3,l}^{(f)} + n_{3,l,ref}^{(f)}\right) - 1\right);$$

xx.

$$b(q) = min\left(2 * (n_{4,l}^{(q)} - n_{4,l,ref}^{(q)}), 2 * \left(N_4 - n_{4,l}^{(q)} + n_{4,l,ref}^{(q)}\right) - 1\right);$$

and

xxi.

$$c(s) = s.$$

In this optional implementation, a mapping order of bits in the second non-zero combination coefficient can be determined based on the first one of two non-zero combination coefficient indication bitmaps. For example, priorities of basis vector pair indexes in ascending order corresponding to basis vector pair indexes in the first one of two non-zero combination coefficient indication bitmaps are in descending order.

Herein, min $(\cdot)$ represents taking a minimum value, and $|\cdot|$ represents taking an absolute value. $i_{ref}$ represents a reference spatial-domain basis vector index associated with a spatial-domain basis vector index i, and reference spatial-domain basis vector indexes associated with different i may be the same or different. Generally, each polarization direction is associated with one reference spatial-domain basis vector index. All spatial-domain basis vector indexes i associated with the polarization direction are associated with a same reference spatial-domain basis vector index. A spatial-domain basis vector index associated with the strongest coefficient is a reference spatial-domain basis vector index. The reference spatial-domain basis vector index can also be a basis vector index indicated by the terminal, or can be a basis vector index obtained based on a default rule. $q_{ref}$ represents a reference Doppler-domain basis vector index associated with a Doppler-domain basis vector index q. Generally, a Doppler-domain basis vector index associated with the strongest coefficient is a reference Doppler-domain basis vector index. The reference Doppler-domain basis vector index can also be a basis vector index indicated by the terminal, or can be a basis vector index obtained based on a default rule (for example, a basis vector of q=0 is a reference). $f_{ref}$ represents a reference frequency-domain basis vector index associated with a frequency-domain basis vector index f. Generally, a frequency-domain basis vector index associated with the strongest coefficient is a reference frequency-domain basis vector index. A reference basis vector pair index can also be a basis vector pair index indicated by the terminal, or can be a basis vector index obtained based on a default rule (for example, a basis vector pair of s=0 is a reference). s represents the spatial domain-frequency domain basis vector pair index.

$L_i$ represents a quantity of spatial-domain basis vectors associated with the spatial-domain basis vector index i. Generally, $L_i$ represents a quantity of spatial-domain basis vectors associated with a polarization direction associated with the spatial-domain basis vector index i. $n_{4,l}^{(q)}$ represents a Doppler-domain basis vector sequence number associated with the Doppler-domain basis vector index q for layer *l*. $n_{4,l,ref}^{(q)}$ represents a reference Doppler-domain basis vector sequence number associated with the Doppler-domain basis vector index q for layer *l*. Generally, a Doppler-domain basis vector sequence number associated with the strongest coefficient is a reference Doppler-domain basis vector sequence number. The reference Doppler-domain basis vector sequence number can also be a basis vector sequence number indicated by the terminal, or can be a basis vector sequence number obtained based on a default rule (for example, a basis vector sequence number of q=0 is a reference or a basis vector sequence number whose sequence number is 0 is a reference). $n_{3,l}^{(f)}$ represents a frequency-domain basis vector sequence number associated with the frequency-domain basis vector index f for layer *l*. $n_{3,l,ref}^{(f)}$ represents a reference frequency-domain basis vector sequence number associated with the frequency-domain basis vector index f for layer *l*. Generally, a frequency-domain basis vector sequence number associated with the strongest coefficient is a reference frequency-domain basis vector sequence number. The reference frequency-domain basis vector sequence number can also be a basis vector sequence number indicated by the terminal, or can be a basis vector sequence number obtained based on a default rule (for example, a basis vector sequence number of *f*=0 is a reference or a basis vector sequence number whose sequence number is 0 is a reference).

In this embodiment of this application, in a case that the parameter related to the target PMI combination coefficient includes a non-zero combination coefficient amplitude indication and a non-zero combination coefficient phase indication, when the terminal sends the parameter related to the target PMI combination coefficient, the method can further include: mapping the non-zero combination coefficient amplitude indication and the non-zero combination coefficient phase indication to the group 1 and the group 2 in the second part of the CSI report for sending.

Optionally, the mapping the non-zero combination coefficient amplitude indication and the non-zero combination coefficient phase indication to the group 1 and the group 2 in the second part of the CSI report for sending can include the following steps:

Step 1: Determine a third value associated with each non-zero combination coefficient.
Step 2: Determine a mapping order of each non-zero combination coefficient based on the third value associated with each non-zero combination coefficient.
Step 3: Divide all non-zero combination coefficients into a first part of non-zero combination coefficients and a second part of non-zero combination coefficients based on the mapping order. For example, a non-zero combination coefficient of a high mapping priority is classified into the first part of non-zero combination coefficients, and a non-zero combination coefficient of a low mapping priority is classified into the second part of non-zero combination coefficients.
Step 3: Map a non-zero coefficient amplitude indication of the first part of non-zero combination coefficients and a non-zero coefficient phase indication of the first part of non-zero combination coefficients to the group 1 in the second part of the CSI report for sending, and map a non-zero coefficient amplitude indication of the second part of non-zero combination coefficients and a non-zero coefficient phase indication of the second part of non-zero combination coefficients to the group 2 in the second part of the CSI report for sending.

Optionally, a quantity of non-zero combination coefficients in the first part of non-zero combination coefficients can be Knz-X3, where Knz is a quantity of all non-zero combination coefficients, X3 is an integer greater than 0, and X3 is obtained based on a default rule, indicated by the network-side device, or determined by the terminal.

In the foregoing optional implementation, when all non-zero combination coefficient amplitude indications and phase indications are mapped to Groupl and Group2 in Part2 of the CSI report, a third value associated with each non-zero combination coefficient can be determined, a mapping order is determined based on the third value, the non-zero combination coefficients are divided into two parts based on the mapping order, and the non-zero combination coefficient amplitude indications are mapped to Groupl and Group2. When the non-zero combination coefficient phase indications are mapped to Groupl and Group2, Groupl includes Knz-X3 high-priority amplitude indications and phase indications of the non-zero combination coefficients, and Group2 includes X3 low-priority amplitude indications and phase indications.

In the foregoing optional implementation, in a case that X3 can be determined by the terminal, X3 can be determined based on the quantity of non-zero combination coefficients included in part1 of the CSI report, and the terminal can feed back a determined value of X3 in the first part of the CSI report. For example, Group2 includes $\lfloor K_{NZ}/2 \rfloor$ amplitude indications and phase indications of low-priority coefficients. $K_{NZ}$ is the quantity of non-zero combination coefficients included in part1 of the CSI report.

In an optional implementation, the third value is determined based on the second value. For example, a third value associated with each non-zero combination coefficient is the same as a second value associated with the non-zero combination coefficient, or a third value associated with each non-zero combination coefficient is the same as a second value associated with a bit (bit) in the second one of two non-zero combination coefficient indication bitmaps associated with the non-zero combination coefficient.

In this embodiment of this application, the terminal can further feed back one or Q non-zero combination coefficient indication bitmaps, where Q is the quantity of Doppler-domain basis vectors selected by the terminal or configured by the network-side device in a current transmission rank. Therefore, in an optional implementation, that the terminal sends the parameter related to the target PMI combination coefficient can include: in a case that one or Q non-zero combination coefficient indication bitmaps are fed back, mapping the one or Q non-zero combination coefficient indication bitmaps to a group 1 and a group 2 in a second part of the CSI report for sending, where Q is a quantity of Doppler-domain basis vectors selected by the terminal or configured by the network-side device in a current transmission rank.

In the foregoing optional implementation, in a case that one or Q non-zero combination coefficient indication bitmaps are fed back, one or Q non-zero combination coefficient indication bitmap (bitmap) mapping manners are provided.

In an optional implementation, the mapping the one or Q non-zero combination coefficient indication bitmaps to a group 1 and a group 2 in a second part of the CSI report for sending can include the following steps:

Step 1: Determine fourth values associated with combination coefficients, where one combination coefficient is associated with one bit in the one or Q non-zero combination coefficient indication bitmaps.

In this embodiment of this application, the non-zero combination coefficient indication bitmap indicates a position of a non-zero combination coefficient. Each bit (bit) in the non-zero combination coefficient indication bitmap is associated with one combination coefficient (the combination coefficient may be 0, or may not be 0, that is, the combination coefficient is a non-zero combination coefficient). A value of each bit indicates whether a corresponding combination coefficient is a non-zero combination coefficient. For example, if a value of a bit is 0, the associated combination coefficient is 0, and if a value of a bit is 1, the associated combination coefficient is a non-zero combination coefficient.

Step 2: Determine a mapping order of parameters related to the target PMI combination coefficient based on the fourth values associated with the combination coefficients.

For example, a mapping order of bits in the one or Q non-zero combination coefficient indication bitmaps is determined based on the fourth values associated with the combination coefficients.

For another example, a mapping order of non-zero combination coefficient amplitude indications or non-zero combination coefficient phase indications associated with the non-zero combination coefficients is determined based on a fourth value associated with the non-zero combination coefficient in the combination coefficients.

Step 3: Map the one or Q non-zero combination coefficient indication bitmaps to the group 1 and the group 2 based on the mapping order for sending. For example, a bit with a high mapping priority can be mapped to the group 1, and a bit with a low mapping priority can be mapped to the group 2.

Optionally, for any one of the combination coefficients, a fourth value associated with the combination coefficient is determined based on at least one of the following:

a spatial-domain basis vector sequence number associated with the combination coefficient;
a spatial-domain basis vector index associated with the combination coefficient;
a frequency-domain basis vector sequence number associated with the combination coefficient;
a frequency-domain basis vector index associated with the combination coefficient;
a Doppler-domain basis vector sequence number associated with the combination coefficient;
a Doppler-domain basis vector index associated with the combination coefficient;
a layer sequence number associated with the combination coefficient;

a layer index associated with the combination coefficient;
a spatial-domain basis vector index associated with a strongest coefficient;
a spatial-domain basis vector sequence number associated with the strongest coefficient;
a frequency-domain basis vector sequence number associated with the strongest coefficient;
a frequency-domain basis vector index associated with the strongest coefficient;
a Doppler-domain basis vector sequence number associated with the strongest coefficient; and
a Doppler-domain basis vector index associated with the strongest coefficient.

A basis vector sequence number refers to a sequence number of a basis vector in all or complete basis vector sets. In other words, the sequence number is one of parameters for generating the basis vector. A basis vector index refers to an index of a basis vector located in a part of basis vector sets selected by the terminal. For example, if the terminal selects three basis vectors whose basis vector sequence numbers are 0/2/5, the basis vector 0 corresponds to a basis vector index 0, the basis vector 2 corresponds to an index 1, and the basis vector 5 corresponds to an index 2.

In an optional implementation, the determining a mapping order of parameters related to the target PMI combination coefficient based on the fourth values associated with the combination coefficients includes at least one of the following:

sorting the bits in the one or Q non-zero combination coefficient indication bitmaps based on fourth values in descending or ascending order, where a mapping priority of a bit associated with a combination coefficient with a small or large fourth value is high;
sorting the non-zero combination coefficient amplitude indications based on fourth values in descending or ascending order, where a mapping priority of a non-zero combination coefficient amplitude indication associated with a non-zero combination coefficient with a small or large fourth value is high; and
sorting the non-zero combination coefficient phase indications based on fourth values in descending or ascending order, where a mapping priority of a non-zero combination coefficient phase indication associated with a non-zero combination coefficient with a small or large fourth value is high.

In an optional implementation, for parameters related to the target PMI combination coefficient that are associated with combination coefficients with a same fourth value, mapping priorities of the parameters related to the target PMI combination coefficient are determined based on at least one of the following (including at least one of mapping priorities of the bits in the non-zero combination coefficient indication bitmap, the non-zero combination coefficient phase indications associated with the combination coefficients, and the non-zero combination coefficient amplitude indications associated with the combination coefficients):

(1) a mapping priority of the target PMI combination coefficient whose spatial-domain basis vector sequence number or basis vector index associated with the associated combination coefficient is small is high;
(2) a mapping priority of the target PMI combination coefficient whose frequency-domain basis vector sequence number or basis vector index associated with the associated combination coefficient is small is high;
(3) a priority of the target PMI combination coefficient whose Doppler-domain basis vector sequence number or basis vector index associated with the associated combination coefficient is small is high;
(4) a priority of the target PMI combination coefficient whose layer sequence number or layer index associated with the associated combination coefficient is small is high; and
(5) a priority of the target PMI combination coefficient whose fifth value associated with the associated combination coefficient is large or small is high.

In the foregoing optional implementation, the fifth value can be determined based on at least one of the following:

the spatial-domain basis vector sequence number associated with the associated combination coefficient;
the spatial-domain basis vector index associated with the associated combination coefficient;
the frequency-domain basis vector sequence number associated with the associated combination coefficient;
the frequency-domain basis vector index associated with the associated combination coefficient;
the Doppler-domain basis vector sequence number associated with the associated combination coefficient;
the Doppler-domain basis vector index associated with the associated combination coefficient;
the layer sequence number associated with the associated combination coefficient; and
the layer index associated with the associated combination coefficient.

In an optional implementation, in a case that the fourth value associated with the combination coefficient is not related to the Doppler-domain basis vector sequence number or Doppler-domain basis vector index of the combination coefficient, the terminal can explicitly or implicitly indicate, in the first part of the CSI report, a quantity of non-zero combination coefficients associated with each of Q Doppler-domain basis vectors.

For example, the quantity of non-zero combination coefficients associated with each of Q Doppler-domain basis vectors is explicitly or implicitly fed back in the part 1 of the CSI report. Q represents the quantity of Doppler-domain basis vectors selected by the terminal or configured by the network-side device in the rank v. Alternatively, a quantity of non-zero coefficients associated with each of N CSI-RSs are explicitly or implicitly fed back in the part 1 of the CSI report. N represents a quantity of CSI-RSs configured by a network or a quantity of CSI-RSs indicated by the terminal.

In this embodiment of this application, for any one of the combination coefficients, a fourth value associated with the combination coefficient can be determined based on any one of the following (1) to (13).

> (1) Determine the fourth value associated with the combination coefficient based on the transmission rank, the quantity of spatial-domain basis vectors selected by the terminal or configured by the network-side device, a function value of the frequency-domain basis vector index of the combination coefficient, a function value of the spatial-domain basis vector index of the combination coefficient, and a transport layer at which the combination coefficient is located.

For example, the fourth value $\mathrm{Pri}(l, i, f)$ associated with the combination coefficient can be determined by using the following formula:

$$\mathrm{Pri}(l, i, f) = \mathrm{L} * \mathrm{v} * \pi(f) + v * a(i) + l$$

Herein, $f = 0, 1, \ldots, M - 1$ represents the frequency-domain basis vector index of the combination coefficient, and M represents a quantity of frequency-domain basis vectors selected by the terminal or configured by the network-side in the rank v. $l = 0, 1, \ldots, v - 1$ represents a sequence number or an index of a layer at which the combination coefficient is located, and $v$ represents a transmission rank. $i = 0, 1, \ldots, L - 1$ represents the spatial-domain basis vector index of the combination coefficient, and L represents the quantity of spatial-domain basis vectors selected by the terminal or configured by the network-side device (which may be a sum of quantities of spatial-domain basis vectors in two polarization directions, or may be a quantity of spatial-domain basis vectors in one polarization direction, and is generally the sum of quantities of spatial-domain basis vectors in two polarization directions). $a(i)$ represents the function value related to the spatial-domain basis vector index of the combination coefficient.

(2) Determine the fourth value associated with the combination coefficient based on the transmission rank, the quantity of spatial-domain basis vectors selected by the terminal or configured by the network-side device, the quantity of frequency-domain basis vectors selected by the terminal or configured by the network-side device in the transmission rank, the function value of the frequency-domain basis vector index of the combination coefficient, a function value of the Doppler-domain basis vector index of the combination coefficient, the function value of the spatial-domain basis vector index of the combination coefficient, and the transport layer at which the combination coefficient is located.

For example, the fourth value $\mathrm{Pri}(l, i, f, q)$ associated with the combination coefficient can be determined based on the following formula:

$$\mathrm{Pri}(l, i, f, q) = \mathrm{L} * v * \mathrm{M} * \mathrm{b}(q) + \mathrm{L} * v * \pi(f) + v * a(i) + l$$

M represents the quantity of spatial-domain basis vectors selected by the terminal or configured by the network-side device in the transmission rank v, b(q) represents the function value related to the Doppler-domain basis vector index of the combination coefficient, $q = 0, 1, \ldots, Q - 1$ represents the Doppler-domain basis vector index, and Q represents the quantity of frequency-domain basis vectors selected by the terminal or configured by the network-side device in the rank v. For meanings of other parameters, refer to the foregoing descriptions. Details are not described herein again.

(3) Determine the fourth value associated with the combination coefficient based on the transmission rank, the quantity of spatial-domain basis vectors selected by the terminal or configured by the network-side device, a quantity of frequency domain units configured by the network-side device, the function value of the frequency-domain basis vector index of the combination coefficient, the function value of the Doppler-domain basis vector index of the combination coefficient, the function value of the spatial-domain basis vector index of the combination coefficient, and the transport layer at which the combination coefficient is located.

For example, the fourth value $\mathrm{Pri}(l, i, f, q)$ associated with the combination coefficient can be determined based on the following formula:

$$\mathrm{Pri}(l, i, f, q) = \mathrm{L} * v * \mathrm{N}_3 * \mathrm{b}(q) + \mathrm{L} * v * \pi(f) + v * a(i) + l$$

Herein, $\mathrm{N}_3$ is the quantity of frequency domain units configured by the network-side device. For meanings of other parameters, refer to the foregoing related descriptions. Details are not described herein again.

(4) Determine the fourth value associated with the combination coefficient based on the transmission rank, the quantity of spatial-domain basis vectors selected by the terminal or configured by the network-side device, the quantity of Doppler-domain basis vectors selected by the terminal or configured by the network-side device in the transmission rank, the function value of the frequency-domain basis vector index of the combination coefficient, the function value of the Doppler-domain basis vector index of the combination coefficient, the function value of the spatial-domain basis vector index of the combination coefficient, and the transport layer at which the combination coefficient is located.

For example, the fourth value Pri($l, i, f, q$) associated with the combination coefficient can be determined based on one of the following formulas:

$$\mathrm{Pri}(l, i, f, q) = \mathrm{L} * \mathrm{v} * \mathrm{Q} * \pi(\mathrm{f}) + \mathrm{L} * \mathrm{v} * \mathrm{b}(\mathrm{q}) + \mathrm{v} * \mathrm{a}(\mathrm{i}) + l$$

$$\mathrm{Pri}(l, i, f, q) = \mathrm{L} * \mathrm{v} * \mathrm{Q} * \pi(\mathrm{f}) + \mathrm{Q} * \mathrm{v} * \mathrm{a}(\mathrm{i}) + \mathrm{v} * \mathrm{b}(\mathrm{q}) + l$$

$$\mathrm{Pri}(l, i, f, q) = \mathrm{L} * \mathrm{v} * \mathrm{Q} * \pi(\mathrm{f}) + \mathrm{Q} * \mathrm{v} * \mathrm{a}(\mathrm{i}) + \mathrm{Q} * l + \mathrm{b}(\mathrm{q})$$

For a meaning of each parameter, refer to the foregoing related description. Details are not described herein again.

(5) Determine the fourth value associated with the combination coefficient based on the transmission rank, the quantity of spatial-domain basis vectors selected by the terminal or configured by the network-side device, a quantity of time domain units configured by the network-side device, the function value of the frequency-domain basis vector index of the combination coefficient, the function value of the Doppler-domain basis vector index of the combination coefficient, the function value of the spatial-domain basis vector index of the combination coefficient, and the transport layer at which the combination coefficient is located.

For example, the fourth value Pri($l, i, f, q$) associated with the combination coefficient can be determined based on one of the following formulas:

$$\mathrm{Pri}(l, i, f, q) = \mathrm{L} * \mathrm{v} * \mathrm{N}_4 * \pi(\mathrm{f}) + \mathrm{L} * \mathrm{v} * \mathrm{b}(\mathrm{q}) + \mathrm{v} * \mathrm{a}(\mathrm{i}) + l$$

$$\mathrm{Pri}(l, i, f, q) = \mathrm{L} * \mathrm{v} * \mathrm{N}_4 * \pi(\mathrm{f}) + \mathrm{N}_4 * \mathrm{v} * \mathrm{a}(\mathrm{i}) + \mathrm{v} * \mathrm{b}(\mathrm{q}) + l$$

$$\mathrm{Pri}(l, i, f, q) = \mathrm{L} * \mathrm{v} * \mathrm{N}_4 * \pi(\mathrm{f}) + \mathrm{N}_4 * \mathrm{v} * \mathrm{a}(\mathrm{i}) + \mathrm{N}_4 * l + \mathrm{b}(\mathrm{q})$$

$\mathrm{N}_4$ is the quantity of time domain units configured by the network-side device. For meanings of other parameters, refer to the foregoing related descriptions. Details are not described herein again.

(6) Determine the fourth value associated with the combination coefficient based on the transmission rank, the quantity of spatial-domain basis vectors selected by the terminal or configured by the network-side device, a function value related to the Doppler-domain basis vector index of the combination coefficient and the frequency-domain basis vector index of the combination coefficient, the function value of the spatial-domain basis vector index of the combination coefficient, and the transport layer at which the combination coefficient is located.

For example, the fourth value Pri($l, i, f, q$) associated with the combination coefficient can be determined based on the following formula:

$$\mathrm{Pri}(l, i, f, q) = \mathrm{L} * \mathrm{v} * c(f, q) + v * a(i) + l$$

For a meaning of each parameter, refer to the foregoing related description. Details are not described herein again.

(7) Determine the fourth value associated with the combination coefficient based on the transmission rank, the quantity of spatial-domain basis vectors selected by the terminal or configured by the network-side device, a function value related to the Doppler-domain basis vector index of the combination coefficient and the spatial-domain basis vector index of the combination coefficient, the function value of the frequency-domain basis vector index of the combination coefficient, and the transport layer at which the combination coefficient is located.

For example, the fourth value Pri($l, i, f, q$) associated with the combination coefficient can be determined based on the following formula:

$$\mathrm{Pri}(l, i, f, q) = \mathrm{L} * \mathrm{v} * \pi(f) + v * d(i, q) + l$$

Herein, $d(i, q)$ represents the function value related to the Doppler-domain basis vector index of the combination coefficient and the spatial-domain basis vector index of the combination coefficient. For meanings of other parameters, refer to the foregoing related descriptions. Details are not described herein again.

(8) Determine the fourth value associated with the combination coefficient based on the transmission rank, the quantity of spatial-domain basis vectors selected by the terminal or configured by the network-side device, a function value related to the Doppler-domain basis vector index of the combination coefficient and the frequency-domain basis vector index of the combination coefficient, the function value of the frequency-domain basis vector index of the combination coefficient, and the transport layer at which the combination coefficient is located.

For example, the fourth value Pri($l, i, f, q$) associated with the combination coefficient can be determined based on the following formula:

$$\mathrm{Pri}(l, i, f, q) = \mathrm{L} * \mathrm{c}(f, q) + a(i)$$

Herein, $c(f, q)$ represents the function value related to the Doppler-domain basis vector index of the combination coefficient and the frequency-domain basis vector index of the combination coefficient. For meanings of other parameters, refer to the foregoing related descriptions. Details are not described herein again.

(9) Determine the fourth value associated with the combination coefficient based on the quantity of spatial-domain basis vectors selected by the terminal or configured by the network-side device, the function value related to the Doppler-domain basis vector index of the combination coefficient and the spatial-domain basis vector index of the combination coefficient, and the function value of the frequency-domain basis vector index of the combination coefficient.

For example, the fourth value Pri($l, i, f, q$) associated with the combination coefficient can be determined based on the following formula:

$$\mathrm{Pri}(l, i, f, q) = \mathrm{L} * \pi(\mathrm{f}) + d(i, q)$$

Herein, $d(i, q)$ represents the function value related to the Doppler-domain basis vector index of the combination coefficient and the spatial-domain basis vector index of the combination coefficient. For meanings of other parameters, refer to the foregoing related descriptions. Details are not described herein again.

(10) Determine the fourth value associated with the combination coefficient based on the function value of the Doppler-domain basis vector index of the combination coefficient, the function value of the spatial-domain basis vector index of the combination coefficient, the function value of the frequency-domain basis vector index of the combination coefficient, and the transport layer at which the combination coefficient is located.

For example, the fourth value Pri($l, i, f, q$) associated with the combination coefficient can be determined based on the following formula:

$$\mathrm{Pri}(l, i, f, q) = \pi(f) + \mathrm{b}(q) + a(i) + l$$

For a meaning of each parameter, refer to the foregoing related description. Details are not described herein again.

(11) Determine the fourth value associated with the combination coefficient based on the transmission rank, the function value of the Doppler-domain basis vector index of the combination coefficient, the function value of the spatial-domain basis vector index of the combination coefficient, the function value of the frequency-domain basis vector index of the combination coefficient, and the transport layer at which the combination coefficient is located.

For example, the fourth value Pri($l, i, f, q$) associated with the combination coefficient can be determined based on the following formula:

$$\mathrm{Pri}(l, i, f, q) = v * (\pi(f) + \mathrm{b}(q) + a(i)) + l$$

For a meaning of each parameter, refer to the foregoing related description. Details are not described herein again.

(12) Determine the fourth value associated with the combination coefficient based on the function value of the Doppler-domain basis vector index of the combination coefficient, the function value of the spatial-domain basis vector index of the combination coefficient, and the function value of the frequency-domain basis vector index of the combination coefficient.

For example, the fourth value Pri(*l, i, f, q*) associated with the combination coefficient can be determined based on the following formula:

$$\mathrm{Pri}(l, i, f, q) = \pi(f) + \mathrm{b}(q) + a(i)$$

For a meaning of each parameter, refer to the foregoing related description. Details are not described herein again.

In the foregoing optional implementations, $\pi(f)$ represents the function value related to the frequency-domain basis vector index *f*, *a(i)* represents the function value related to the spatial-domain basis vector index, b(*q*) represents the function value related to the Doppler-domain basis vector index, *d(i, q)* represents the function value related to the spatial-domain basis vector index and the Doppler-domain basis vector index, and *c(f, q)* represents the function value related to the frequency-domain basis vector index and the Doppler-domain basis vector index. Each function value may be one of the following:

(a)

$$\pi(f) = \mathrm{f};$$

(b)

$$a(i) = i;$$

(c)

$$\mathrm{b}(q) = q;$$

(d)

$$\pi(f) = \mathrm{f} - \mathrm{f_{ref}};$$

(e)

$$a(i) = i - i_{\mathrm{ref}};$$

(f)

$$\mathrm{b}(q) = q - q_{\mathrm{ref}};$$

(g)

$$\pi(f) = min(|\mathrm{f} - \mathrm{f_{ref}}|, M_v - |\mathrm{f} - \mathrm{f_{ref}}|)$$

(h)

$$a(i) = min(|i - i_{\mathrm{ref}}|, L_i - |i - i_{\mathrm{ref}}|)$$

(i)

$$\mathrm{b}(q) = min(|q - q_{\mathrm{ref}}|, Q - |q - q_{\mathrm{ref}}|)$$

(j)

$$\pi(f) = min\big(2 * f, 2 * \big(M - f + f_{ref}\big) - 1\big);$$

(k)

$$a(i) = min(2 * (i - i_{\text{ref}}), 2 * (L_i - i + i_{\text{ref}}) - 1);$$

(l)

$$b(q) = min(2 * (q - q_{\text{ref}}), 2 * (Q - q + q_{\text{ref}}) - 1);$$

(m)

$$\pi(f) = n_{3,l}^{(f)};$$

(n)

$$a(i) = n_{5,l}^{(i)};$$

(o)

$$b(q) = n_{4,l}^{(q)};$$

(p)

$$\pi(f) = n_{3,l}^{(f)} - n_{3,l,ref}^{(f)};$$

(q)

$$a(i) = n_{5,l}^{(i)} - n_{5,l,ref}^{(i)};$$

(r)

$$b(q) = n_{4,l}^{(q)} - n_{4,l,ref}^{(q)};$$

(s)

$$\pi(f) = min\left(\left|n_{3,l}^{(f)} - n_{3,l,ref}^{(f)}\right|, N_3 - \left|n_{3,l}^{(f)} - n_{3,l,ref}^{(f)}\right|\right)$$

(t)

$$a(i) = min\left(\left|n_{5,l}^{(i)} - n_{5,l,ref}^{(i)}\right|, N_1 N_2 - \left|n_{5,l}^{(i)} - n_{5,l,ref}^{(i)}\right|\right)$$

(u)

$$b(q) = min(|n_{4,l}^{(q)} - n_{4,l,ref}^{(q)}|, N_4 - |n_{4,l}^{(q)} - n_{4,l,ref}^{(q)}|)$$

(v)

$$\pi(f) = min\left(2 * n_{3,l}^{(f)}, 2 * \left(N_3 - n_{3,l}^{(f)} + n_{3,l,ref}^{(f)}\right) - 1\right);$$

(w)

$$a(i) = min\left(2 * (n_{5,l}^{(i)} - n_{5,l,ref}^{(i)}), 2 * \left(N_1 N_2 - n_{5,l}^{(i)} + n_{5,l,ref}^{(i)}\right) - 1\right);$$

(x)

$$b(q) = min\left(2 * (n_{4,l}^{(q)} - n_{4,l,ref}^{(q)}), 2 * \left(N_4 - n_{4,l}^{(q)} + n_{4,l,ref}^{(q)}\right) - 1\right);$$

(y)

$$c(f, q) = \pi(f) + b(q),$$

where one of the foregoing calculation manners of $\pi(f)$ can be used for $\pi(f)$, and one of the foregoing calculation manners of $b(q)$ can be used for $b(q)$; and
(z)

$$d(i, q) = a(i) + b(q),$$

where one of the foregoing calculation manners of $a(i)$ can be used for $a(i)$, and one of the foregoing calculation manners of $b(q)$ can be used for $b(q)$.

Herein, $min(\cdot)$ represents taking a minimum value, and $|\cdot|$ represents taking an absolute value.

Herein, $i_{ref}$ represents a reference spatial-domain basis vector index associated with a spatial-domain basis vector index i, and reference spatial-domain basis vector indexes associated with different i may be the same or different. Generally, each polarization direction is associated with one reference spatial-domain basis vector index. All spatial-domain basis vector indexes i associated with the polarization direction are associated with a same reference spatial-domain basis vector index. A spatial-domain basis vector index associated with the strongest coefficient is a reference spatial-domain basis vector index. The reference spatial-domain basis vector index can also be a basis vector index indicated by the terminal, or can be a basis vector index obtained based on a default rule.

Herein, $q_{ref}$ represents a reference Doppler-domain basis vector index associated with a Doppler-domain basis vector index q. Generally, a Doppler-domain basis vector index associated with the strongest coefficient is a reference Doppler-domain basis vector index. The reference Doppler-domain basis vector index can also be a basis vector index indicated by the terminal, or can be a basis vector index obtained based on a default rule (for example, a basis vector of q=0 is a reference).

Herein, $f_{ref}$ represents a reference frequency-domain basis vector index associated with a frequency-domain basis vector index f. Generally, a frequency-domain basis vector index associated with the strongest coefficient is a reference frequency-domain basis vector index. A reference frequency-domain basis vector index can also be a basis vector index indicated by the terminal, or can be a basis vector index obtained based on a default rule (for example, a basis vector pair of f=0 is a reference).

Herein, $L_i$ represents a quantity of spatial-domain basis vectors associated with the spatial-domain basis vector index i. Generally, $L_i$ represents a quantity of spatial-domain basis vectors associated with a polarization direction associated with the spatial-domain basis vector index i.

Herein, $n_{4,l}^{(q)}$ represents a Doppler-domain basis vector sequence number associated with the Doppler-domain basis vector index q for layer *l*.

Herein, $n_{4,l,ref}^{(q)}$ represents a reference Doppler-domain basis vector sequence number associated with the Doppler-domain basis vector index q for layer *l*. Generally, a Doppler-domain basis vector sequence number associated with the strongest coefficient is a reference Doppler-domain basis vector sequence number. The reference Doppler-domain basis vector sequence number can also be a basis vector sequence number indicated by the terminal, or can be a basis vector sequence number obtained based on a default rule (for example, a basis vector sequence number of q=0 is a reference or a basis vector sequence number whose sequence number is 0 is a reference).

Herein, $n_{3,l}^{(f)}$ represents a frequency-domain basis vector sequence number associated with the frequency-domain basis vector index f for layer *l*.

Herein, $n_{3,l,ref}^{(f)}$ represents a reference frequency-domain basis vector sequence number associated with the frequency-domain basis vector index f for layer *l*. Generally, a frequency-domain basis vector sequence number associated with the strongest coefficient is a reference frequency-domain basis vector sequence number. The reference frequency-domain basis vector sequence number can also be a basis vector sequence number indicated by the terminal, or can be a basis vector sequence number obtained based on a default rule (for example, a basis vector sequence number of f=0 is a reference or a basis vector sequence number whose sequence number is 0 is a reference).

Herein, $n_{5,l}^{(i)}$ represents a spatial-domain basis vector sequence number associated with the spatial-domain basis vector index i for layer *l*.

Herein, $n_{5,l,ref}^{(i)}$ represents a reference spatial-domain basis vector sequence number associated with the spatial-domain basis vector index i for layer *l*. Generally, a spatial-domain basis vector sequence number associated with the strongest coefficient is a reference spatial-domain basis vector sequence number. The reference spatial-domain basis vector sequence number can also be a basis vector sequence number indicated by the terminal, or can be a basis vector sequence number obtained based on a default rule (for example, a basis vector sequence number of i=0 is a reference or a basis vector sequence number whose sequence number is 0 is a reference). Generally, reference spatial-domain basis vector sequence numbers associated with all layers are the same. Generally, reference spatial-domain basis vector sequence numbers associated with two polarization directions are the same.

Herein, $N_1N_2$ represents a quantity of polarization spatial domain units, $N_3$ represents a quantity of frequency domain units, and $N_4$ represents a quantity of Doppler domain units. Alternatively, $N_1N_2$ represents a spatial-domain basis vector length, $N_3$ represents a frequency-domain basis vector length, and $N_4$ represents a Doppler-domain basis vector length.

In an optional implementation, after the fourth value is determined, a mapping order of parameters related to the target PMI combination coefficient that are associated with the combination coefficients can be determined based on the fourth value, and then non-zero combination coefficient amplitude indications and/or non-zero combination coefficient phase indications associated with non-zero combination coefficients are mapped based on the mapping order of the parameters related to the target PMI combination coefficient that are associated with the combination coefficients to a second part of the CSI report for sending.

In an optional implementation, the mapping non-zero combination coefficient amplitude indications and/or non-zero combination coefficient phase indications associated with non-zero combination coefficients to a second part of the CSI report for sending can include: mapping non-zero combination coefficient amplitude indications and/or non-zero combination coefficient phase indications associated with N1 first non-zero combination coefficients to a group 1 in the second part of the CSI report for sending, and mapping non-zero combination coefficient amplitude indications and/or non-zero combination coefficient phase indications associated with N2 second non-zero combination coefficients to a group 2 in the second part of the CSI report for sending, where N1 and N2 are integers greater than 0, and a sum of N1 and N2 is a total quantity of non-zero combination coefficients associated with Q Doppler-domain basis vectors. In this optional implementation, Group1 in part2 part of the CSI report includes a non-zero combination coefficient with a high priority in the non-zero combination coefficients associated with Q Doppler-domain basis vectors.

In the foregoing optional implementation, N1 is a sum of Q first quantities or a sum of Q second quantities, the first quantity is the ceiling of a quantity of non-zero combination coefficients associated with the Doppler-domain basis vector divided by 2, and the second quantity is the ceiling of the quantity of non-zero combination coefficients associated with the Doppler-domain basis vector divided by 2 minus the transmission rank. In other words, N1=SUM (the ceiling of a quantity of non-zero combination coefficients corresponding to each Doppler-domain basis vector divided by 2, or the ceiling of the quantity of non-zero combination coefficients corresponding to each Doppler-domain basis vector divided by 2 minus the rank).

For example, when a network configuration terminal feeds back two Doppler-domain basis vectors (Q=2), for any non-zero combination coefficient, a fourth value associated with the non-zero combination coefficient is obtained by using a formula Pri(*l, i, f, q*) = L $*$ v $* \pi$(f) + v $*$ *a(i)* + *l*, where *a(i)* = *i* (it needs to be noted that in this case, coefficients associated with the two Doppler-domain basis vectors may have a same fourth value). In this case, the part 1 of the CSI report includes two non-zero coefficient quantity indications, the first non-zero coefficient quantity indication ($K_{nz1}$) is associated with the first Doppler-domain basis vector, and the second non-zero coefficient quantity indication ($K_{nz2}$) is associated with the second Doppler-domain basis vector. In this case, $K_{nz1}+K_{nz2}$ is less than or equal to a non-zero coefficient upper limit. The network determines sizes of Group1 and Group2 in Part2 of the CSI report based on $K_{nz1}$ and $K_{nz2}$, where Group1 includes

$\lceil K_{NZ1}/2\rceil + \lceil K_{NZ2}/2\rceil - v$ non-zero combination coefficient amplitude indications and $\lceil K_{NZ1}/2\rceil + \lceil K_{NZ2}/2\rceil - v$ non-zero combination coefficient phase indications. Remaining $\lfloor K_{NZ1}/2\rfloor + \lfloor K_{NZ2}/2\rfloor$ non-zero combination coefficient amplitude indications and $\lfloor K_{NZ1}/2\rfloor + \lfloor K_{NZ2}/2\rfloor$ non-zero combination coefficient phase indications are located in Group2.

In an optional implementation, the N1 first non-zero combination coefficients can be non-zero combination coefficients whose fourth values are less than a preset threshold in the non-zero combination coefficients associated with Q Doppler-domain basis vectors. For example, the network-side device configures a parameter d by using higher layer signaling or a MAC CE, an amplitude indication associated with a non-zero combination coefficient whose fourth value is less than or equal to d and a phase indication associated with the non-zero combination coefficient are mapped to Group 1 in part2 of the CSI report, and an amplitude indication associated with a non-zero combination coefficient whose fourth value is greater than d and a phase indication associated with the non-zero combination coefficient are mapped to Group 2 in part2 of the CSI report. The mapping order is based on priorities of combination coefficients in descending order.

In an optional implementation, the mapping the one or Q non-zero combination coefficient indication bitmaps to the group 1 and the group 2 based on the mapping order for sending can include: mapping N3 bits in the one or Q non-zero combination coefficient indication bitmaps to the group 1 for sending, and mapping bits other than the N3 bits in the one or Q non-zero combination coefficient indication bitmaps to the group 2 for sending, where the N3 bits are non-zero combination coefficient indications corresponding to first N3 non-zero combination coefficients in a mapping order in the one or Q non-zero combination coefficient indication bitmaps, and N3 is an integer greater than 0.

In an optional implementation, N3 can be $v * Q * L * M - \lfloor K_{NZ}/2\rfloor$, where $M$ represents the quantity of frequency-domain basis vectors selected by the terminal or configured by the network-side device in the transmission rank v, v represents the transmission rank, L represents the quantity of spatial-domain basis vectors selected by the terminal or configured by the network-side device, and $K_{NZ}$ is a quantity of non-zero coefficients indicated in the first part of the CSI report, or $K_{NZ}$ is a sum of quantities of non-zero coefficients associated with a plurality of Doppler-domain basis vectors indicated in the first part of the CSI report.

For example, Group1 in part2 of the CSI report includes $v * Q * L * M - \lfloor K_{NZ}/2\rfloor$ bits with high priorities in all non-zero combination coefficient indications associated with a bitmap whose length is $v * Q * L * M - \lfloor K_{NZ}/2\rfloor$, where M represents the quantity of frequency-domain basis vectors selected by the terminal in the rank v, and v represents the transmission rank. L represents the quantity (including two polarization directions) of spatial-domain basis vectors selected by the terminal, and $K_{NZ}$ is a quantity of non-zero coefficients in Part1 of the CSI report, or a sum of quantities of non-zero coefficients associated with a plurality of Doppler-domain basis vectors indicated in part1. Group1 includes $\lfloor K_{NZ}/2\rfloor$ combination coefficients with high priorities associated with a bit sequence whose length is $\lfloor K_{NZ}/2\rfloor$.

In another optional implementation, N3 is v * Q * L * M - X, where $M$ represents the quantity of frequency-domain basis vectors selected by the terminal or configured by the network-side device in the transmission rank v, v represents the transmission rank, L represents the quantity of spatial-domain basis vectors selected by the terminal or configured by the network-side device, and X is a quantity of non-zero coefficients associated with the group 2 in the second part of the CSI report.

For example, Group1 in part2 of the CSI report includes v * Q * L * M - X bits with high priorities in all non-zero combination coefficient indications associated with a bitmap whose length is v * Q * L * M - X, where $M$ represents the quantity of frequency-domain basis vectors selected by the terminal in the rank v, and v represents the transmission rank. L represents the quantity (including two polarization directions) of spatial-domain basis vectors selected by the terminal, X is the quantity of non-zero coefficients associated with Group2 in Part2 of the CSI report, and X can be fed back by the terminal or configured by the network-side device or obtained based on a default rule.

In still another optional implementation, N3 can further be $v * L * M - \lfloor K_{NZ,q}/2\rfloor$, where M represents the quantity of frequency-domain basis vectors selected by the terminal or configured by the network-side device in the transmission rank v, v represents the transmission rank, L represents the quantity of spatial-domain basis vectors selected by the terminal or configured by the network-side device, and $K_{NZ,q}$ is a quantity of non-zero coefficients associated with a qth Doppler-domain basis vector indicated in the first part of the CSI report.

For example, Group1 in part2 of the CSI report includes $v * L * M - \lfloor K_{NZ,q}/2\rfloor$ bits with high priorities in a corresponding non-zero combination coefficient indication associated with Q bit sequences whose lengths are $v * L * M - \lfloor K_{NZ,q}/2\rfloor$, where $M$ represents the quantity of frequency-domain basis vectors selected by the terminal in the rank v, and v represents the transmission rank. L represents the quantity (including two polarization directions) of spatial-domain basis vectors selected by the terminal, and $K_{NZ,q}$ is the quantity of non-zero coefficients associated with the $q^{th}$ Doppler-domain basis vector indicated in Part1 of the CSI report.

In an optional implementation of this embodiment of this application, that the terminal sends the parameter related to the target PMI combination coefficient in S212 includes: in a case that a quantity of non-zero combination coefficients is less than a threshold, mapping the parameter related to the target PMI combination coefficient to a group 1 in a second part of a CSI report for sending, where the second part of the CSI report does not include a group 2. In this optional implementation, when a quantity of non-zero coefficients is less than a threshold, all parameters related to the non-zero combination coefficient (a non-zero coefficient indication, an amplitude associated with the non-zero combination coefficient, and a phase associated with the non-zero combination coefficient) are sequentially mapped to Group1 in part2 of the CSI report based on priorities, and in this case, there is no Group2 in part2 of the CSI report.

The foregoing threshold can be directly indicated by the network-side device by using higher layer signaling or a MAC CE, or can be determined based on a default rule, or can be fed back by the terminal or determined by the terminal.

For example, the network configures a proportion a or uses a proportion a by default. When the quantity of non-zero coefficients is less than or equal to a*length of a non-zero coefficient indication, or when the quantity of non-zero coefficients is less than, or less than or equal to a*quantity of combination coefficients, or when the quantity of non-zero coefficients is less than, or less than or equal to a*upper limit value of the quantity of non-zero combination coefficients, the parameter related to the non-zero combination coefficient is mapped to Group1 in part2 of the CSI report, and in this case, there is no Group2 in part2 of the CSI report.

For example, in a network configuration or a default rule, when an upper limit value of a non-zero coefficient associated with a codebook parameter is small (for example, an upper limit value K0 of a non-zero coefficient is small), the parameter related to the non-zero combination coefficient is mapped to Group1 in part2 of the CSI report, and in this case, there is no Group2 in part2 of the CSI report.

For example, in a network configuration or a default rule, when a spatial-domain parameter and/or frequency-domain parameter and/or Doppler-domain parameter and/or coefficient proportion Beta associated with a codebook is small (for example, when a spatial-domain basis vector parameter L=2, a frequency-domain basis vector parameter p_v=1/4, and the coefficient proportion Beta=1/4), the parameter related to the non-zero combination coefficient is mapped to Group1 in part2 of the CSI report, and in this case, there is no Group2 in part2 of the CSI report.

It should be noted that, in a case that the quantity of non-zero combination coefficients is less than the threshold, the foregoing technical solution of mapping the parameter related to the target PMI combination coefficient to the group 1 in the second part of the CSI report can be used to predict not only PMI feedback, but also multiple transmission point (MTRP) PMI feedback and other PMI feedback.

Embodiments of this application further provide a method for feeding back channel state information (CSI). In this method, a terminal sends channel state information (CSI) through a physical uplink shared channel (Physical Uplink Shared Channel, PUSCH) or a physical uplink control channel (Physical Uplink Control Channel, PUCCH), where S inter-slot (slot) repetitions are configured for the PUSCH or the PUCCH, S>=1, the CSI is sent in R slots in S slots, 1<=R<=S, a fed-back PMI combination coefficient is associated with a radio channel of a time domain window including W slots, W>=1, a distance between a start slot of the W slots and a first slot determined in the R slots is $\delta$ slots, $\delta$>=0, a value of $\delta$ is indicated by a network-side device to the terminal or configured in a protocol by default, for a CSI reference slot, a distance between the CSI reference slot and a second slot determined in the R slots is n_CSI_ref slots, and n_CSI_ref is a capability value configured by the network-side device, stipulated in a protocol, or reported by the terminal. For example, the CSI is configured with S inter-slot (slot) repetitions on the PUSCH or the PUCCH, where S>=1 (when S=1, there is only one repetition), the reported CSI is sent in the R slots in the S slots, 1<=R<=S, the fed-back PMI combination coefficient is associated with the radio channel of the time domain window including the W slots (slot), and W>=1. The distance between the start slot of the time domain window including the W slots (slot) and the first slot determined in the R slots is $\delta$ slots, where $\delta$>=0, and the value of $\delta$ is indicated by a network to the terminal or configured in the protocol by default. For the CSI reference slot (reference slot), the distance between the CSI reference slot and the second slot determined in the R slots is n_CSI_ref slots.

Optionally, the CSI can include the PMI combination coefficient fed back by the terminal, for example, the parameter related to the target PMI combination coefficient in the foregoing embodiment.

In the foregoing optional implementation, the first slot and the second slot may not be a same slot. For example, the first slot is a $1^{st}$ slot in the R slots, and the second slot is a last slot in the R slots.

In an optional implementation, one slot determined in the R slots is determined based on at least one of the following rules:

(1) The first slot is the $1^{st}$ slot in the R slots.
(2) The first slot is the last slot in the R slots.

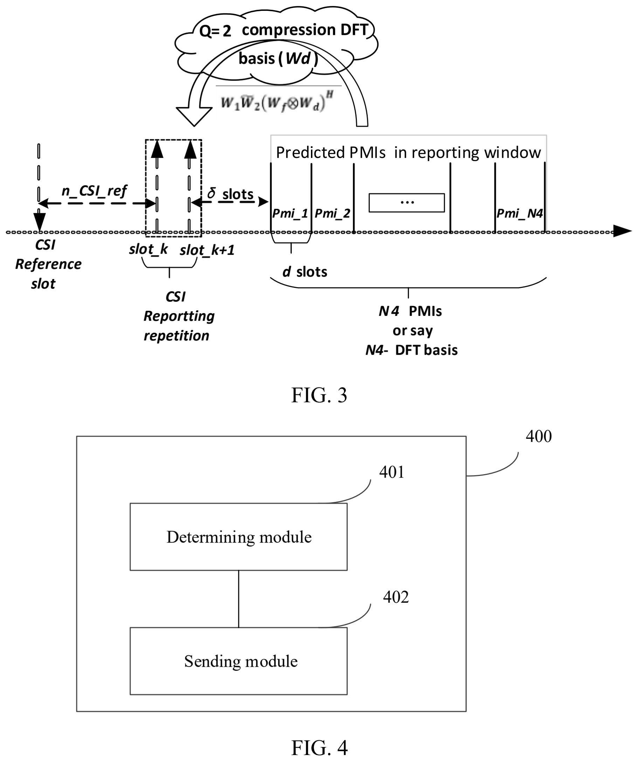

For example, in FIG. 3, the terminal predicts, based on a plurality of CSI-RS resources, N4 codebooks in a future time window, that is, the radio channel of the time domain window including the W slots (slot) that is associated with the fed-back PMI combination coefficient corresponds to W=N4*d in the figure. The fed-back PMI combination coefficient is obtained by the terminal by performing compression on N4 PMIs in Doppler domain to obtain Q pieces of dimension-reduced PMI information, and sending the CSI on the PUSCH channel configured with S=2 inter-slot (slot) repetitions, where the CSI includes the fed-back PMI combination coefficient. In FIG. 3, S=R=2.

The second slot can also be determined based on at least one of the following rules:

Method 1: The second slot is the 1st slot in the R slots.
Method 2: The second slot is the last slot in the R slots.

In an embodiment corresponding to FIG. 3, a position of the CSI reference slot is determined by using Method 1. The start slot of the time domain window including the W slots (slot) is determined by using Method 2. That is, the first slot is the last slot in the R slots.

Further, in an NR protocol, the R slots can be nominal slots in terms of protocol configuration, or can be actual slots for CSI transmission.

In an optional implementation, the reported CSI further includes channel quality indication information (CQI), and the CQI is associated with only first d slots or any d slots in the time domain window including the W slots (slot), where W>=d>=1. When each of the first d slots or any d slots is not a valid downlink slot, the terminal cancels sending the reported CSI. The valid downlink slot means that at least one downlink OFDM symbol or a flexible (flexible) OFDM symbol exists in the slot, or the downlink slot cannot fall within a measurement gap range.

In an optional implementation, the fed-back PMI combination coefficient included in the channel state information (CSI) reported by the terminal is calculated based on B CSI-RS resources, where B is a network configuration value or a capability value reported by the terminal. The terminal cancels sending the current reported CSI when CSI report reconfiguration, cell activation, BWP change, or semi-persistent SP-CSI report activation is performed, and a quantity of CSI-RS resources received by the terminal is less than B.

The following describes the technical solutions provided in embodiments of this application by using specific embodiments.

In an embodiment, it is assumed that a network-side device configures rank=1 transmission for a terminal, and configures the terminal to select L spatial-domain basis vectors (L in total in two polarizations, and the two polarizations have same spatial-domain basis vectors), M frequency-domain basis vectors, and Q Doppler-domain basis vectors. The terminal obtains these basis vectors and L*M*Q combination coefficients based on an estimated channel, where the combination coefficients include $K_{nz}$ non-zero combination coefficients and S basis vector pairs selected by the terminal. When the terminal feeds back two non-zero combination coefficient indication bitmaps, the two non-zero combination coefficient indication bitmaps are associated with the L*M*Q combination coefficients, and each bit (bit) in the non-zero combination coefficient indication bitmaps is associated with at least one of the following information:

(a) a spatial-domain basis vector sequence number or basis vector index;
(b) a frequency-domain basis vector sequence number or basis vector index;
(c) a Doppler-domain basis vector sequence number or basis vector index; and
(d) an associated layer sequence number or layer index.

When the terminal feeds back two non-zero combination coefficient indication bitmaps, the first one of two non-zero combination coefficient indication bitmaps indicates positions of the S basis vector pairs selected by the terminal (a spatial domain-Doppler domain basis vector pair, a spatial domain-frequency domain basis vector pair, or a frequency domain-Doppler domain basis vector pair), and the second one of two non-zero combination coefficient indication bitmaps indicates a position of a non-zero combination coefficient (M frequency-domain basis vectors, Q Doppler-domain basis vectors, and 2L spatial-domain basis vectors are associated).

For the first one of two non-zero combination coefficient indication bitmaps, the terminal determines a first value of each bit in the first one of two non-zero combination coefficient indication bitmaps based on at least one of the following formulas, and a mapping order of the first one of two non-zero combination coefficient indication bitmaps is determined based on the first value.

(1)

$$\mathrm{Pri}(l, i, f) = v * \mathrm{L} * \pi(f) + v * a(i) + l$$

(2)

$$\mathrm{Pri}(l, i, q) = v * \mathrm{L} * \mathrm{b}(q) + v * a(i) + l$$

(3)

$$\mathrm{Pri}(l, i, q) = v * \mathrm{Q} * a(i) + v * \mathrm{b}(q) + l$$

(4)

$$\mathrm{Pri}(l, i, q) = v * \mathrm{N}_4 * a(i) + v * \mathrm{b}(q) + l$$

(5)

$$\mathrm{Pri}(l, f, q) = v * \mathrm{N}_3 * \mathrm{b}(q) + v * \pi(f) + l$$

(6)

$$\mathrm{Pri}(l, f, q) = v * \mathrm{M} * \mathrm{b}(q) + v * \pi(f) + l$$

(7)

$$\mathrm{Pri}(l, f, q) = v * \mathrm{N}_4 * \pi(f) + v * \mathrm{b}(q) + l$$

(8)

$$\mathrm{Pri}(l, f, q) = v * Q * \pi(f) + v * \mathrm{b}(q) + l$$

(9)

$$\mathrm{Pri}(l, i, f) = \pi(f) + a(i) + l$$

(10)

$$\mathrm{Pri}(l, i, q) = \mathrm{b}(q) + a(i) + l$$

(11)

$$\mathrm{Pri}(l, f, q) = \pi(f) + \mathrm{b}(q) + l$$

(12)

$$\mathrm{Pri}(l, i, f) = v * (\pi(f) + a(i)) + l$$

(13)

$$\mathrm{Pri}(l, i, q) = v * (\mathrm{b}(q) + a(i)) + l$$

(14)

$$\mathrm{Pri}(l, f, q) = v * (\pi(f) + \mathrm{b}(q)) + l$$

Herein, f = 0,1, ... , M - 1 represents a frequency-domain basis vector index, and M represents a quantity of frequency-domain basis vectors selected by the terminal in a rank v. $l$ = 0,1, ... , $v$ - 1 represents a layer sequence number or index, and v represents a transmission rank. $i$ = 0,1, ... , $L$ - 1 represents a spatial-domain basis vector index, and L represents a quantity (including two polarization directions) of spatial-domain basis vectors selected by the terminal. q = 0,1, ... , $Q$ - 1 represents a Doppler-domain basis vector index, and $Q$ represents a quantity of frequency-domain basis vectors selected by the terminal in the rank v.

Herein, $\pi(f)$ represents a function value related to the frequency-domain basis vector index f, $a(i)$ represents a function value related to the spatial-domain basis vector index, and b($q$) represents a function value related to the Doppler-domain basis vector index.

It is assumed that a smaller first value indicates a higher priority, that is, being preferentially mapped to a CSI report or a UCI sequence.

For the foregoing formula (1), a mapping order is (from high to low): a layer, a spatial-domain basis vector, and a frequency-domain basis vector. That is, it is assumed that v=L=M=2, and a bit whose first value is the smallest is a bit of $l$ = 0, $a(i)$ = 0, $\pi(f)$ = 0, followed by a bit of $l$ = 1, $a(i)$ = 0, $\pi(f)$ = 0, a bit of $l$ = 0, $a(i)$ = 1, $\pi(f)$ = 0, a bit of $l$ = 1, $a(i)$ = 1, $\pi(f)$ = 0, a bit of $l$ = 0, $a(i)$ = 0, $\pi(f)$ = 1, a bit of $l$ = 1, $a(i)$ = 0, $\pi(f)$ = 1, a bit of $l$ = 0, $a(i)$ = 1, $\pi(f)$ = 1, and a bit of $l$ = 1, $a(i)$ = 1, $\pi(f)$ = 1.

For the foregoing formula (2), a mapping order is (from high to low): a layer, a spatial-domain basis vector, and a Doppler-domain basis vector.

For the foregoing formula (3), a mapping order is (from high to low): a layer, a Doppler-domain basis vector, and a spatial-domain basis vector.

For the foregoing formula (4), a mapping order is (from high to low): a layer, a Doppler-domain basis vector, and a spatial-domain basis vector.

For the foregoing formula (5), a mapping order is (from high to low): a layer, a frequency-domain basis vector, and a Doppler-domain basis vector.

For the foregoing formula (6), a mapping order is (from high to low): a layer, a frequency-domain basis vector, and a Doppler-domain basis vector.

For the foregoing formula (7), a mapping order is (from high to low): a layer, a Doppler-domain basis vector, and a frequency-domain basis vector.

For the foregoing formula (8), a mapping order is (from high to low): a layer, a Doppler-domain basis vector, and a frequency-domain basis vector.

For the foregoing formula (9), a mapping order depends on a sum of a function value related to the frequency-domain basis vector index f, a function value related to the spatial-domain basis vector index i, and a layer index 1. In one manner, a bit having a smaller sum has a higher priority.

For the foregoing formula (10), a mapping order depends on a sum of a function value related to the Doppler-domain basis vector index q, a function value related to the spatial-domain basis vector index i, and a layer index 1. In one manner, a bit having a smaller sum has a higher priority.

For the foregoing formula (11), a mapping order depends on a sum of a function value related to the frequency-domain basis vector index f, a function value related to the Doppler-domain basis vector index q, and a layer index l. In one manner, a bit having a smaller sum has a higher priority.

For the foregoing formula (12), a mapping order depends on a sum (Sum) of a function value related to the frequency-domain basis vector index f and a function value related to the spatial-domain basis vector index i. A mapping order of bits is (from high to low): a layer and the Sum. That is, for v=2, a bit whose first value is the smallest is a bit of $l$ = 0, $a(i)$ + $\pi(f)$ = 0, followed by a bit of $l$ = 1, $a(i)$ + $\pi(f)$ = 0, a bit of $l$ = 0, $a(i)$ + $\pi(f)$ = 1, a bit of $l$ = 1, $a(i)$ + $\pi(f)$ = 1, a bit of $l$ = 0, $a(i)$ + $\pi(f)$ = 2, a bit of $l$ = 1, $a(i)$ + $\pi(f)$ = 2, a bit of $l$ = 0, $a(i)$ + $\pi(f)$ = 3, a bit of $l$ = 1, $a(i)$ + $\pi(f)$ = 3, and so on.

For the foregoing formula (13), a mapping order depends on a sum (Sum) of a function value related to the Doppler-domain basis vector index q and a function value related to the spatial-domain basis vector index i. It can be learned that the mapping order of bits is (from high to low): a layer and the Sum.

For the foregoing formula (14), a mapping order depends on a sum (Sum) of a function value related to the frequency-domain basis vector index $f$ and a function value related to the spatial-domain basis vector index q. A mapping order of bits is (from high to low): a layer and the Sum.

In the foregoing formulas, for bits with only different layer indexes or layer sequence numbers, a first value of a bit with a smaller layer index or layer sequence number is smaller. For bits with only different spatial-domain basis vector indexes or sequence numbers, a first value of a bit with a smaller spatial-domain basis vector sequence number or index or a smaller function value $a(i)$ of the spatial-domain basis vector is smaller. For bits with only different frequency-domain basis vector indexes or sequence numbers, a first value of a bit with a smaller frequency-domain basis vector sequence number or index or a smaller function value $\pi(f)$ of the frequency-domain basis vector is smaller. For bits with only different Doppler-domain basis vector indexes or sequence numbers, a first value of a bit with a smaller Doppler-domain basis vector sequence number or index or a smaller function value b($q$) of the Doppler-domain basis vector is smaller.

For formulas (9) to (14), the first value may be the same. For bits whose first values are the same, coefficient priorities of the bits are determined based on at least one of the following:

(1) a priority of a bit whose associated spatial-domain basis vector sequence number or basis vector index is small is high;
(2) a priority of a bit whose associated frequency-domain basis vector sequence number or basis vector index is small is high;
(3) a priority of a bit whose associated Doppler-domain basis vector sequence number or basis vector index is small is high; and
(4) a priority of a bit whose associated layer sequence number or layer index is small is high.

For the second one of two non-zero combination coefficient indication bitmaps, the terminal determines a second value of each bit based on at least one of the following formulas, and the second one of two non-zero combination coefficient indication bitmaps determines a mapping order based on the second value.

(1)

$$\mathrm{Pri}(l, i, s) = L * c(s) + a(i)$$

(2)

$$\mathrm{Pri}(l, i, s) = S * a(i) + c(s)$$

(3)

$$\mathrm{Pri}(l, s, q) = Q_v * c(s) + b(q)$$

(4)

$$\mathrm{Pri}(l, s, q) = N_4 * c(s) + b(q)$$

(5)

$$\mathrm{Pri}(l, s, q) = S * b(q) + c(s)$$

(6)

$$\mathrm{Pri}(l, f, s) = N_3 * c(s) + \pi(f)$$

(7)

$$\mathrm{Pri}(l, f, s) = M * c(s) + \pi(f)$$

(8)

$$\mathrm{Pri}(l, f, s) = S * \pi(f) + c(s)$$

(9)

$$\mathrm{Pri}(l, i, s) = c(s) + a(i)$$

(10)

$$\mathrm{Pri}(l, s, q) = b(q) + c(s)$$

(11)

$$\mathrm{Pri}(l, f, s) = \pi(f) + c(s)$$

$\pi(f)$ represents a function value related to the frequency-domain basis vector index f, $a(i)$ represents a function value related to the spatial-domain basis vector index, b(q) represents a function value related to the Doppler-domain basis vector index, represents a function value related to a spatial domain/frequency domain basis vector pair index, c(s) represents a function value related to a spatial domain/frequency domain basis vector pair index or a function value related to a frequency domain/Doppler domain basis vector pair index, s= 0,1, ... , S - 1 represents a basis vector pair index selected by the terminal, and S represents a quantity of basis vector pairs selected by the terminal.

It is assumed that a smaller second value indicates a higher priority, that is, being preferentially mapped to a CSI report or a UCI sequence.

For the foregoing formula (1), a mapping order of bits is (from high to low): a spatial-domain basis vector and a basis vector pair. That is, it is assumed that $a(i) = 0,1$, and c(s) = 0, 1, 2. A bit whose first value is the smallest is a bit of $a(i) = 0$, c(s) = 0, followed by a bit of $a(i) = 1$, c(s) = 0, a bit of $a(i) = 0$, c(s) = 1, a bit of $a(i) = 1$, c(s) = 1, a bit of $a(i) = 0$, c(s) = 2, and a bit of $a(i) = 1$, c(s) = 2.

For the foregoing formula (2), a mapping order of bits is (from high to low): a basis vector pair and a spatial-domain basis vector.

For the foregoing formula (3), a mapping order of bits is (from high to low): a Doppler-domain basis vector and a basis vector pair.

For the foregoing formula (4), a mapping order of bits is (from high to low): a Doppler-domain basis vector and a basis vector pair.

For the foregoing formula (5), a mapping order of bits is (from high to low): a basis vector pair and a Doppler-domain basis vector.

For the foregoing formula (6), a mapping order of bits is (from high to low): a frequency-domain basis vector and a basis vector pair.

For the foregoing formula (7), a mapping order of bits is (from high to low): a frequency-domain basis vector and a basis vector pair.

For the foregoing formula (8), a mapping order of bits is (from high to low): a basis vector pair and a frequency-domain basis vector.

For the foregoing formula (9), a mapping order of bits depends on a sum of a function value related to the basis vector pair index s and a function value related to the spatial-domain basis vector index i. In one manner, a bit having a smaller sum has a higher priority.

For the foregoing formula (10), a mapping order of bits depends on a sum of a function value related to the basis vector pair index s and a function value related to the Doppler-domain basis vector index q. In one manner, a bit having a smaller sum has a higher priority.

For the foregoing formula (11), a mapping order of bits depends on a sum of a function value related to the basis vector pair index s and a function value related to the frequency-domain basis vector index f. In one manner, a bit having a smaller sum has a higher priority.

In the foregoing formulas, for bits with only different spatial-domain basis vector indexes or sequence numbers, a second value of a bit with a smaller spatial-domain basis vector sequence number or index or a smaller function value $a(i)$ of the spatial-domain basis vector is smaller. For bits with only different frequency-domain basis vector indexes or sequence numbers, a second value of a bit with a smaller frequency-domain basis vector sequence number or index or a smaller function value $\pi(f)$ of the frequency-domain basis vector is smaller. For bits with only different Doppler-domain basis vector indexes or sequence numbers, a second value of a bit with a smaller Doppler-domain basis vector sequence number or index or a smaller function value b(q) of the Doppler-domain basis vector is smaller.

For formulas (9) to (11), the second value may be the same. For bits whose second values are the same, coefficient priorities of the bits are determined based on at least one of the following:

(1) a priority of a bit whose associated spatial-domain basis vector sequence number or basis vector index is small is high;
(2) a priority of a bit whose associated frequency-domain basis vector sequence number or basis vector index is small is high; and
(3) a priority of a bit whose associated Doppler-domain basis vector sequence number or basis vector index is small is high.

In another embodiment, in a case that two stages or two non-zero combination coefficient indication bitmaps are fed back, it is assumed that Group 2 includes X low-priority combination coefficients. In this case, feedback can be performed in the following Manner 1 or Manner 2.

Manner 1: Group 1 includes all of the first one of two non-zero combination coefficient indication bitmaps (bitmap), and S*Q-X2 or S*M-X2 or S*2L-X2 or v*S*Q-X2 or v*S*M-X2 or v*S*2L-X2 high-priority bits in the second non-zero combination coefficient bitmap. Group 2 includes X low-priority bits in the second non-zero combination coefficient bitmap.

Manner 2: Group 1 includes 2L*M-X or Q*M-X or 2L*Q-X high-priority bits in the first stage, and S*Q-X2 or S*M-X2 or S*2L-X2 or v*S*Q-X2 or v*S*M-X2 or v*S*2L-X2 high-priority bits in the second-stage bitmap. Group2 includes X low-priority bits in the first stage and X low-priority bits in the second stage.

In still another embodiment, in a case that one or Q non-zero coefficient indication bitmaps are fed back, it is assumed that a network-side device configures rank=1 transmission for a terminal, and configures the terminal to select L spatial-domain basis vectors (L in total in two polarizations, and the two polarizations have a same spatial-domain basis vector), M frequency-domain basis vectors, and Q Doppler-domain basis vectors. The terminal obtains these basis vectors and L*M*Q combination coefficients based on an estimated channel, where the combination coefficients include $K_{nz}$ non-zero combination coefficients. For the L*M*Q combination coefficients, each combination coefficient is associated with at least one of the following information:

(a) a spatial-domain basis vector sequence number or basis vector index;
(b) a frequency-domain basis vector sequence number or basis vector index;
(c) a Doppler-domain basis vector sequence number or basis vector index; and
(d) an associated layer sequence number or layer index.

The terminal determines a fourth value Pri(l, i, f) or Pri(l, i, f, q) of each combination coefficient based on at least one of the following formulas.

(1)

$$\text{Pri}(l, i, f) = L * v * \pi(f) + v * a(i) + l$$

(2)

$$\text{Pri}(l, i, f, q) = L * v * M * b(q) + L * v * \pi(f) + v * a(i) + l$$

(3)

$$\text{Pri}(l, i, f, q) = L * v * N_3 * b(q) + L * v * \pi(f) + v * a(i) + l$$

(4)

$$\text{Pri}(l, i, f, q) = L * v * Q * \pi(f) + L * v * b(q) + v * a(i) + l$$

(5)

$$\text{Pri}(l, i, f, q) = L * v * N_4 * \pi(f) + L * v * b(q) + v * a(i) + l$$

(6)

$$\text{Pri}(l, i, f, q) = L * v * Q * \pi(f) + Q * v * a(i) + v * b(q) + l$$

(7)

$$\text{Pri}(l, i, f, q) = L * v * N_4 * \pi(f) + N_4 * v * a(i) + v * b(q) + l$$

(8)

$$Pri(l, i, f, q) = L * v * Q * \pi(f) + Q * v * a(i) + Q * l + b(q)$$

(9)

$$Pri(l, i, f, q) = L * v * N_4 * \pi(f) + N_4 * v * a(i) + N_4 * l + b(q)$$

Herein, $f$ = 0,1, ... , $M$ - 1 represents a frequency-domain basis vector index, and M represents a quantity of frequency-domain basis vectors selected by the terminal in a rank v. $l$ = 0,1, ... , $v$ - 1 represents a layer sequence number or index, and v represents a transmission rank. $i$ = 0,1, ... , $L$ - 1 represents a spatial-domain basis vector index, and L represents a quantity (including two polarization directions) of spatial-domain basis vectors selected by the terminal. q = 0,1, ... , $Q$ - 1 represents a Doppler-domain basis vector index, and Q represents a quantity of frequency-domain basis vectors selected by the terminal in the rank v.

Herein, $\pi(f)$ represents a function value related to the frequency-domain basis vector index f, $a(i)$ represents a function value related to the spatial-domain basis vector index, and b($q$) represents a function value related to the Doppler-domain basis vector index.

A combination coefficient whose fourth value is smaller has a higher priority, and is preferentially mapped to a CSI report or a UCI sequence.

For the foregoing formula (1), the fourth value in the formula is not related to a Doppler basis vector index. Therefore, a fourth value of a combination coefficient associated with each Doppler basis vector is independently calculated. The combination coefficient associated with each Doppler basis vector is independently mapped to Part2 of the CSI report, and a mapping order is related to a Doppler basis vector sequence number or index, for example, a mapping priority of a combination coefficient associated with a Doppler basis vector with a small Doppler basis vector sequence number or index is high. In addition, for the foregoing formula (1), a mapping order of combination coefficients is (from high to low): a layer, a spatial-domain basis vector, and a frequency-domain basis vector. That is, it is assumed that v=L=M=Q=2. A combination coefficient whose fourth value is the smallest is a combination coefficient of $l$ = 0, $a(i)$ = 0, $\pi(f)$ = 0, followed by a combination coefficient of $l$ = 1, $a(i)$ = 0, $\pi(f)$ = 0, a combination coefficient of $l$ = 0, $a(i)$ = 1, $\pi(f)$ = 0, a combination coefficient of $l$ = 1, $a(i)$ = 1, $\pi(f)$ = 0, a combination coefficient of $l$ = 0, $a(i)$ = 0, $\pi(f)$ = 1, a combination coefficient of $l$ = 1, $a(i)$ = 0, $\pi(f)$ = 1 , a combination coefficient of $l$ = 0, $a(i)$ = 1, $\pi(f)$ = 1, and a combination coefficient of $l$ = 1, $a(i)$ = 1, $\pi(f)$ = 1.

For the foregoing formulas (2) and (3), a mapping order of combination coefficients is (from high to low): a layer, a spatial-domain basis vector, a frequency-domain basis vector, and a Doppler-domain basis vector.

For the foregoing formulas (4) and (5), a mapping order of combination coefficients is (from high to low): a layer, a spatial-domain basis vector, a Doppler-domain basis vector, and a frequency-domain basis vector.

For the foregoing formulas (6) and (7), a mapping order of combination coefficients is (from high to low): a layer, a Doppler-domain basis vector, a spatial-domain basis vector, and a frequency-domain basis vector.

For the foregoing formulas (8) and (9), a mapping order of combination coefficients is (from high to low): a Doppler-domain basis vector, a layer, a spatial-domain basis vector, and a frequency-domain basis vector.

In the foregoing formulas, for combination coefficients with only different layer indexes or layer sequence numbers, a fourth value of a combination coefficient with a smaller layer index or layer sequence number is smaller. For combination coefficients with only different spatial-domain basis vector indexes or sequence numbers, a fourth value of a combination coefficient with a smaller spatial-domain basis vector sequence number or index or a smaller function value $a(i)$ of the spatial-domain basis vector is smaller. For combination coefficients with only different frequency-domain basis vector indexes or sequence numbers, a fourth value of a combination coefficient with a smaller frequency-domain basis vector sequence number or index or a smaller function value $\pi(f)$ of the frequency-domain basis vector is smaller. For combination coefficients with only different Doppler-domain basis vector indexes or sequence numbers, a fourth value of a combination coefficient with a smaller Doppler-domain basis vector sequence number or index or a smaller function value b($q$) of the Doppler-domain basis vector is smaller.

In still another embodiment, in a case that one or Q non-zero coefficient indication bitmaps are fed back, feedback can be performed in the following Manner 1 or Manner 2.

Manner 1: A fourth value associated with a combination coefficient coeff is determined by calculating a sum of distances from {a spatial-domain basis vector sequence number or index, a frequency-domain basis vector sequence number or index, and a Doppler-domain basis vector sequence number or index} associated with the combination coefficient to a strongest combination coefficient (SCI) or {a spatial-domain basis vector sequence number or index, a frequency-domain basis vector sequence number or index, and a Doppler-domain basis vector sequence number or index} associated with a reference combination coefficient, and a layer index. For example, Pri ($l$, $i$, $f$, $q$)=$\pi$(f)+b(q)+a(i)+l,

where $\pi(f) = min\left(\left|n_{3,l}^{(f)} - n_{3,l,ref}^{(f)}\right|, N_3 - \left|n_{3,l}^{(f)} - n_{3,l,ref}^{(f)}\right|\right)$ represents a distance from a frequency-domain basis vector sequence number $n_{3,l}^{(f)}$ associated with a combination coefficient coeff to a strongest combination coefficient (SCI) or a frequency-domain basis vector sequence number $n_{3,l,ref}^{(f)}$ associated with a reference combination coefficient; $a(i) = min(|i - i_{ref}|, L_i - |i - i_{ref}|)$ represents a distance from a spatial-domain basis vector index $i$ associated with the combination coefficient coeff to the strongest combination coefficient (SCI) associated with the combination coefficient coeff or a spatial-domain basis vector index $i_{ref}$ associated with the reference combination coefficient (a value range of i is from 0 to a quantity $L_i$ of spatial-domain basis vectors associated with a polarization associated with the combination coefficient coeff minus 1);

$$\mathrm{b}(q) = min(|n_{4,l}^{(q)} - n_{4,l,ref}^{(q)}|, N_4 - |n_{4,l}^{(q)} - n_{4,l,ref}^{(q)}|)$$ represents a distance from a Doppler-domain basis vector sequence number $n_{4,l}^{(q)}$ associated with the combination coefficient coeff to the strongest combination coefficient (SCI) or a frequency-domain basis vector sequence number $n_{4,l,ref}^{(q)}$ associated with the reference combination coefficient; $N_3$ represents a quantity of frequency-domain basis vectors; $L_i$ represents a quantity of spatial-domain basis vectors in one polarization direction; and $N_4$ represents a quantity of Doppler-domain basis vectors.

Manner 2: A fourth value associated with a combination coefficient is determined by calculating a sum of distances from {a frequency-domain basis vector sequence number or index and a Doppler-domain basis vector sequence number or index} associated with the combination coefficient to a strongest combination coefficient (SCI) or {a frequency-domain basis vector sequence number or index and a Doppler-domain basis vector sequence number or index} associated with a reference combination coefficient, a spatial-domain basis vector sequence number or index, and a layer index. For example, Pri (1, i, f, q)=L*v*c(f, q)+v*a(i)+1, where c(f, q) = $\pi(f)$ + b(q) ;

$$\pi(f) = min\left(\left|n_{3,l}^{(f)} - n_{3,l,ref}^{(f)}\right|, N_3 - \left|n_{3,l}^{(f)} - n_{3,l,ref}^{(f)}\right|\right)$$ represents a distance from a frequency-domain basis vector sequence number $n_{3,l}^{(f)}$ associated with a combination coefficient coeff to a strongest combination coefficient (SCI) or a frequency-domain basis vector sequence number $n_{3,l,ref}^{(f)}$ associated with a reference

combination coefficient; $\mathrm{b}(q) = min(|n_{4,l}^{(q)} - n_{4,l,ref}^{(q)}|, N_4 - |n_{4,l}^{(q)} - n_{4,l,ref}^{(q)}|)$ represents a distance

from a Doppler-domain basis vector sequence number $n_{4,l}^{(q)}$ associated with the combination coefficient coeff to the strongest combination coefficient (SCI) or a frequency-domain basis vector sequence number $n_{4,l,ref}^{(q)}$ associated with the reference combination coefficient; $N_3$ represents a quantity of frequency-domain basis vectors; and $N_4$ represents a quantity of Doppler-domain basis vectors.

In the foregoing manner of obtaining the fourth value, if a plurality of combination coefficients with a same fourth value appear, for combination coefficients or non-zero combination coefficients with a same fourth value, a coefficient priority is determined based on at least one of the following:

(a) a priority of a combination coefficient whose associated spatial-domain basis vector sequence number or basis vector index is small is high;
(a) a priority of a combination coefficient whose associated frequency-domain basis vector sequence number or basis vector index is small is high;
(b) a priority of a combination coefficient whose associated Doppler-domain basis vector sequence number or basis vector index is small is high;
(c) a priority of a combination coefficient whose associated layer sequence number or layer index is small is high; and
(d) a priority of a combination coefficient whose associated fifth value is large or small is high.

The fifth value can be obtained based on at least one of the following:

(1) the spatial-domain basis vector sequence number or basis vector index associated with the combination coefficient;
(2) the frequency-domain basis vector sequence number or basis vector index associated with the combination coefficient;

(3) the Doppler-domain basis vector sequence number or basis vector index associated with the combination coefficient; and

(4) a layer sequence number or layer index associated with the combination coefficient.

For example, the fifth value is $L * v * N_3 * q + L * v * n_{3,l}^{(f)} + v * i + l$ . $l = 0,1, ... , v$ - 1 represents a layer sequence number or index, and v represents a transmission rank. $i = 0,1, ... , L$ - 1 represents a spatial-domain basis vector index, and L represents a quantity of spatial-domain basis vectors selected by the terminal (which may be a sum of quantities of spatial-domain basis vectors in two polarization directions, or may be a quantity of spatial-domain basis vectors in one polarization direction). q = 0,1, ... , $Q$ - 1 represents a Doppler-domain basis vector index.

After a priority sequence of non-zero combination coefficients is determined by using the foregoing method (determined based on the fourth value and/or the fifth value and/or a set rule), amplitude indications associated with all the non-zero combination coefficients and phase indications associated with all the non-zero combination coefficients are mapped to part2 of the CSI report. For example, network higher layer signaling or a MAC CE configures a parameter d, an amplitude indication associated with a non-zero combination coefficient whose fourth value is less than or equal to d, and a phase indication associated with the non-zero combination coefficient are mapped to Group 1 in part2 of the CSI report; and an amplitude indication associated with a non-zero combination coefficient whose distance is greater than d, and a phase indication associated with the non-zero combination coefficient are mapped to Group 2 in part2 of the CSI report. The mapping order is based on priorities of combination coefficients in descending order.

After the priority sequence of the non-zero combination coefficients is determined by using the foregoing method (determined based on the fourth value and/or the fifth value and/or the set rule), a non-zero combination coefficient indication (NZC bitmap) is mapped to part2 of the CSI report. For example, $v2LM_v - \left\lfloor \frac{K^{NZ}}{2} \right\rfloor$ bits with higher priorities are placed in Group1. It is important herein that a combination coefficient associated with each bit in the NZC bitmap is the same as a priority of the combination coefficient. For another example, a base station configures a distance d, a bit whose distance is less than or equal to d is placed in Group 1, and a bit whose distance is greater than d is placed in Group 2. In this case, a specific quantity of bits whose distances are greater than d in Q*2L*M bits needs to be calculated in mapping of the NZC bitmap. It is assumed that Group 2 includes X non-zero combination coefficients. In this case, the bitmap in Group 1 needs to include at least v*2L*M*Q-X bits. In this way, the base station can flexibly configure division into Group 1 and Group 2.

According to the technical solutions provided in embodiments of this application, non-zero combination coefficient indication manners are determined, so that an appropriate indication manner can be selected as far as possible, to implement maximum reduction of feedback overheads. In a case of two non-zero coefficient indication bitmaps, a mapping method for each non-zero coefficient indication bitmap is determined, so that the two non-zero coefficient indication bitmaps can work better. In addition, in embodiments of this application, a priority calculation formula of a PMI combination coefficient is enhanced, so that priorities of a plurality of Doppler-domain basis vectors are reflected, and a problem that a coefficient priority cannot work after a Doppler-domain basis vector is introduced is avoided. In embodiments of this application, it is defined that all non-zero combination coefficients are mapped to Group1 in Part2 of the CSI, to avoid a case that a strong non-zero combination coefficient falls into Group2 in Part2 of the CSI when a small quantity of non-zero combination coefficients exist.

The PMI combination coefficient feedback apparatus method provided in embodiments of this application can be performed by a PMI combination coefficient feedback apparatus. In embodiments of this application, an example in which the PMI combination coefficient feedback apparatus performs the PMI combination coefficient feedback method is used to describe the PMI combination coefficient feedback apparatus provided in embodiments of this application.

FIG. 4 is a schematic diagram of a structure of a PMI combination coefficient feedback apparatus according to an embodiment of this application. As shown in FIG. 4, the apparatus 400 mainly includes a determining module 401 and/or a sending module 402.

In this embodiment of this application, the determining module 401 is configured to determine a target non-zero combination coefficient indication manner used to feed back a PMI combination coefficient; and the sending module 402 is configured to send a parameter related to a target PMI combination coefficient, where the parameter related to the target PMI combination coefficient includes at least one of the following:

a non-zero combination coefficient indication bitmap, indicating positions of all non-zero combination coefficients;

a non-zero combination coefficient amplitude indication, indicating amplitudes of all the non-zero combination coefficients; and

a non-zero combination coefficient phase indication, indicating phases of all the non-zero combination coefficients.

In an optional implementation, the target non-zero combination coefficient indication manner includes:

feeding back two non-zero combination coefficient indication bitmaps, where the first one of two non-zero combination coefficient indication bitmaps indicates positions of S basis vector pairs selected for all transport layers and fed back by a terminal, the second one of two non-zero combination coefficient indication bitmaps indicates a position of a non-zero combination coefficient at each transport layer, and S is an integer greater than 0.

In an optional implementation, determining the target non-zero combination coefficient indication manner used to feed back the PMI combination coefficient includes at least one of the following:

The terminal determines the target non-zero combination coefficient indication manner based on a non-zero combination coefficient indication manner indicated by higher layer signaling.

The terminal determines the target non-zero combination coefficient indication manner based on a first target parameter, where the first target parameter includes at least one of the following: a quantity of spatial-domain basis vectors selected by the terminal or configured by a network-side device, a quantity of frequency-domain basis vectors selected by the terminal or configured by the network-side device, a quantity of Doppler-domain basis vectors selected by the terminal or configured by the network-side device, and a first scaling factor.

The terminal obtains, based on an association relationship that is between a first PMI parameter configuration and a non-zero combination coefficient indication manner and that is stipulated in a protocol or a determining manner that is of the first PMI parameter configuration and the non-zero combination coefficient indication manner and that is stipulated in the protocol, the target non-zero combination coefficient indication manner associated with the first PMI parameter configuration, where the first PMI parameter configuration is one of the following: a PMI parameter configuration configured by the network-side device by using the higher layer signaling, and a PMI parameter configuration selected by the terminal, where a part of parameters in the first PMI parameter configuration are configured by the network-side device by using the higher layer signaling, and the other part of parameters are PMI parameters selected by the terminal.

In an optional implementation, the determining module 401 is further configured to obtain a second PMI parameter configuration configured by the network-side device by using the higher layer signaling, where the second PMI parameter configuration includes the first target parameter.

In an optional implementation, determining the target non-zero combination coefficient indication manner based on the first target parameter includes:

in a case that a first condition is met, determining that the target non-zero combination coefficient indication manner is feeding back two non-zero combination coefficient indication bitmaps, where the first one of two non-zero combination coefficient indication bitmaps indicates S frequency domain-Doppler domain basis vector pairs selected by the terminal, the second one of two non-zero combination coefficient indication bitmaps indicates a position of a non-zero combination coefficient, and the first condition includes at least one of the following: a first target value is less than or equal to 0, M is less than or equal to L, and Q is less than or equal to L, where the first target value is one of the following: L*Beta+1-L, v*L*Beta+1-v*L, Q*M+L*S-Q*L*M, and Q*M+L*S*v-Q*L*M*v;

in a case that a second condition is met, determining that the target non-zero combination coefficient indication manner is feeding back two non-zero combination coefficient indication bitmaps, where the first one of two non-zero combination coefficient indication bitmaps indicates S spatial domain-Doppler domain basis vector pairs selected by the terminal, the second one of two non-zero combination coefficient indication bitmaps indicates a position of a non-zero combination coefficient, and the second condition includes at least one of the following: a second target value is less than or equal to 0, M is greater than or equal to Q, and M is greater than or equal to L, where the second target value is one of the following: M*Beta+1-M, v*M*Beta+1-v*M, L*Q+M*S-Q*L*M, and L*Q+M*S*v-Q*L*M*v;

in a case that a third condition is met, determining that the target non-zero combination coefficient indication manner is feeding back two non-zero combination coefficient indication bitmaps, where the first one of two non-zero combination coefficient indication bitmaps indicates S spatial domain-frequency domain basis vector pairs selected by the terminal, the second one of two non-zero combination coefficient indication bitmaps indicates a position of a non-zero combination coefficient, and the third condition includes at least one of the following: a third target value is less than or equal to 0, Q is less than or equal to M, and Q is greater than or equal to L, where the third target value is one of the following: Q*Beta+1-Q, v*Q*Beta+1-v*Q, L*M+Q*S-Q*L*M, and L*M+Q*S*v-Q*L*M*v; or

in a case that any one of the first condition, the second condition, or the third condition is not met, determining that the target non-zero combination coefficient indication manner is: feeding back Q non-zero combination coefficient indication bitmaps, where each non-zero combination coefficient indication bitmap is associated with one selected Doppler basis vector; or feeding back one non-zero combination coefficient indication bitmap, where the non-zero combination coefficient indication bitmap is associated with Q Doppler basis vectors.

L represents the quantity of spatial-domain basis vectors selected by the terminal or configured by the network-side device, M represents the quantity of frequency-domain basis vectors selected by the terminal or configured by the network-side device, Q represents the quantity of Doppler-domain basis vectors selected by the terminal or configured by the network-side device, Beta represents the first scaling factor, the first scaling factor is selected by the terminal or configured by the network-side device, and S represents a quantity of basis vector pairs selected by the terminal.

In an optional implementation, the first scaling factor is used to determine a maximum quantity or quantity of one of the following selected by the terminal: spatial domain-Doppler domain basis vector pairs, spatial domain-frequency domain basis vector pairs, and frequency domain-Doppler domain basis vector pairs.

In an optional implementation, the first scaling factor is further used to determine a maximum quantity or quantity of non-zero combination coefficients fed back by the terminal.

In an optional implementation, the sending module 402 is further configured to indicate, in a first part of a channel state information CSI report, a quantity of bits that are in the first one of two non-zero combination coefficient indication bitmaps and whose values are a preset value.

In an optional implementation, the sending module 402 is further configured to indicate the target non-zero combination coefficient indication manner by using a first part of a CSI report.

In an optional implementation, indicating the target non-zero combination coefficient indication manner by using the first part of the CSI report includes one of the following:

carrying identification information of the target non-zero combination coefficient indication manner in the first part of the CSI report;

indicating a first target quantity of non-zero combination coefficients in the first part of the CSI report, where the first target quantity is a specified quantity corresponding to the target non-zero combination coefficient indication manner; and

indicating, in the first part of the CSI report, a second target quantity of bits that are in the first one of two non-zero combination coefficient indication bitmaps in the two fed-back non-zero combination coefficient indication bitmaps and whose values are a preset value, where the second target quantity is the specified quantity corresponding to the target non-zero combination coefficient indication manner.

In an optional implementation, sending the parameter related to the target PMI combination coefficient includes one of the following:

in a case that the two non-zero combination coefficient indication bitmaps are fed back, mapping the first one of two non-zero combination coefficient indication bitmaps to a group 1 in a second part of the CSI report for sending, and mapping the second one of two non-zero combination coefficient indication bitmaps to the group 1 and a group 2 in the second part of the CSI report for sending; or

in a case that the two non-zero combination coefficient indication bitmaps are fed back, mapping the first one of two non-zero combination coefficient indication bitmaps to a group 1 and a group 2 in a second part of the CSI report for sending, and mapping the second one of two non-zero combination coefficient indication bitmaps to the group 1 and the group 2 in the second part of the CSI report for sending.

In an optional implementation, the mapping the first one of two non-zero combination coefficient indication bitmaps to a group 1 in a second part of the CSI report for sending includes:

determining a first value associated with each bit in the first one of two non-zero combination coefficient indication bitmaps;

determining a mapping order of each bit in the first one of two non-zero combination coefficient indication bitmaps based on the first value associated with each bit; and

mapping, based on the mapping order, each bit in the first one of two non-zero combination coefficient indication bitmaps to the group 1 in the second part of the CSI report for sending.

In an optional implementation, the mapping the first one of two non-zero combination coefficient indication bitmaps to a group 1 and a group 2 in a second part of the CSI report for sending includes:

determining a first value associated with each bit in the first one of two non-zero combination coefficient indication bitmaps;

determining a mapping order of each bit in the first one of two non-zero combination coefficient indication bitmaps based on the first value associated with each bit; and

dividing the first one of two non-zero combination coefficient indication bitmaps into a first sub-bitmap and a second sub-bitmap based on the mapping order, mapping the first sub-bitmap to the group 1 in the second part of the CSI report for sending, and mapping the second sub-bitmap to the group 2 in the second part of the CSI report for sending.

In an optional implementation, a quantity of bits included in the first sub-bitmap is one of the following:

$$L*Q–X1;$$

$$L*M–X1;$$

$$M*Q–X1;$$

$$V*L*Q–X1;$$

$$V*L*M–X1;$$

and

$$V*M*Q–X1.$$

Herein, L represents the quantity of spatial-domain basis vectors selected by the terminal or configured by the network-side device, M represents the quantity of frequency-domain basis vectors selected by the terminal or configured by the network-side device, Q represents the quantity of Doppler-domain basis vectors selected by the terminal or configured by the network-side device, v is the transmission rank, X1 is an integer greater than 0, and X1 is obtained based on one of the following: a default rule, an indication of the network-side device, and terminal determining.

In an optional implementation, a first value associated with any bit in the first one of two non-zero combination coefficient indication bitmaps is determined based on at least one of the following:

a spatial-domain basis vector sequence number associated with a combination coefficient corresponding to the bit;
a spatial-domain basis vector index associated with the combination coefficient corresponding to the bit;
a frequency-domain basis vector sequence number associated with the combination coefficient corresponding to the bit;
a frequency-domain basis vector index associated with the combination coefficient corresponding to the bit;
a Doppler-domain basis vector sequence number associated with the combination coefficient corresponding to the bit;
a Doppler-domain basis vector index associated with the combination coefficient corresponding to the bit;
a layer sequence number associated with the combination coefficient corresponding to the bit;
a layer index associated with the combination coefficient corresponding to the bit;
a spatial-domain basis vector index associated with a strongest coefficient;
a spatial-domain basis vector sequence number associated with the strongest coefficient;
a frequency-domain basis vector sequence number associated with the strongest coefficient;
a frequency-domain basis vector index associated with the strongest coefficient;
a Doppler-domain basis vector sequence number associated with the strongest coefficient; and
a Doppler-domain basis vector index associated with the strongest coefficient.

In an optional implementation, a first value associated with any bit in the first one of two non-zero combination coefficient indication bitmaps is determined based on at least one of the following:

determining the first value associated with the bit based on the transmission rank, the quantity of spatial-domain basis vectors selected by the terminal or configured by the network-side device, a function value of a frequency-domain basis vector index of a combination coefficient corresponding to the bit, a function value of a spatial-domain basis vector index of the combination coefficient corresponding to the bit, and a transport layer at which the combination coefficient corresponding to the bit is located;
determining the first value associated with the bit based on the transmission rank, the quantity of spatial-domain basis vectors selected by the terminal or configured by the network-side device, a function value of a Doppler-domain basis vector index of the combination coefficient corresponding to the bit, the function value of spatial-domain basis vector index of the combination coefficient corresponding to the bit, and the transport layer at which the combination coefficient corresponding to the bit is located;
determining the first value associated with the bit based on the transmission rank, the quantity of Doppler-domain basis vectors selected by the terminal or configured by the network-side device in the transmission rank, the function value of the spatial-domain basis vector index of the combination coefficient corresponding to the bit, the function value of the Doppler-domain basis vector index of the combination coefficient corresponding to the bit, and the transport layer at which the combination coefficient corresponding to the bit is located;

determining the first value associated with the bit based on the transmission rank, a quantity of time domain units configured by the network-side device, the function value of the spatial-domain basis vector index of the combination coefficient corresponding to the bit, the function value of the Doppler-domain basis vector index of the combination coefficient corresponding to the bit, and the transport layer at which the combination coefficient corresponding to the bit is located;

determining the first value associated with the bit based on the transmission rank, a quantity of frequency domain units configured by the network-side device, the function value of the Doppler-domain basis vector index of the combination coefficient corresponding to the bit, the function value of the frequency-domain basis vector index of the combination coefficient corresponding to the bit, and the transport layer at which the combination coefficient corresponding to the bit is located;

determining the first value associated with the bit based on the transmission rank, a quantity of frequency-domain vectors selected by the terminal or configured by the network-side device in the transmission rank, the function value of the Doppler-domain basis vector index of the combination coefficient corresponding to the bit, the function value of the frequency-domain basis vector index of the combination coefficient corresponding to the bit, and the transport layer at which the combination coefficient corresponding to the bit is located;

determining the first value associated with the bit based on the transmission rank, the quantity of time domain units configured by the network-side device, the function value of the frequency-domain basis vector index of the combination coefficient corresponding to the bit, the function value of the Doppler-domain basis vector index of the combination coefficient corresponding to the bit, and the transport layer at which the combination coefficient corresponding to the bit is located;

determining the first value associated with the bit based on the transmission rank, the quantity of Doppler-domain basis vectors selected by the terminal or configured by the network-side device in the transmission rank, the function value of the frequency-domain basis vector index of the combination coefficient corresponding to the bit, the function value of the Doppler-domain basis vector index of the combination coefficient corresponding to the bit, and the transport layer at which the combination coefficient corresponding to the bit is located;

determining the first value associated with the bit based on the function value of the frequency-domain basis vector index of the combination coefficient corresponding to the bit, the function value of the spatial-domain basis vector index of the combination coefficient corresponding to the bit, and the transport layer at which the combination coefficient corresponding to the bit is located;

determining the first value associated with the bit based on the function value of the Doppler-domain basis vector index of the combination coefficient corresponding to the bit, the function value of the spatial-domain basis vector index of the combination coefficient corresponding to the bit, and the transport layer at which the combination coefficient corresponding to the bit is located;

determining the first value associated with the bit based on the function value of the frequency-domain basis vector index of the combination coefficient corresponding to the bit, the function value of the Doppler-domain basis vector index of the combination coefficient corresponding to the bit, and the transport layer at which the combination coefficient corresponding to the bit is located;

determining the first value associated with the bit based on the transmission rank, the function value of the frequency-domain basis vector index of the combination coefficient corresponding to the bit, the function value of the spatial-domain basis vector index of the combination coefficient corresponding to the bit, and the transport layer at which the combination coefficient corresponding to the bit is located;

determining the first value associated with the bit based on the transmission rank, the function value of the Doppler-domain basis vector index of the combination coefficient corresponding to the bit, the function value of the spatial-domain basis vector index of the combination coefficient corresponding to the bit, and the transport layer at which the combination coefficient corresponding to the bit is located;

determining the first value associated with the bit based on the transmission rank, the function value of the frequency-domain basis vector index of the combination coefficient corresponding to the bit, the function value of the Doppler-domain basis vector index of the combination coefficient corresponding to the bit, and the transport layer at which the combination coefficient corresponding to the bit is located;

determining the first value associated with the bit based on the quantity of spatial-domain basis vectors selected by the terminal or configured by the network-side device, the function value of the frequency-domain basis vector index of the combination coefficient corresponding to the bit, and the function value of the spatial-domain basis vector index of the combination coefficient corresponding to the bit;

determining the first value associated with the bit based on the quantity of spatial-domain basis vectors selected by the terminal or configured by the network-side device, the function value of the Doppler-domain basis vector index of the combination coefficient corresponding to the bit, and the function value of the spatial-domain basis vector index of the combination coefficient corresponding to the bit;

determining the first value associated with the bit based on the quantity of frequency-domain basis vectors selected by the terminal or configured by the network-side device in the transmission rank, the function value of the spatial-domain basis vector index of the combination coefficient corresponding to the bit, and the function value of the Doppler-domain basis vector index of the combination coefficient corresponding to the bit;

determining the first value associated with the bit based on the quantity of time domain units configured by the network-side device, the function value of the spatial-domain basis vector index of the combination coefficient corresponding to the bit, and the function value of the Doppler-domain basis vector index of the combination coefficient corresponding to the bit;

determining the first value associated with the bit based on the quantity of frequency domain units configured by the network-side device, the function value of the Doppler-domain basis vector index of the combination coefficient corresponding to the bit, and the function value of the spatial-domain basis vector index of the combination coefficient corresponding to the bit;

determining the first value associated with the bit based on the quantity of frequency-domain basis vectors selected by the terminal or configured by the network-side device in the transmission rank, the Doppler-domain basis vector index of the combination coefficient corresponding to the bit, and the spatial-domain basis vector index of the combination coefficient corresponding to the bit;

determining the first value associated with the bit based on the quantity of time domain units configured by the network-side device, the function value of the frequency-domain basis vector index of the combination coefficient corresponding to the bit, and the function value of the Doppler-domain basis vector index of the combination coefficient corresponding to the bit;

determining the first value associated with the bit based on the quantity of Doppler-domain basis vectors selected by the terminal or configured by the network-side device in the transmission rank, the function value of the frequency-domain basis vector index of the combination coefficient corresponding to the bit, and the function value of the Doppler-domain basis vector index of the combination coefficient corresponding to the bit;

determining the first value associated with the bit based on the function value of the frequency-domain basis vector index of the combination coefficient corresponding to the bit and the function value of the spatial-domain basis vector index of the combination coefficient corresponding to the bit;

determining the first value associated with the bit based on the function value of the Doppler-domain basis vector index of the combination coefficient corresponding to the bit and the function value of the spatial-domain basis vector index of the combination coefficient corresponding to the bit; and

determining the first value associated with the bit based on the function value of the frequency-domain basis vector index of the combination coefficient corresponding to the bit and the function value of the Doppler-domain basis vector index of the combination coefficient corresponding to the bit.

In an optional implementation, the determining a mapping order of each bit in the first one of two non-zero combination coefficient indication bitmaps based on the first value associated with each bit includes:

for a plurality of bits whose first values are the same, determining a mapping order of each of the plurality of bits based on at least one of the following:

a bit whose corresponding combination coefficient is associated with a small spatial-domain basis vector sequence number or spatial-domain basis vector index is preferentially mapped;

a bit whose corresponding combination coefficient is associated with a small frequency-domain basis vector sequence number or frequency-domain basis vector index is preferentially mapped;

a bit whose corresponding combination coefficient is associated with a small Doppler-domain basis vector sequence number or Doppler-domain basis vector index is preferentially mapped; and

a bit whose corresponding combination coefficient is associated with a small layer sequence number or layer index is preferentially mapped.

In an optional implementation, the mapping the second one of two non-zero combination coefficient indication bitmaps to the group 1 and the group 2 in the second part of the CSI report for sending includes:

determining a second value associated with each bit in the second one of two non-zero combination coefficient indication bitmaps;

determining a mapping order of each bit in the second one of two non-zero combination coefficient indication bitmaps based on the second value associated with each bit;

dividing the second one of two non-zero combination coefficient indication bitmaps into a third sub-bitmap and a fourth sub-position based on the mapping order; and

mapping the third sub-bitmap to the group 1 in the second part of the CSI report for sending, and mapping the fourth sub-bitmap to the group 2 in the second part of the CSI report for sending.

In an optional implementation, a quantity of bits included in the third sub-bitmap is one of the following:

$$S*Q–X2;$$

$$S*M–X2;$$

$$S*L–X2;$$

$$V*S*Q–X2;$$

$$V*S*M–X2;$$

and

$$V*S*L–X2.$$

Herein, S is a quantity of basis vector pairs indicated by the first one of two non-zero combination coefficient indication bitmaps, L is the quantity of spatial-domain basis vectors selected by the terminal or configured by the network-side device, Q is the quantity of Doppler-domain basis vectors selected by the terminal or configured by the network-side device, M is the quantity of frequency-domain basis vectors selected by the terminal or configured by the network-side device, v is the transmission rank, X2 is an integer greater than 0, and X2 is obtained based on a default rule, indicated by the network-side device, or determined by the terminal.

In an optional implementation, that the apparatus determines X2 includes:
determining X2 by using one of the following:

a quantity of basis vector pairs indicated by the first one of two non-zero combination coefficient indication bitmaps included in the group 2 in the second part of the CSI report;
a quantity of basis vector pairs included in the first part of the CSI report; and
a quantity of non-zero combination coefficients included in the first part of the CSI report.

In an optional implementation, a second value associated with any bit in the second one of two non-zero combination coefficient indication bitmaps is determined based on at least one of the following:

a frequency domain-Doppler domain basis vector pair sequence number associated with a combination coefficient corresponding to the bit;
a frequency domain-Doppler domain basis vector pair index associated with the combination coefficient corresponding to the bit;
a spatial domain-Doppler domain basis vector pair sequence number associated with the combination coefficient corresponding to the bit;
a spatial domain-Doppler domain basis vector pair index associated with the combination coefficient corresponding to the bit;
a spatial domain-frequency domain basis vector pair sequence number associated with the combination coefficient corresponding to the bit;
a spatial domain-frequency domain basis vector pair index associated with the combination coefficient corresponding to the bit;
a spatial-domain basis vector sequence number associated with the combination coefficient corresponding to the bit;
a spatial-domain basis vector index associated with the combination coefficient corresponding to the bit;
a frequency-domain basis vector sequence number associated with the combination coefficient corresponding to the bit;
a frequency-domain basis vector index associated with the combination coefficient corresponding to the bit;
a Doppler-domain basis vector sequence number associated with the combination coefficient corresponding to the bit;

a Doppler-domain basis vector index associated with the combination coefficient corresponding to the bit;

a spatial-domain basis vector index associated with a strongest coefficient;

a spatial-domain basis vector sequence number associated with the strongest coefficient;

a frequency-domain basis vector sequence number associated with the strongest coefficient;

a frequency-domain basis vector index associated with the strongest coefficient;

a Doppler-domain basis vector sequence number associated with the strongest coefficient;

a Doppler-domain basis vector index associated with the strongest coefficient;

a layer sequence number associated with the combination coefficient corresponding to the bit; and

a layer index associated with the combination coefficient corresponding to the bit.

In an optional implementation, a second value associated with any bit in the second one of two non-zero combination coefficient indication bitmaps is obtained in one of the following manners:

determining the second value associated with the bit based on the quantity of spatial-domain basis vectors selected by the terminal or configured by the network-side device, a function value of a basis vector pair index associated with a combination coefficient corresponding to the bit, and a function value of a spatial-domain basis vector index associated with the combination coefficient corresponding to the bit;

determining the second value associated with the bit based on a quantity of basis vector pairs selected by the terminal or configured by the network-side device, the function value of the basis vector pair index associated with the combination coefficient corresponding to the bit, and the function value of the spatial-domain basis vector index associated with the combination coefficient corresponding to the bit;

determining the second value associated with the bit based on a quantity of Doppler-domain basis vectors selected by the terminal or configured by the network-side device in a current transmission rank, the function value of the basis vector pair index associated with the combination coefficient corresponding to the bit, and a function value of a Doppler-domain basis vector index associated with the combination coefficient corresponding to the bit;

determining the second value associated with the bit based on a quantity of time domain units configured by the network-side device, the function value of the basis vector pair index associated with the combination coefficient corresponding to the bit, and the function value of the Doppler-domain basis vector index associated with the combination coefficient corresponding to the bit;

determining the second value associated with the bit based on a quantity of basis vector pairs selected by the terminal or configured by the network-side device, the function value of the Doppler-domain basis vector index associated with the combination coefficient corresponding to the bit, and the function value of the basis vector pair index associated with the combination coefficient corresponding to the bit;

determining the second value associated with the bit based on a quantity of frequency domain units configured by the network-side device, the function value of the basis vector pair index associated with the combination coefficient corresponding to the bit, and a function value of a frequency-domain basis vector index associated with the combination coefficient corresponding to the bit;

determining the second value associated with the bit based on a quantity of frequency-domain basis vectors selected by the terminal or configured by the network-side device in the current transmission rank, the function value of the basis vector pair index associated with the combination coefficient corresponding to the bit, and the function value of the frequency-domain basis vector index associated with the combination coefficient corresponding to the bit;

determining the second value associated with the bit based on the quantity of basis vector pairs selected by the terminal or configured by the network-side device, the function value of the frequency-domain basis vector index associated with the combination coefficient corresponding to the bit, and the function value of the basis vector pair index associated with the combination coefficient corresponding to the bit;

determining the second value associated with the bit based on the function value of the basis vector pair index associated with the combination coefficient corresponding to the bit and the function value of the spatial-domain basis vector index associated with the combination coefficient corresponding to the bit;

determining the second value associated with the bit based on the function value of the Doppler-domain basis vector index associated with the combination coefficient corresponding to the bit and the function value of the basis vector pair index associated with the combination coefficient corresponding to the bit;

determining the second value associated with the bit based on the function value of the basis vector pair index associated with the combination coefficient corresponding to the bit and the function value of the frequency-domain basis vector index associated with the combination coefficient corresponding to the bit;

determining the second value associated with the bit based on a transmission rank, the quantity of spatial-domain basis vectors selected by the terminal or configured by the network-side device, the function value of the basis vector pair index associated with the combination coefficient corresponding to the bit, the function value of the spatial-domain basis vector index associated with the combination coefficient corresponding to the bit, and a transport layer at which the combination coefficient corresponding to the bit is located;

determining the second value associated with the bit based on the transmission rank, the quantity of basis vector pairs selected by the terminal or configured by the network-side device, the function value of the spatial-domain basis vector index associated with the combination coefficient corresponding to the bit, the function value of the basis vector pair index associated with the combination coefficient corresponding to the bit, and the transport layer at which the combination coefficient corresponding to the bit is located;

determining the second value associated with the bit based on the transmission rank, the quantity of Doppler-domain basis vectors selected by the terminal or configured by the network-side device in the transmission rank, the function value of the basis vector pair index associated with the combination coefficient corresponding to the bit, the function value of the Doppler-domain basis vector index associated with the combination coefficient corresponding to the bit, and the transport layer at which the combination coefficient corresponding to the bit is located;

determining the second value associated with the bit based on the transmission rank, the quantity of time domain units configured by the network-side device, the function value of the basis vector pair index associated with the combination coefficient corresponding to the bit, the function value of the Doppler-domain basis vector index associated with the combination coefficient corresponding to the bit, and the transport layer at which the combination coefficient corresponding to the bit is located;

determining the second value associated with the bit based on the transmission rank, the quantity of basis vector pairs selected by the terminal or configured by the network-side device, the function value of the Doppler-domain basis vector index associated with the combination coefficient corresponding to the bit, the function value of the basis vector pair index associated with the combination coefficient corresponding to the bit, and the transport layer at which the combination coefficient corresponding to the bit is located;

determining the second value associated with the bit based on the transmission rank, the quantity of frequency domain units configured by the network-side device, the function value of the basis vector pair index associated with the combination coefficient corresponding to the bit, the function value of the Doppler-domain basis vector index associated with the combination coefficient corresponding to the bit, and the transport layer at which the combination coefficient corresponding to the bit is located;

determining the second value associated with the bit based on the transmission rank, the quantity of frequency-domain basis vectors selected by the terminal or configured by the network-side device in the transmission rank, the function value of the basis vector pair index associated with the combination coefficient corresponding to the bit, the function value of the Doppler-domain basis vector index associated with the combination coefficient corresponding to the bit, and the transport layer at which the combination coefficient corresponding to the bit is located;

determining the second value associated with the bit based on the transmission rank, the quantity of basis vector pairs selected by the terminal or configured by the network-side device, the function value of the basis vector pair index associated with the combination coefficient corresponding to the bit, the function value of the frequency-domain basis vector index associated with the combination coefficient corresponding to the bit, and the transport layer at which the combination coefficient corresponding to the bit is located;

determining the second value associated with the bit based on the transmission rank, the quantity of spatial-domain basis vectors selected by the terminal or configured by the network-side device, the function value of the spatial-domain basis vector index associated with the combination coefficient corresponding to the bit, and the transport layer at which the combination coefficient corresponding to the bit is located;

determining the second value associated with the bit based on the transmission rank, the quantity of spatial-domain basis vectors selected by the terminal or configured by the network-side device, the function value of the Doppler-domain basis vector index associated with the combination coefficient corresponding to the bit, and the transport layer at which the combination coefficient corresponding to the bit is located; and

determining the second value associated with the bit based on the transmission rank, the quantity of spatial-domain basis vectors selected by the terminal or configured by the network-side device, the function value of the frequency-domain basis vector index associated with the combination coefficient corresponding to the bit, and the transport layer at which the combination coefficient corresponding to the bit is located.

The basis vector pair index includes one of a spatial domain-frequency domain basis vector pair index, a spatial domain-Doppler domain basis vector pair index, and a frequency domain-Doppler domain basis vector pair index.

In an optional implementation, sending the parameter related to the target PMI combination coefficient further includes:

mapping the non-zero combination coefficient amplitude indication and the non-zero combination coefficient phase indication to the group 1 and the group 2 in the second part of the CSI report for sending.

In an optional implementation, the mapping the non-zero combination coefficient amplitude indication and the non-zero combination coefficient phase indication to the group 1 and the group 2 in the second part of the CSI report for sending includes:

determining a third value associated with each non-zero combination coefficient;

determining a mapping order of each non-zero combination coefficient based on the third value associated with each non-zero combination coefficient;

dividing all non-zero combination coefficients into a first part of non-zero combination coefficients and a second part of non-zero combination coefficients based on the mapping order; and

mapping a non-zero coefficient amplitude indication of the first part of non-zero combination coefficients and a non-zero coefficient phase indication of the first part of non-zero combination coefficients to the group 1 in the second part of the CSI report for sending, and mapping a non-zero coefficient amplitude indication of the second part of non-zero combination coefficients and a non-zero coefficient phase indication of the second part of non-zero combination coefficients to the group 2 in the second part of the CSI report for sending.

In an optional implementation, a quantity of non-zero combination coefficients in the first part of non-zero combination coefficients is Knz-X3, where Knz is a quantity of all the non-zero combination coefficients, X3 is an integer greater than 0, and X3 is obtained based on a default rule, indicated by the network-side device, or determined by the terminal.

In an optional implementation, the third value is determined based on the second value.

In an optional implementation, sending the parameter related to the target PMI combination coefficient includes: in a case that one or Q non-zero combination coefficient indication bitmaps are fed back, mapping the one or Q non-zero combination coefficient indication bitmaps to a group 1 and a group 2 in a second part of the CSI report for sending, where Q is a quantity of Doppler-domain basis vectors selected by the terminal or configured by the network-side device in a current transmission rank.

In an optional implementation, the mapping the one or Q non-zero combination coefficient indication bitmaps to a group 1 and a group 2 in a second part of the CSI report for sending includes:

determining fourth values associated with combination coefficients, where one combination coefficient is associated with one bit in the one or Q non-zero combination coefficient indication bitmaps;

determining a mapping order of parameters related to the target PMI combination coefficient based on the fourth values associated with the combination coefficients; and

mapping the one or Q non-zero combination coefficient indication bitmaps to the group 1 and the group 2 based on the mapping order for sending.

In an optional implementation, the determining fourth values associated with combination coefficients includes: determining, for any one of the combination coefficients, a fourth value associated with the combination coefficient based on at least one of the following:

a spatial-domain basis vector sequence number associated with the combination coefficient;

a spatial-domain basis vector index associated with the combination coefficient;

a frequency-domain basis vector sequence number associated with the combination coefficient;

a frequency-domain basis vector index associated with the combination coefficient;

a Doppler-domain basis vector sequence number associated with the combination coefficient;

a Doppler-domain basis vector index associated with the combination coefficient;

a layer sequence number associated with the combination coefficient;

a layer index associated with the combination coefficient;

a spatial-domain basis vector index associated with a strongest coefficient;

a spatial-domain basis vector sequence number associated with the strongest coefficient;

a frequency-domain basis vector sequence number associated with the strongest coefficient;

a frequency-domain basis vector index associated with the strongest coefficient;

a Doppler-domain basis vector sequence number associated with the strongest coefficient; and

a Doppler-domain basis vector index associated with the strongest coefficient.

In an optional implementation, for parameters related to the target PMI combination coefficient that are associated with combination coefficients with a same fourth value, determining mapping priorities of the parameters related to the target PMI combination coefficient based on at least one of the following:

a mapping priority of the target PMI combination coefficient whose spatial-domain basis vector sequence number or basis vector index associated with the associated combination coefficient is small is high;

a mapping priority of the target PMI combination coefficient whose frequency-domain basis vector sequence number or basis vector index associated with the associated combination coefficient is small is high;

a priority of the target PMI combination coefficient whose Doppler-domain basis vector sequence number or basis vector index associated with the associated combination coefficient is small is high;

a priority of the target PMI combination coefficient whose layer sequence number or layer index associated with the associated combination coefficient is small is high; and

a priority of the target PMI combination coefficient whose fifth value associated with the associated combination coefficient is large or small is high.

In an optional implementation, the fifth value is determined based on at least one of the following:

the spatial-domain basis vector sequence number associated with the associated combination coefficient;
the spatial-domain basis vector index associated with the associated combination coefficient;
the frequency-domain basis vector sequence number associated with the associated combination coefficient;
the frequency-domain basis vector index associated with the associated combination coefficient;
the Doppler-domain basis vector sequence number associated with the associated combination coefficient;
the Doppler-domain basis vector index associated with the associated combination coefficient;
the layer sequence number associated with the associated combination coefficient; and
the layer index associated with the associated combination coefficient.

In an optional implementation, the sending module 402 is further configured to: in a case that the fourth value associated with the combination coefficient is not related to the Doppler-domain basis vector sequence number or Doppler-domain basis vector index of the combination coefficient, explicitly or implicitly indicate, in the first part of the CSI report, a quantity of non-zero combination coefficients associated with each of Q Doppler-domain basis vectors.

In an optional implementation, the determining, for any one of the combination coefficients, a fourth value associated with the combination coefficient includes one of the following:

determining the fourth value associated with the combination coefficient based on the transmission rank, the quantity of spatial-domain basis vectors selected by the terminal or configured by the network-side device, a function value of the frequency-domain basis vector index of the combination coefficient, a function value of the spatial-domain basis vector index of the combination coefficient, and a transport layer at which the combination coefficient is located;

determining the fourth value associated with the combination coefficient based on the transmission rank, the quantity of spatial-domain basis vectors selected by the terminal or configured by the network-side device, the quantity of frequency-domain basis vectors selected by the terminal or configured by the network-side device in the transmission rank, the function value of the frequency-domain basis vector index of the combination coefficient, a function value of the Doppler-domain basis vector index of the combination coefficient, the function value of the spatial-domain basis vector index of the combination coefficient, and the transport layer at which the combination coefficient is located;

determining the fourth value associated with the combination coefficient based on the transmission rank, the quantity of spatial-domain basis vectors selected by the terminal or configured by the network-side device, a quantity of frequency domain units configured by the network-side device, the function value of the frequency-domain basis vector index of the combination coefficient, the function value of the Doppler-domain basis vector index of the combination coefficient, the function value of the spatial-domain basis vector index of the combination coefficient, and the transport layer at which the combination coefficient is located;

determining the fourth value associated with the combination coefficient based on the transmission rank, the quantity of spatial-domain basis vectors selected by the terminal or configured by the network-side device, the quantity of Doppler-domain basis vectors selected by the terminal or configured by the network-side device in the transmission rank, the function value of the frequency-domain basis vector index of the combination coefficient, the function value of the Doppler-domain basis vector index of the combination coefficient, the function value of the spatial-domain basis vector index of the combination coefficient, and the transport layer at which the combination coefficient is located;

determining the fourth value associated with the combination coefficient based on the transmission rank, the quantity of spatial-domain basis vectors selected by the terminal or configured by the network-side device, a quantity of time domain units configured by the network-side device, the function value of the frequency-domain basis vector index of the combination coefficient, the function value of the Doppler-domain basis vector index of the combination coefficient, the function value of the spatial-domain basis vector index of the combination coefficient, and the transport layer at which the combination coefficient is located;

determining the fourth value associated with the combination coefficient based on the transmission rank, the quantity of spatial-domain basis vectors selected by the terminal or configured by the network-side device, a function value related to the Doppler-domain basis vector index of the combination coefficient and the frequency-domain basis vector index of the combination coefficient, the function value of the spatial-domain basis vector index of the combination coefficient, and the transport layer at which the combination coefficient is located;

determining the fourth value associated with the combination coefficient based on the transmission rank, the quantity of spatial-domain basis vectors selected by the terminal or configured by the network-side device, a function value related to the Doppler-domain basis vector index of the combination coefficient and the spatial-domain basis vector index of the combination coefficient, the function value of the frequency-domain basis vector index of the combination coefficient, and the transport layer at which the combination coefficient is located;

determining the fourth value associated with the combination coefficient based on the transmission rank, the quantity of spatial-domain basis vectors selected by the terminal or configured by the network-side device, a function value related to the Doppler-domain basis vector index of the combination coefficient and the frequency-domain basis vector index of the combination coefficient, the function value of the frequency-domain basis vector index of the combination coefficient, and the transport layer at which the combination coefficient is located;

determining the fourth value associated with the combination coefficient based on the quantity of spatial-domain basis vectors selected by the terminal or configured by the network-side device, the function value related to the Doppler-domain basis vector index of the combination coefficient and the spatial-domain basis vector index of the combination coefficient, and the function value of the frequency-domain basis vector index of the combination coefficient;

determining the fourth value associated with the combination coefficient based on the function value of the Doppler-domain basis vector index of the combination coefficient, the function value of the spatial-domain basis vector index of the combination coefficient, the function value of the frequency-domain basis vector index of the combination coefficient, and the transport layer at which the combination coefficient is located;

determining the fourth value associated with the combination coefficient based on the transmission rank, the function value of the Doppler-domain basis vector index of the combination coefficient, the function value of the spatial-domain basis vector index of the combination coefficient, the function value of the frequency-domain basis vector index of the combination coefficient, and the transport layer at which the combination coefficient is located; and

determining the fourth value associated with the combination coefficient based on the function value of the Doppler-domain basis vector index of the combination coefficient, the function value of the spatial-domain basis vector index of the combination coefficient, and the function value of the frequency-domain basis vector index of the combination coefficient.

In an optional implementation, the sending module 402 is further configured to map, based on a mapping order of parameters related to the target PMI combination coefficient that are associated with the combination coefficients, non-zero combination coefficient amplitude indications and/or non-zero combination coefficient phase indications associated with non-zero combination coefficients to a second part of the CSI report for sending.

In an optional implementation, the mapping non-zero combination coefficient amplitude indications and/or non-zero combination coefficient phase indications associated with non-zero combination coefficients to a second part of the CSI report for sending includes:

mapping non-zero combination coefficient amplitude indications and/or non-zero combination coefficient phase indications associated with N1 first non-zero combination coefficients to a group 1 in the second part of the CSI report for sending, and mapping non-zero combination coefficient amplitude indications and/or non-zero combination coefficient phase indications associated with N2 second non-zero combination coefficients to a group 2 in the second part of the CSI report for sending, where N1 and N2 are integers greater than 0, and a sum of N1 and N2 is a total quantity of non-zero combination coefficients associated with Q Doppler-domain basis vectors.

In an optional implementation, N1 is a sum of Q first quantities or a sum of Q second quantities, the first quantity is the ceiling of a quantity of non-zero combination coefficients associated with the Doppler-domain basis vector divided by 2, and the second quantity is the ceiling of the quantity of non-zero combination coefficients associated with the Doppler-domain basis vector divided by 2 minus the transmission rank.

In an optional implementation, N1 first non-zero combination coefficients are non-zero combination coefficients whose fourth values are less than a preset threshold in non-zero combination coefficients associated with Q Doppler-domain basis vectors.

In an optional implementation, the mapping the one or Q non-zero combination coefficient indication bitmaps to the group 1 and the group 2 based on the mapping order for sending includes:

mapping N3 bits in the one or Q non-zero combination coefficient indication bitmaps to the group 1 for sending, and mapping bits other than the N3 bits in the one or Q non-zero combination coefficient indication bitmaps to the group 2 for sending, where the N3 bits are non-zero combination coefficient indications corresponding to first N3 non-zero combination coefficients in a mapping order in the one or Q non-zero combination coefficient indication bitmaps, and N3 is an integer greater than 0.

In an optional implementation, N3 is $v * Q * L * M - \lfloor K_{NZ}/2 \rfloor$, where M represents the quantity of frequency-domain basis vectors selected by the terminal or configured by the network-side device in the transmission rank v, v represents the transmission rank, L represents the quantity of spatial-domain basis vectors selected by the terminal or configured by the network-side device, and $K_{NZ}$ is a quantity of non-zero coefficients indicated in the first part of the CSI report, or $K_{NZ}$ is a sum of quantities of non-zero coefficients associated with a plurality of Doppler-domain basis vectors indicated in the first part of the CSI report.

In an optional implementation, N3 is $v * Q * L * M - X$, where M represents the quantity of frequency-domain basis vectors selected by the terminal or configured by the network-side device in the transmission rank v, v represents the transmission rank, L represents the quantity of spatial-domain basis vectors selected by the terminal or configured by the network-side device, and X is a quantity of non-zero coefficients associated with a group 2 in a second part of the CSI report.

In an optional implementation, N3 is $v * L * M - \lfloor K_{NZ,q}/2 \rfloor$, where M represents the quantity of frequency-domain basis vectors selected by the terminal or configured by the network-side device in the transmission rank v, v represents the transmission rank, L represents the quantity of spatial-domain basis vectors selected by the terminal or configured by the network-side device, and $K_{NZ,q}$ is a quantity of non-zero coefficients associated with a $q^{th}$ Doppler-domain basis vector indicated in the first part of the CSI report.

In an optional implementation, sending the parameter related to the target PMI combination coefficient includes: in a case that a quantity of non-zero combination coefficients is less than a threshold, mapping the parameter related to the target PMI combination coefficient to a group 1 in a second part of a CSI report for sending, where the second part of the CSI report does not include a group 2.

In an optional implementation, the mapping the parameter related to the target PMI combination coefficient to a group 1 in a second part of a CSI report for sending includes:

determining sixth values associated with combination coefficients;
determining, based on the sixth values associated with the non-zero combination coefficients, a mapping order of parameters related to the target PMI combination coefficient associated with the non-zero combination coefficients; and
mapping, based on the mapping order, the parameters related to the target PMI combination coefficient to the group 1 for sending.

The sixth value is obtained based on a basis vector index and a layer index that are associated with the combination coefficient, and the basis vector index includes at least one of the following: a spatial-domain basis vector index i, a frequency-domain basis vector index f, and a Doppler-domain basis vector index q.

In an optional implementation, the threshold is determined based on one of the following: a configuration of a network-side device, a default rule, and a feedback of the terminal.

In an optional implementation, a value of S includes one of the following:

a preset value configured by the network-side device;
one of a plurality of candidate values configured by the network-side device;
a value of S determined by the terminal based on a maximum or minimum value of S configured by the network-side device;
a value determined by the terminal based on the first scaling factor configured by the network-side device; and
a value of S determined by the terminal based on a maximum or minimum value of S determined based on the first scaling factor configured by the network-side device.

In an optional implementation, the sending module 402 is further configured to send channel state information CSI through a physical uplink shared channel PUSCH or a physical uplink control channel PUCCH, where the CSI includes the fed-back PMI combination coefficient, S inter-slot repetitions are configured for the PUSCH or the PUCCH, S>=1, the CSI is sent in R slots in S slots, 1<=R<=S, the fed-back PMI combination coefficient is associated with a radio channel of a time domain window including W slots, W>=1, a distance between a start slot of the W slots and a first slot determined in the R slots is δ slots, δ>=0, a value of δ is indicated by a network-side device to the terminal or configured in a protocol by default, for a CSI reference slot, a distance between the CSI reference slot and a second slot determined in the R slots is n_CSI_ref slots, and n_CSI_ref is a capability value configured by the network-side device, stipulated in a protocol, or reported by the terminal.

In an optional implementation, the first slot or the second slot is determined based on at least one of the following rules:

the first slot or the second slot is a 1st slot in the R slots; and
the first slot or the second slot is a last slot in the R slots.

In an optional implementation, the CSI further includes channel quality indication information, the CQI is associated with only first d slots or any d slots in the time domain window including the W slots, and W>=d>=1.

The sending module 402 is further configured to: in a case that each of the first d slots or any d slots is not a valid downlink slot, cancel sending the reported CSI.

In an optional implementation, the fed-back PMI combination coefficient included in the sent CSI is calculated based on B CSI-RS resources, and B is a configuration value of the network-side device or a capability value reported by the terminal.

The sending module 402 is further configured to cancel current CSI sending in a case that CSI report reconfiguration, cell activation, BWP change, or semi-persistent SP-CSI report activation is performed, and a quantity of received CSI-RS resources is less than B.

The PMI combination coefficient feedback apparatus in this embodiment of this application can be an electronic device, for example, an electronic device with an operating system, or can be a component like an integrated circuit or a chip in the electronic device. The electronic device can be a terminal, or can be another device different from a terminal. For example, the terminal can include but is not limited to the foregoing listed types of the terminal 11. The another device can be a server, a network attached storage (Network Attached Storage, NAS), or the like. This is not specifically limited in embodiments of this application.

The PMI combination coefficient feedback apparatus provided in this embodiment of this application can implement processes implemented by the terminal in the method embodiments of FIG. 2 and FIG. 3, and achieve same technical effects. To avoid repetition, details are not described herein again.

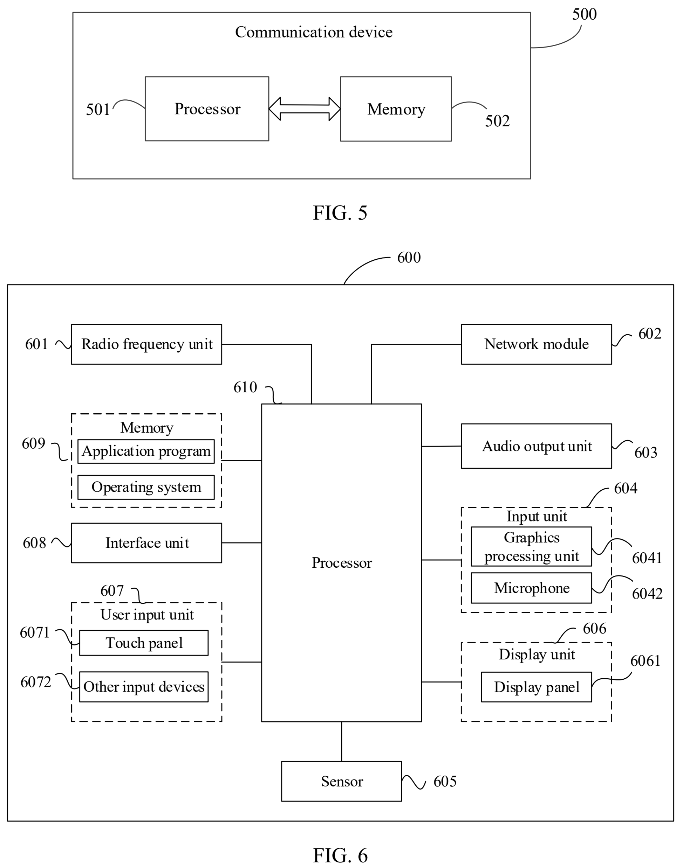

Optionally, as shown in FIG. 5, an embodiment of this application further provides a communication device 500, including a processor 501 and a memory 502. The memory 502 stores a program or instructions that are executable on the processor 501. For example, when the communication device 500 is a terminal, the program or the instructions are executed by the processor 501 to implement the steps in the foregoing embodiment of the PMI combination coefficient feedback method, and same technical effects can be achieved. To avoid repetition, details are not described herein again.

An embodiment of this application further provides a terminal, including a processor and a communication interface. The processor is configured to implement the steps in the foregoing embodiment of the PMI combination coefficient feedback method, and the communication interface is configured to communicate with an external device. The terminal embodiment corresponds to the foregoing method embodiment on the terminal side. Each implementation process and implementation of the foregoing method embodiment is applicable to the terminal embodiment, and same technical effects can be achieved. Specifically, FIG. 6 is a schematic diagram of a hardware structure of a terminal for implementing an embodiment of this application.

The terminal 600 includes but is not limited to at least a pat of components in a radio frequency unit 601, a network module 602, an audio output unit 603, an input unit 604, a sensor 605, a display unit 606, a user input unit 607, an interface unit 608, a memory 609, a processor 610, and the like.

A person skilled in the art can understand that the terminal 600 can further include a power supply (for example, a battery) that supplies power to each component. The power supply can be logically connected to the processor 610 by using a power management system, to implement functions such as charging management, discharging management, and power consumption management through the power management system. The structure of the terminal shown in FIG. 6 does not constitute a limitation on the terminal. The terminal can include more or fewer components than those shown in the figure, or combine some components, or have different component arrangements. Details are not described herein again.

It should be understood that in this embodiment of this application, the input unit 604 can include a graphics processing unit (Graphics Processing Unit, GPU) 6041 and a microphone 6042. The graphics processing unit 6041 processes image data of a still picture or a video obtained by an image capture apparatus (for example, a camera) in a video capture mode or an image capture mode. The display unit 606 can include a display panel 6061, and the display panel 6061 can be configured in a form of a liquid crystal display, an organic light-emitting diode, or the like. The user input unit 607 includes at least one of a touch panel 6071 and other input devices 6072. The touch panel 6071 is also referred to as a touchscreen. The touch panel 6071 can include two parts: a touch detection apparatus and a touch controller. The other input devices 6072 can include but are not limited to a physical keyboard, a function key (for example, a volume control key or an on/off key), a trackball, a mouse, and a joystick. Details are not described herein again.

In this embodiment of this application, after receiving downlink data from a network-side device, the radio frequency unit 601 can transmit the downlink data to the processor 610 for processing. In addition, the radio frequency unit 601 can send uplink data to the network-side device. Generally, the radio frequency unit 601 includes but is not limited to an antenna, an amplifier, a transceiver, a coupler, a low-noise amplifier, a duplexer, and the like.

The memory 609 can be configured to store a software program or instructions and various types of data. The memory 609 can mainly include a first storage area for storing a program or instructions and a second storage area for storing data. The first storage area can store an operating system, an application program or instructions required by at least one function (for example, a sound playing function or an image playing function), and the like. In addition, the memory 609 can include a volatile memory or a nonvolatile memory, or the memory 609 can include both a volatile memory and a nonvolatile memory. The nonvolatile memory can be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 609 in this embodiment of this application includes but is not limited to these memories and any other suitable type of memory.

The processor 610 can include one or more processing units. Optionally, the processor 610 integrates an application processor and a modem processor. The application processor mainly processes operations related to an operating system, a user interface, an application program, and the like. The modem processor mainly processes a wireless communication signal, for example, a baseband processor. It can be understood that, the foregoing modem processor can not be integrated into the processor 610.

The processor 610 is configured to determine a target non-zero combination coefficient indication manner used to feed back a PMI combination coefficient; and/or

the radio frequency unit 601 is configured to send a parameter related to a target PMI combination coefficient, where the parameter related to the target PMI combination coefficient includes at least one of the following:

a non-zero combination coefficient indication bitmap, indicating positions of all non-zero combination coefficients;
a non-zero combination coefficient amplitude indication, indicating amplitudes of all the non-zero combination coefficients; and
a non-zero combination coefficient phase indication, indicating phases of all the non-zero combination coefficients.

An embodiment of this application further provides a readable storage medium, where the readable storage medium stores a program or instructions, the program or instructions are executed by a processor to implement the processes in the foregoing embodiment of the PMI combination coefficient feedback method, and same technical effects can be achieved. To avoid repetition, details are not described herein again.

The processor is a processor in the terminal in the foregoing embodiment. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions, to implement the processes in the foregoing embodiment of the PMI combination coefficient feedback method, and same technical effects can be achieved. To avoid repetition, details are not described herein again.

It should be understood that, the chip mentioned in this embodiment of this application can also be referred to as a system-level chip, a system chip, a chip system, a system on chip, or the like.

An embodiment of this application further provides a computer program/program product. The computer program/program product is stored in a storage medium, the computer program/program product is executed by at least one processor to implement the processes in the foregoing embodiment of the PMI combination coefficient feedback method, and same technical effects can be achieved. To avoid repetition, details are not described herein again.

It should be noted that in this specification, the term "include", "contain", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a ..." does not preclude the existence of additional identical elements in the process, method, article, or apparatus that includes the element. In addition, it should be noted that, the scope of the method and apparatus in the implementations of this application is not limited to performing functions in a sequence shown or discussed, and can further include performing functions in a basically simultaneous manner or in a reverse order based on the functions involved. For example, the described method can be performed in a sequence different from the sequence described, and various steps can be added, omitted, or combined. In addition, features described with reference to some examples can be combined in other examples.

According to the foregoing descriptions of the implementations, a person skilled in the art can clearly understand that the method in the foregoing embodiments can be implemented by software and a necessary general-purpose hardware platform, or certainly can be implemented by hardware. However, in many cases, the former is a better implementation. Based on such an understanding, the technical solutions of this application essentially or the part contributing to the prior art can be implemented in a form of a computer software product. The computer software product is stored in a storage medium (for example, a ROM/RAM, a magnetic disk, or an optical disc), and includes several instructions for instructing a terminal (which can be a mobile phone, a computer, a server, an air conditioner, a network device, or the like) to perform the methods described in embodiments of this application.

The foregoing describes embodiments of this application with reference to the accompanying drawings. However, this application is not limited to the foregoing specific implementations. The foregoing specific implementations are merely illustrative rather than restrictive. Inspired by this application, a person of ordinary skill in the art can develop many other manners without departing from principles of this application and the protection scope of the claims, and all such manners fall within the protection scope of this application.

**Claims**

1. A precoding matrix indicator PMI combination coefficient feedback method, comprising:

   determining, by a terminal, a target non-zero combination coefficient indication manner used to feed back a PMI combination coefficient; or
   sending, by the terminal, a parameter related to a target PMI combination coefficient, wherein the parameter related to the target PMI combination coefficient comprises at least one of the following:

   a non-zero combination coefficient indication bitmap, indicating positions of all non-zero combination coefficients;
   a non-zero combination coefficient amplitude indication, indicating amplitudes of all the non-zero combination coefficients; and
   a non-zero combination coefficient phase indication, indicating phases of all the non-zero combination coefficients.

2. The method according to claim 1, wherein the target non-zero combination coefficient indication manner comprises: feeding back two non-zero combination coefficient indication bitmaps, wherein the first one of two non-zero combination coefficient indication bitmaps indicates positions of S basis vector pairs selected for all transport layers and fed back by the terminal, the second one of two non-zero combination coefficient indication bitmaps indicates a position of a non-zero combination coefficient at each transport layer, and S is an integer greater than 0.

3. The method according to claim 1, wherein the determining, by a terminal, a target non-zero combination coefficient indication manner used to feed back a PMI combination coefficient comprises one of the following:

   determining, by the terminal, the target non-zero combination coefficient indication manner based on a non-zero combination coefficient indication manner indicated by higher layer signaling;
   determining, by the terminal, the target non-zero combination coefficient indication manner based on a first target parameter, wherein the first target parameter comprises at least one of the following: a quantity of spatial-domain basis vectors selected by the terminal or configured by a network-side device, a quantity of frequency-domain basis vectors selected by the terminal or configured by the network-side device, a quantity of Doppler-domain basis vectors selected by the terminal or configured by the network-side device, and a first scaling factor; and
   obtaining, based on an association relationship that is between a first PMI parameter configuration and a non-zero combination coefficient indication manner and that is stipulated in a protocol or a determining manner that is of the first PMI parameter configuration and the non-zero combination coefficient indication manner and that is stipulated in the protocol, the target non-zero combination coefficient indication manner associated with the first PMI parameter configuration, wherein the first PMI parameter configuration is one of the following: a PMI parameter configuration configured by the network-side device by using the higher layer signaling, and a PMI parameter configuration selected by the terminal, wherein a part of parameters in the first PMI parameter configuration are configured by the network-side device by using the higher layer signaling, and the other part of parameters are PMI parameters selected by the terminal.

4. The method according to claim 3, wherein before the determining, by the terminal, the target non-zero combination coefficient indication manner based on a first target parameter, the method further comprises:
   obtaining a second PMI parameter configuration configured by the network-side device by using the higher layer signaling, wherein the second PMI parameter configuration comprises the first target parameter.

**5.** The method according to claim 3, wherein the determining, by the terminal, the target non-zero combination coefficient indication manner based on a first target parameter comprises at least one of the following:

in a case that a first condition is met, determining that the target non-zero combination coefficient indication manner is feeding back two non-zero combination coefficient indication bitmaps, wherein the first one of two non-zero combination coefficient indication bitmaps indicates S frequency domain-Doppler domain basis vector pairs selected by the terminal, the second one of two non-zero combination coefficient indication bitmaps indicates a position of a non-zero combination coefficient, and the first condition comprises at least one of the following: a first target value is less than or equal to 0, M is less than or equal to L, and Q is less than or equal to L, wherein the first target value is one of the following: L multiplied by Beta plus 1 minus L, v multiplied by L multiplied by Beta plus 1 minus v multiplied by L, Q multiplied by M plus L multiplied by S minus Q multiplied by L multiplied by M, and Q multiplied by M plus L multiplied by S multiplied by v minus Q multiplied by L multiplied by M multiplied by v;

in a case that a second condition is met, determining that the target non-zero combination coefficient indication manner is feeding back two non-zero combination coefficient indication bitmaps, wherein the first one of two non-zero combination coefficient indication bitmaps indicates S spatial domain-Doppler domain basis vector pairs selected by the terminal, the second one of two non-zero combination coefficient indication bitmaps indicates a position of a non-zero combination coefficient, and the second condition comprises at least one of the following: a second target value is less than or equal to 0, M is greater than or equal to Q, and M is greater than or equal to L, wherein the second target value is one of the following: M multiplied by Beta plus 1 minus M, v multiplied by M multiplied by Beta plus 1 minus v multiplied by M, L multiplied by Q plus M multiplied by S minus Q multiplied by L multiplied by M, and L multiplied by Q plus M multiplied by S multiplied by v minus Q multiplied by L multiplied by M multiplied by v;

in a case that a third condition is met, determining that the target non-zero combination coefficient indication manner is feeding back two non-zero combination coefficient indication bitmaps, wherein the first one of two non-zero combination coefficient indication bitmaps indicates S spatial domain-frequency domain basis vector pairs selected by the terminal, the second one of two non-zero combination coefficient indication bitmaps indicates a position of a non-zero combination coefficient, and the third condition comprises at least one of the following: a third target value is less than or equal to 0, Q is less than or equal to M, and Q is greater than or equal to L, wherein the third target value is one of the following: Q multiplied by Beta plus 1 minus Q, v multiplied by Q multiplied by Beta plus 1 minus v multiplied by Q, L multiplied by M plus Q multiplied by S minus Q multiplied by L multiplied by M, and L multiplied by M plus Q multiplied by S multiplied by v minus Q multiplied by L multiplied by M multiplied by v; or

in a case that any one of the first condition, the second condition, or the third condition is not met, determining that the target non-zero combination coefficient indication manner is: feeding back Q non-zero combination coefficient indication bitmaps, wherein each non-zero combination coefficient indication bitmap is associated with one selected Doppler basis vector; or feeding back one non-zero combination coefficient indication bitmap, wherein the non-zero combination coefficient indication bitmap is associated with Q Doppler basis vectors, wherein L represents the quantity of spatial-domain basis vectors selected by the terminal or configured by the network-side device, M represents the quantity of frequency-domain basis vectors selected by the terminal or configured by the network-side device, Q represents the quantity of Doppler-domain basis vectors selected by the terminal or configured by the network-side device, Beta represents the first scaling factor, the first scaling factor is selected by the terminal or configured by the network-side device, and S represents a quantity of basis vector pairs selected by the terminal.

**6.** The method according to claim 5, wherein the first scaling factor is used to determine a maximum quantity or quantity of one of the following selected by the terminal: spatial domain-Doppler domain basis vector pairs, spatial domain-frequency domain basis vector pairs, and frequency domain-Doppler domain basis vector pairs.

**7.** The method according to claim 6, wherein the first scaling factor is further used to determine a maximum quantity or quantity of non-zero combination coefficients fed back by the terminal.

**8.** The method according to claim 5, wherein the method further comprises:
indicating, by the terminal in a first part of a channel state information CSI report, a quantity of bits that are in the first one of two non-zero combination coefficient indication bitmaps and whose values are a preset value.

**9.** The method according to claim 3, wherein after the determining, by a terminal, a target non-zero combination coefficient indication manner used to feed back a PMI combination coefficient, the method further comprises:
indicating, by the terminal, the target non-zero combination coefficient indication manner by using a first part of a CSI report.

10. The method according to claim 9, wherein the indicating, by the terminal, the target non-zero combination coefficient indication manner by using a first part of a CSI report comprises one of the following:

carrying, by the terminal, identification information of the target non-zero combination coefficient indication manner in the first part of the CSI report;
indicating, by the terminal, a first target quantity of non-zero combination coefficients in the first part of the CSI report, wherein the first target quantity is a specified quantity corresponding to the target non-zero combination coefficient indication manner; and
indicating, by the terminal in the first part of the CSI report, a second target quantity of bits that are in the first one of two non-zero combination coefficient indication bitmaps in the two fed-back non-zero combination coefficient indication bitmaps and whose values are a preset value, wherein the second target quantity is the specified quantity corresponding to the target non-zero combination coefficient indication manner.

11. The method according to any one of claims 1 to 10, wherein the sending, by the terminal, a parameter related to a target PMI combination coefficient comprises one of the following:

in a case that two non-zero combination coefficient indication bitmaps are fed back, mapping the first one of the two non-zero combination coefficient indication bitmaps to a group 1 in a second part of CSI report for sending, and mapping the second one of the two non-zero combination coefficient indication bitmaps to the group 1 and a group 2 in the second part of the CSI report for sending; or
in a case that the two non-zero combination coefficient indication bitmaps are fed back, mapping the first one of the two non-zero combination coefficient indication bitmaps to a group 1 and a group 2 in a second part of the CSI report for sending, and mapping the second one of the two non-zero combination coefficient indication bitmaps to the group 1 and the group 2 in the second part of the CSI report for sending.

12. The method according to claim 11, wherein the mapping the first one of two non-zero combination coefficient indication bitmaps to a group 1 in a second part of the CSI report for sending comprises:

determining a first value associated with each bit in the first one of the two non-zero combination coefficient indication bitmaps;
determining a mapping order of each bit in the first one of the two non-zero combination coefficient indication bitmaps based on the first value associated with each bit; and
mapping, based on the mapping order, each bit in the first one of the two non-zero combination coefficient indication bitmaps to the group 1 in the second part of the CSI report for sending.

13. The method according to claim 11, wherein the mapping the first one of the two non-zero combination coefficient indication bitmaps to a group 1 and a group 2 in a second part of the CSI report for sending comprises:

determining a first value associated with each bit in the first one of the two non-zero combination coefficient indication bitmaps;
determining a mapping order of each bit in the first one of the two non-zero combination coefficient indication bitmaps based on the first value associated with each bit; and
dividing the first one of the two non-zero combination coefficient indication bitmaps into a first sub-bitmap and a second sub-bitmap based on the mapping order, mapping the first sub-bitmap to the group 1 in the second part of the CSI report for sending, and mapping the second sub-bitmap to the group 2 in the second part of the CSI report for sending.

14. The method according to claim 13, wherein a quantity of bits comprised in the first sub-bitmap is one of the following:

L multiplied by Q minus X1;
L multiplied by M minus X1;
M multiplied by Q minus X1;
V multiplied by L multiplied by Q minus X1;
V multiplied by L multiplied by M minus X1; and
V multiplied by M multiplied by Q minus X1, wherein
L represents a quantity of spatial-domain basis vectors selected by the terminal or configured by a network-side device, M represents a quantity of frequency-domain basis vectors selected by the terminal or configured by the network-side device, Q represents a quantity of Doppler-domain basis vectors selected by the terminal or configured by the network-side device, v is a transmission rank, X1 is an integer greater than 0, and X1 is obtained based on one of the following: a default rule, an indication of the network-side device, and terminal determining.

15. The method according to any one of claims 12 to 14, wherein a first value associated with any bit in the first one of two non-zero combination coefficient indication bitmaps is determined based on at least one of the following:

a spatial-domain basis vector sequence number associated with a combination coefficient corresponding to the bit;
a spatial-domain basis vector index associated with the combination coefficient corresponding to the bit;
a frequency-domain basis vector sequence number associated with the combination coefficient corresponding to the bit;
a frequency-domain basis vector index associated with the combination coefficient corresponding to the bit;
a Doppler-domain basis vector sequence number associated with the combination coefficient corresponding to the bit;
a Doppler-domain basis vector index associated with the combination coefficient corresponding to the bit;
a layer sequence number associated with the combination coefficient corresponding to the bit;
a layer index associated with the combination coefficient corresponding to the bit;
a spatial-domain basis vector index associated with a strongest coefficient;
a spatial-domain basis vector sequence number associated with the strongest coefficient;
a frequency-domain basis vector sequence number associated with the strongest coefficient;
a frequency-domain basis vector index associated with the strongest coefficient;
a Doppler-domain basis vector sequence number associated with the strongest coefficient; and
a Doppler-domain basis vector index associated with the strongest coefficient.

16. The method according to any one of claims 12 to 14, wherein a first value associated with any bit in the first one of two non-zero combination coefficient indication bitmaps is obtained in one of the following manners:

determining the first value associated with the bit based on a transmission rank, a quantity of spatial-domain basis vectors selected by the terminal or configured by a network-side device, a function value of a frequency-domain basis vector index of a combination coefficient corresponding to the bit, a function value of a spatial-domain basis vector index of the combination coefficient corresponding to the bit, and a transport layer at which the combination coefficient corresponding to the bit is located;
determining the first value associated with the bit based on the transmission rank, the quantity of spatial-domain basis vectors selected by the terminal or configured by the network-side device, a function value of a Doppler-domain basis vector index of the combination coefficient corresponding to the bit, the function value of spatial-domain basis vector index of the combination coefficient corresponding to the bit, and the transport layer at which the combination coefficient corresponding to the bit is located;
determining the first value associated with the bit based on the transmission rank, a quantity of Doppler-domain basis vectors selected by the terminal or configured by the network-side device in the transmission rank, the function value of the spatial-domain basis vector index of the combination coefficient corresponding to the bit, the function value of the Doppler-domain basis vector index of the combination coefficient corresponding to the bit, and the transport layer at which the combination coefficient corresponding to the bit is located;
determining the first value associated with the bit based on the transmission rank, a quantity of time domain units configured by the network-side device, the function value of the spatial-domain basis vector index of the combination coefficient corresponding to the bit, the function value of the Doppler-domain basis vector index of the combination coefficient corresponding to the bit, and the transport layer at which the combination coefficient corresponding to the bit is located;
determining the first value associated with the bit based on the transmission rank, a quantity of frequency domain units configured by the network-side device, the function value of the Doppler-domain basis vector index of the combination coefficient corresponding to the bit, the function value of the frequency-domain basis vector index of the combination coefficient corresponding to the bit, and the transport layer at which the combination coefficient corresponding to the bit is located;
determining the first value associated with the bit based on the transmission rank, a quantity of frequency-domain vectors selected by the terminal or configured by the network-side device in the transmission rank, the function value of the Doppler-domain basis vector index of the combination coefficient corresponding to the bit, the function value of the frequency-domain basis vector index of the combination coefficient corresponding to the bit, and the transport layer at which the combination coefficient corresponding to the bit is located;

determining the first value associated with the bit based on the transmission rank, the quantity of time domain units configured by the network-side device, the function value of the frequency-domain basis vector index of the combination coefficient corresponding to the bit, the function value of the Doppler-domain basis vector index of the combination coefficient corresponding to the bit, and the transport layer at which the combination coefficient corresponding to the bit is located;

determining the first value associated with the bit based on the transmission rank, the quantity of Doppler-domain basis vectors selected by the terminal or configured by the network-side device in the transmission rank, the function value of the frequency-domain basis vector index of the combination coefficient corresponding to the bit, the function value of the Doppler-domain basis vector index of the combination coefficient corresponding to the bit, and the transport layer at which the combination coefficient corresponding to the bit is located;

determining the first value associated with the bit based on the function value of the frequency-domain basis vector index of the combination coefficient corresponding to the bit, the function value of the spatial-domain basis vector index of the combination coefficient corresponding to the bit, and the transport layer at which the combination coefficient corresponding to the bit is located;

determining the first value associated with the bit based on the function value of the Doppler-domain basis vector index of the combination coefficient corresponding to the bit, the function value of the spatial-domain basis vector index of the combination coefficient corresponding to the bit, and the transport layer at which the combination coefficient corresponding to the bit is located;

determining the first value associated with the bit based on the function value of the frequency-domain basis vector index of the combination coefficient corresponding to the bit, the function value of the Doppler-domain basis vector index of the combination coefficient corresponding to the bit, and the transport layer at which the combination coefficient corresponding to the bit is located;

determining the first value associated with the bit based on the transmission rank, the function value of the frequency-domain basis vector index of the combination coefficient corresponding to the bit, the function value of the spatial-domain basis vector index of the combination coefficient corresponding to the bit, and the transport layer at which the combination coefficient corresponding to the bit is located;

determining the first value associated with the bit based on the transmission rank, the function value of the Doppler-domain basis vector index of the combination coefficient corresponding to the bit, the function value of the spatial-domain basis vector index of the combination coefficient corresponding to the bit, and the transport layer at which the combination coefficient corresponding to the bit is located;

determining the first value associated with the bit based on the transmission rank, the function value of the frequency-domain basis vector index of the combination coefficient corresponding to the bit, the function value of the Doppler-domain basis vector index of the combination coefficient corresponding to the bit, and the transport layer at which the combination coefficient corresponding to the bit is located;

determining the first value associated with the bit based on the quantity of spatial-domain basis vectors selected by the terminal or configured by the network-side device, the function value of the frequency-domain basis vector index of the combination coefficient corresponding to the bit, and the function value of the spatial-domain basis vector index of the combination coefficient corresponding to the bit;

determining the first value associated with the bit based on the quantity of spatial-domain basis vectors selected by the terminal or configured by the network-side device, the function value of the Doppler-domain basis vector index of the combination coefficient corresponding to the bit, and the function value of the spatial-domain basis vector index of the combination coefficient corresponding to the bit;

determining the first value associated with the bit based on the quantity of frequency-domain basis vectors selected by the terminal or configured by the network-side device in the transmission rank, the function value of the spatial-domain basis vector index of the combination coefficient corresponding to the bit, and the function value of the Doppler-domain basis vector index of the combination coefficient corresponding to the bit;

determining the first value associated with the bit based on the quantity of time domain units configured by the network-side device, the function value of the spatial-domain basis vector index of the combination coefficient corresponding to the bit, and the function value of the Doppler-domain basis vector index of the combination coefficient corresponding to the bit;

determining the first value associated with the bit based on the quantity of frequency domain units configured by the network-side device, the function value of the Doppler-domain basis vector index of the combination coefficient corresponding to the bit, and the function value of the spatial-domain basis vector index of the combination coefficient corresponding to the bit;

determining the first value associated with the bit based on the quantity of frequency-domain basis vectors selected by the terminal or configured by the network-side device in the transmission rank, the Doppler-domain basis vector index of the combination coefficient corresponding to the bit, and the spatial-domain basis vector index of the combination coefficient corresponding to the bit;

determining the first value associated with the bit based on the quantity of time domain units configured by the network-side device, the function value of the frequency-domain basis vector index of the combination coefficient corresponding to the bit, and the function value of the Doppler-domain basis vector index of the combination coefficient corresponding to the bit;

determining the first value associated with the bit based on the quantity of Doppler-domain basis vectors selected by the terminal or configured by the network-side device in the transmission rank, the function value of the frequency-domain basis vector index of the combination coefficient corresponding to the bit, and the function value of the Doppler-domain basis vector index of the combination coefficient corresponding to the bit;

determining the first value associated with the bit based on the function value of the frequency-domain basis vector index of the combination coefficient corresponding to the bit and the function value of the spatial-domain basis vector index of the combination coefficient corresponding to the bit;

determining the first value associated with the bit based on the function value of the Doppler-domain basis vector index of the combination coefficient corresponding to the bit and the function value of the spatial-domain basis vector index of the combination coefficient corresponding to the bit; and

determining the first value associated with the bit based on the function value of the frequency-domain basis vector index of the combination coefficient corresponding to the bit and the function value of the Doppler-domain basis vector index of the combination coefficient corresponding to the bit.

17. The method according to claim 12, wherein the determining a mapping order of each bit in the first one of the two non-zero combination coefficient indication bitmaps based on the first value associated with each bit comprises:

for a plurality of bits whose first values are the same, determining a mapping order of each of the plurality of bits based on at least one of the following:

that a bit whose corresponding combination coefficient is associated with a small spatial-domain basis vector sequence number or spatial-domain basis vector index is preferentially mapped;

that a bit whose corresponding combination coefficient is associated with a small frequency-domain basis vector sequence number or frequency-domain basis vector index is preferentially mapped;

that a bit whose corresponding combination coefficient is associated with a small Doppler-domain basis vector sequence number or Doppler-domain basis vector index is preferentially mapped; and

that a bit whose corresponding combination coefficient is associated with a small layer sequence number or layer index is preferentially mapped.

18. The method according to claim 11, wherein the mapping the second one of the two non-zero combination coefficient indication bitmaps to the group 1 and the group 2 in the second part of the CSI report for sending comprises:

determining a second value associated with each bit in the second one of the two non-zero combination coefficient indication bitmaps;

determining a mapping order of each bit in the second one of the two non-zero combination coefficient indication bitmaps based on the second value associated with each bit;

dividing the second one of the two non-zero combination coefficient indication bitmaps into a third sub-bitmap and a fourth sub-position based on the mapping order; and

mapping the third sub-bitmap to the group 1 in the second part of the CSI report for sending, and mapping the fourth sub-bitmap to the group 2 in the second part of the CSI report for sending.

19. The method according to claim 18, wherein a quantity of bits comprised in the third sub-bitmap is one of the following:

S multiplied by Q minus X2;

S multiplied by M minus X2;

S multiplied by L minus X2;

V multiplied by S multiplied by Q minus X2;

V multiplied by S multiplied by M minus X2; and

V multiplied by S multiplied by L minus X2, wherein

S is a quantity of basis vector pairs indicated by the first one of two non-zero combination coefficient indication bitmaps, L is a quantity of spatial-domain basis vectors selected by the terminal or configured by a network-side device, Q is a quantity of Doppler-domain basis vectors selected by the terminal or configured by the network-side device, M is a quantity of frequency-domain basis vectors selected by the terminal or configured by the network-side device, v is a transmission rank, X2 is an integer greater than 0, and X2 is obtained based on a default rule, indicated by the network-side device, or determined by the terminal.

20. The method according to claim 19, wherein determining, by the terminal, X2 comprises:
    determining, by the terminal, X2 by using one of the following:

    a quantity of basis vector pairs indicated by the first one of the two non-zero combination coefficient indication bitmaps comprised in the group 2 in the second part of the CSI report;
    a quantity of basis vector pairs comprised in the first part of the CSI report; and
    a quantity of non-zero combination coefficients comprised in the first part of the CSI report.

21. The method according to claim 19, wherein a second value associated with any bit in the second one of the two non-zero combination coefficient indication bitmaps is determined based on at least one of the following:

    a frequency domain-Doppler domain basis vector pair sequence number associated with a combination coefficient corresponding to the bit;
    a frequency domain-Doppler domain basis vector pair index associated with the combination coefficient corresponding to the bit;
    a spatial domain-Doppler domain basis vector pair sequence number associated with the combination coefficient corresponding to the bit;
    a spatial domain-Doppler domain basis vector pair index associated with the combination coefficient corresponding to the bit;
    a spatial domain-frequency domain basis vector pair sequence number associated with the combination coefficient corresponding to the bit;
    a spatial domain-frequency domain basis vector pair index associated with the combination coefficient corresponding to the bit;
    a spatial-domain basis vector sequence number associated with the combination coefficient corresponding to the bit;
    a spatial-domain basis vector index associated with the combination coefficient corresponding to the bit;
    a frequency-domain basis vector sequence number associated with the combination coefficient corresponding to the bit;
    a frequency-domain basis vector index associated with the combination coefficient corresponding to the bit;
    a Doppler-domain basis vector sequence number associated with the combination coefficient corresponding to the bit;
    a Doppler-domain basis vector index associated with the combination coefficient corresponding to the bit;
    a spatial-domain basis vector index associated with a strongest coefficient;
    a spatial-domain basis vector sequence number associated with the strongest coefficient;
    a frequency-domain basis vector sequence number associated with the strongest coefficient;
    a frequency-domain basis vector index associated with the strongest coefficient;
    a Doppler-domain basis vector sequence number associated with the strongest coefficient;
    a Doppler-domain basis vector index associated with the strongest coefficient;
    a layer sequence number associated with the combination coefficient corresponding to the bit; and
    a layer index associated with the combination coefficient corresponding to the bit.

22. The method according to claim 19, wherein a second value associated with any bit in the second one of the two non-zero combination coefficient indication bitmaps is obtained in one of the following manners:

    determining the second value associated with the bit based on the quantity of spatial-domain basis vectors selected by the terminal or configured by the network-side device, a function value of a basis vector pair index associated with a combination coefficient corresponding to the bit, and a function value of a spatial-domain basis vector index associated with the combination coefficient corresponding to the bit;
    determining the second value associated with the bit based on a quantity of basis vector pairs selected by the terminal or configured by the network-side device, the function value of the basis vector pair index associated with the combination coefficient corresponding to the bit, and the function value of the spatial-domain basis vector index associated with the combination coefficient corresponding to the bit;
    determining the second value associated with the bit based on a quantity of Doppler-domain basis vectors selected by the terminal or configured by the network-side device in a current transmission rank, the function value of the basis vector pair index associated with the combination coefficient corresponding to the bit, and a function value of a Doppler-domain basis vector index associated with the combination coefficient corresponding to the bit;

determining the second value associated with the bit based on a quantity of time domain units configured by the network-side device, the function value of the basis vector pair index associated with the combination coefficient corresponding to the bit, and the function value of the Doppler-domain basis vector index associated with the combination coefficient corresponding to the bit;

determining the second value associated with the bit based on the quantity of basis vector pairs selected by the terminal or configured by the network-side device, the function value of the Doppler-domain basis vector index associated with the combination coefficient corresponding to the bit, and the function value of the basis vector pair index associated with the combination coefficient corresponding to the bit;

determining the second value associated with the bit based on a quantity of frequency domain units configured by the network-side device, the function value of the basis vector pair index associated with the combination coefficient corresponding to the bit, and a function value of a frequency-domain basis vector index associated with the combination coefficient corresponding to the bit;

determining the second value associated with the bit based on a quantity of frequency-domain basis vectors selected by the terminal or configured by the network-side device in the current transmission rank, the function value of the basis vector pair index associated with the combination coefficient corresponding to the bit, and the function value of the frequency-domain basis vector index associated with the combination coefficient corresponding to the bit;

determining the second value associated with the bit based on the quantity of basis vector pairs selected by the terminal or configured by the network-side device, the function value of the frequency-domain basis vector index associated with the combination coefficient corresponding to the bit, and the function value of the basis vector pair index associated with the combination coefficient corresponding to the bit;

determining the second value associated with the bit based on the function value of the basis vector pair index associated with the combination coefficient corresponding to the bit and the function value of the spatial-domain basis vector index associated with the combination coefficient corresponding to the bit;

determining the second value associated with the bit based on the function value of the Doppler-domain basis vector index associated with the combination coefficient corresponding to the bit and the function value of the basis vector pair index associated with the combination coefficient corresponding to the bit;

determining the second value associated with the bit based on the function value of the basis vector pair index associated with the combination coefficient corresponding to the bit and the function value of the frequency-domain basis vector index associated with the combination coefficient corresponding to the bit;

determining the second value associated with the bit based on a transmission rank, the quantity of spatial-domain basis vectors selected by the terminal or configured by the network-side device, the function value of the basis vector pair index associated with the combination coefficient corresponding to the bit, the function value of the spatial-domain basis vector index associated with the combination coefficient corresponding to the bit, and a transport layer at which the combination coefficient corresponding to the bit is located;

determining the second value associated with the bit based on the transmission rank, the quantity of basis vector pairs selected by the terminal or configured by the network-side device, the function value of the spatial-domain basis vector index associated with the combination coefficient corresponding to the bit, the function value of the basis vector pair index associated with the combination coefficient corresponding to the bit, and the transport layer at which the combination coefficient corresponding to the bit is located;

determining the second value associated with the bit based on the transmission rank, the quantity of Doppler-domain basis vectors selected by the terminal or configured by the network-side device in the transmission rank, the function value of the basis vector pair index associated with the combination coefficient corresponding to the bit, the function value of the Doppler-domain basis vector index associated with the combination coefficient corresponding to the bit, and the transport layer at which the combination coefficient corresponding to the bit is located;

determining the second value associated with the bit based on the transmission rank, the quantity of time domain units configured by the network-side device, the function value of the basis vector pair index associated with the combination coefficient corresponding to the bit, the function value of the Doppler-domain basis vector index associated with the combination coefficient corresponding to the bit, and the transport layer at which the combination coefficient corresponding to the bit is located;

determining the second value associated with the bit based on the transmission rank, the quantity of basis vector pairs selected by the terminal or configured by the network-side device, the function value of the Doppler-domain basis vector index associated with the combination coefficient corresponding to the bit, the function value of the basis vector pair index associated with the combination coefficient corresponding to the bit, and the transport layer at which the combination coefficient corresponding to the bit is located;

determining the second value associated with the bit based on the transmission rank, the quantity of frequency domain units configured by the network-side device, the function value of the basis vector pair index associated with the combination coefficient corresponding to the bit, the function value of the Doppler-domain basis vector index associated with the combination coefficient corresponding to the bit, and the transport layer at which the combination coefficient corresponding to the bit is located;

determining the second value associated with the bit based on the transmission rank, the quantity of frequency-domain basis vectors selected by the terminal or configured by the network-side device in the transmission rank, the function value of the basis vector pair index associated with the combination coefficient corresponding to the bit, the function value of the Doppler-domain basis vector index associated with the combination coefficient corresponding to the bit, and the transport layer at which the combination coefficient corresponding to the bit is located;

determining the second value associated with the bit based on the transmission rank, the quantity of basis vector pairs selected by the terminal or configured by the network-side device, the function value of the basis vector pair index associated with the combination coefficient corresponding to the bit, the function value of the frequency-domain basis vector index associated with the combination coefficient corresponding to the bit, and the transport layer at which the combination coefficient corresponding to the bit is located;

determining the second value associated with the bit based on the transmission rank, the quantity of spatial-domain basis vectors selected by the terminal or configured by the network-side device, the function value of the spatial-domain basis vector index associated with the combination coefficient corresponding to the bit, and the transport layer at which the combination coefficient corresponding to the bit is located;

determining the second value associated with the bit based on the transmission rank, the quantity of spatial-domain basis vectors selected by the terminal or configured by the network-side device, the function value of the Doppler-domain basis vector index associated with the combination coefficient corresponding to the bit, and the transport layer at which the combination coefficient corresponding to the bit is located; and

determining the second value associated with the bit based on the transmission rank, the quantity of spatial-domain basis vectors selected by the terminal or configured by the network-side device, the function value of the frequency-domain basis vector index associated with the combination coefficient corresponding to the bit, and the transport layer at which the combination coefficient corresponding to the bit is located, wherein

the basis vector pair index comprises one of a spatial domain-frequency domain basis vector pair index, a spatial domain-Doppler domain basis vector pair index, and a frequency domain-Doppler domain basis vector pair index.

23. The method according to claim 18, wherein the sending, by the terminal, a parameter related to a target PMI combination coefficient further comprises:
mapping the non-zero combination coefficient amplitude indication and the non-zero combination coefficient phase indication to the group 1 and the group 2 in the second part of the CSI report for sending.

24. The method according to claim 23, wherein the mapping the non-zero combination coefficient amplitude indication and the non-zero combination coefficient phase indication to the group 1 and the group 2 in the second part of the CSI report for sending comprises:

determining a third value associated with each non-zero combination coefficient;
determining a mapping order of each non-zero combination coefficient based on the third value associated with each non-zero combination coefficient;
dividing all non-zero combination coefficients into a first part of non-zero combination coefficients and a second part of non-zero combination coefficients based on the mapping order; and
mapping a non-zero coefficient amplitude indication of the first part of non-zero combination coefficients and a non-zero coefficient phase indication of the first part of non-zero combination coefficients to the group 1 in the second part of the CSI report for sending, and mapping a non-zero coefficient amplitude indication of the second part of non-zero combination coefficients and a non-zero coefficient phase indication of the second part of non-zero combination coefficients to the group 2 in the second part of the CSI report for sending.

25. The method according to claim 24, wherein a quantity of non-zero combination coefficients in the first part of non-zero combination coefficients is Knz minusX3, wherein Knz is a quantity of all the non-zero combination coefficients, X3 is an integer greater than 0, and X3 is obtained based on a default rule, indicated by the network-side device, or determined by the terminal.

26. The method according to claim 24, wherein the third value is determined based on the second value.

27. The method according to any one of claims 1 to 10, wherein the sending, by the terminal, a parameter related to a target PMI combination coefficient comprises:

in a case that one or Q non-zero combination coefficient indication bitmaps are fed back, mapping the one or Q non-zero combination coefficient indication bitmaps to a group 1 and a group 2 in a second part of a CSI report for sending, wherein Q is a quantity of Doppler-domain basis vectors selected by the terminal or configured by a network-side device in a current transmission rank.

28. The method according to claim 27, wherein the mapping the one or Q non-zero combination coefficient indication bitmaps to a group 1 and a group 2 in a second part of a CSI report for sending comprises:

determining fourth values associated with combination coefficients, wherein one combination coefficient is associated with one bit in the one or Q non-zero combination coefficient indication bitmaps;
determining a mapping order of parameters related to the target PMI combination coefficient based on the fourth values associated with the combination coefficients; and
mapping the one or Q non-zero combination coefficient indication bitmaps to the group 1 and the group 2 based on the mapping order for sending.

29. The method according to claim 28, wherein the determining fourth values associated with combination coefficients comprises:
determining, for any one of the combination coefficients, a fourth value associated with the combination coefficient based on at least one of the following:

a spatial-domain basis vector sequence number associated with the combination coefficient;
a spatial-domain basis vector index associated with the combination coefficient;
a frequency-domain basis vector sequence number associated with the combination coefficient;
a frequency-domain basis vector index associated with the combination coefficient;
a Doppler-domain basis vector sequence number associated with the combination coefficient;
a Doppler-domain basis vector index associated with the combination coefficient;
a layer sequence number associated with the combination coefficient;
a layer index associated with the combination coefficient;
a spatial-domain basis vector index associated with a strongest coefficient;
a spatial-domain basis vector sequence number associated with the strongest coefficient;
a frequency-domain basis vector sequence number associated with the strongest coefficient;
a frequency-domain basis vector index associated with the strongest coefficient;
a Doppler-domain basis vector sequence number associated with the strongest coefficient; and
a Doppler-domain basis vector index associated with the strongest coefficient.

30. The method according to claim 28, comprising: for parameters related to the target PMI combination coefficient that are associated with combination coefficients with a same fourth value, determining mapping priorities of the parameters related to the target PMI combination coefficient based on at least one of the following:

that a mapping priority of the target PMI combination coefficient whose spatial-domain basis vector sequence number or basis vector index associated with an associated combination coefficient is small is high;
that a mapping priority of the target PMI combination coefficient whose frequency-domain basis vector sequence number or basis vector index associated with the associated combination coefficient is small is high;
that a priority of the target PMI combination coefficient whose Doppler-domain basis vector sequence number or basis vector index associated with the associated combination coefficient is small is high;
that a priority of the target PMI combination coefficient whose layer sequence number or layer index associated with the associated combination coefficient is small is high; and
that a priority of the target PMI combination coefficient whose fifth value associated with the associated combination coefficient is large or small is high.

31. The method according to claim 30, wherein the fifth value is determined based on at least one of the following:

the spatial-domain basis vector sequence number associated with the associated combination coefficient;
the spatial-domain basis vector index associated with the associated combination coefficient;
the frequency-domain basis vector sequence number associated with the associated combination coefficient;
the frequency-domain basis vector index associated with the associated combination coefficient;
the Doppler-domain basis vector sequence number associated with the associated combination coefficient;

the Doppler-domain basis vector index associated with the associated combination coefficient;
the layer sequence number associated with the associated combination coefficient; and
the layer index associated with the associated combination coefficient.

32. The method according to claim 29, wherein the method further comprises:
in a case that the fourth value associated with the combination coefficient is not related to the Doppler-domain basis vector sequence number or Doppler-domain basis vector index of the combination coefficient, explicitly or implicitly indicating, in the first part of the CSI report, a quantity of non-zero combination coefficients associated with each of Q Doppler-domain basis vectors.

33. The method according to claim 28, wherein the determining, for any one of the combination coefficients, a fourth value associated with the combination coefficient comprises one of the following:

determining the fourth value associated with the combination coefficient based on a transmission rank, a quantity of spatial-domain basis vectors selected by the terminal or configured by the network-side device, a function value of the frequency-domain basis vector index of the combination coefficient, a function value of the spatial-domain basis vector index of the combination coefficient, and a transport layer at which the combination coefficient is located;
determining the fourth value associated with the combination coefficient based on the transmission rank, the quantity of spatial-domain basis vectors selected by the terminal or configured by the network-side device, a quantity of frequency-domain basis vectors selected by the terminal or configured by the network-side device in the transmission rank, the function value of the frequency-domain basis vector index of the combination coefficient, a function value of the Doppler-domain basis vector index of the combination coefficient, the function value of the spatial-domain basis vector index of the combination coefficient, and the transport layer at which the combination coefficient is located;
determining the fourth value associated with the combination coefficient based on the transmission rank, the quantity of spatial-domain basis vectors selected by the terminal or configured by the network-side device, a quantity of frequency domain units configured by the network-side device, the function value of the frequency-domain basis vector index of the combination coefficient, the function value of the Doppler-domain basis vector index of the combination coefficient, the function value of the spatial-domain basis vector index of the combination coefficient, and the transport layer at which the combination coefficient is located;
determining the fourth value associated with the combination coefficient based on the transmission rank, the quantity of spatial-domain basis vectors selected by the terminal or configured by the network-side device, the quantity of Doppler-domain basis vectors selected by the terminal or configured by the network-side device in the transmission rank, the function value of the frequency-domain basis vector index of the combination coefficient, the function value of the Doppler-domain basis vector index of the combination coefficient, the function value of the spatial-domain basis vector index of the combination coefficient, and the transport layer at which the combination coefficient is located;
determining the fourth value associated with the combination coefficient based on the transmission rank, the quantity of spatial-domain basis vectors selected by the terminal or configured by the network-side device, a quantity of time domain units configured by the network-side device, the function value of the frequency-domain basis vector index of the combination coefficient, the function value of the Doppler-domain basis vector index of the combination coefficient, the function value of the spatial-domain basis vector index of the combination coefficient, and the transport layer at which the combination coefficient is located;
determining the fourth value associated with the combination coefficient based on the transmission rank, the quantity of spatial-domain basis vectors selected by the terminal or configured by the network-side device, a function value related to the Doppler-domain basis vector index of the combination coefficient and the frequency-domain basis vector index of the combination coefficient, the function value of the spatial-domain basis vector index of the combination coefficient, and the transport layer at which the combination coefficient is located;
determining the fourth value associated with the combination coefficient based on the transmission rank, the quantity of spatial-domain basis vectors selected by the terminal or configured by the network-side device, a function value related to the Doppler-domain basis vector index of the combination coefficient and the spatial-domain basis vector index of the combination coefficient, the function value of the frequency-domain basis vector index of the combination coefficient, and the transport layer at which the combination coefficient is located;
determining the fourth value associated with the combination coefficient based on the transmission rank, the quantity of spatial-domain basis vectors selected by the terminal or configured by the network-side device, a function value related to the Doppler-domain basis vector index of the combination coefficient and the frequency-domain basis vector index of the combination coefficient, the function value of the frequency-domain basis vector index of the combination coefficient, and the transport layer at which the combination coefficient is located;

determining the fourth value associated with the combination coefficient based on the quantity of spatial-domain basis vectors selected by the terminal or configured by the network-side device, the function value related to the Doppler-domain basis vector index of the combination coefficient and the spatial-domain basis vector index of the combination coefficient, and the function value of the frequency-domain basis vector index of the combination coefficient;

determining the fourth value associated with the combination coefficient based on the function value of the Doppler-domain basis vector index of the combination coefficient, the function value of the spatial-domain basis vector index of the combination coefficient, the function value of the frequency-domain basis vector index of the combination coefficient, and the transport layer at which the combination coefficient is located;

determining the fourth value associated with the combination coefficient based on the transmission rank, the function value of the Doppler-domain basis vector index of the combination coefficient, the function value of the spatial-domain basis vector index of the combination coefficient, the function value of the frequency-domain basis vector index of the combination coefficient, and the transport layer at which the combination coefficient is located; and

determining the fourth value associated with the combination coefficient based on the function value of the Doppler-domain basis vector index of the combination coefficient, the function value of the spatial-domain basis vector index of the combination coefficient, and the function value of the frequency-domain basis vector index of the combination coefficient.

34. The method according to claim 28, wherein the method further comprises:

mapping, based on a mapping order of parameters related to the target PMI combination coefficient that are associated with the combination coefficients, non-zero combination coefficient amplitude indications and/or non-zero combination coefficient phase indications associated with non-zero combination coefficients to the second part of the CSI report for sending.

35. The method according to claim 34, wherein the mapping non-zero combination coefficient amplitude indications and/or non-zero combination coefficient phase indications associated with non-zero combination coefficients to the second part of the CSI report for sending comprises:

mapping non-zero combination coefficient amplitude indications and/or non-zero combination coefficient phase indications associated with N1 first non-zero combination coefficients to a group 1 in the second part of the CSI report for sending, and mapping non-zero combination coefficient amplitude indications and/or non-zero combination coefficient phase indications associated with N2 second non-zero combination coefficients to a group 2 in the second part of the CSI report for sending, wherein N1 and N2 are integers greater than 0, and a sum of N1 and N2 is a total quantity of non-zero combination coefficients associated with Q Doppler-domain basis vectors.

36. The method according to claim 34, wherein N1 is a sum of Q first quantities or a sum of Q second quantities, the first quantity is the ceiling of a quantity of non-zero combination coefficients associated with the Doppler-domain basis vector divided by 2, and the second quantity is the ceiling of the quantity of non-zero combination coefficients associated with the Doppler-domain basis vector divided by 2 minus the transmission rank.

37. The method according to claim 34, wherein N1 first non-zero combination coefficients are non-zero combination coefficients whose fourth values are less than a preset threshold in non-zero combination coefficients associated with Q Doppler-domain basis vectors.

38. The method according to claim 28, wherein the mapping the one or Q non-zero combination coefficient indication bitmaps to the group 1 and the group 2 based on the mapping order for sending comprises:

mapping N3 bits in the one or Q non-zero combination coefficient indication bitmaps to the group 1 for sending, and mapping bits other than the N3 bits in the one or Q non-zero combination coefficient indication bitmaps to the group 2 for sending, wherein the N3 bits are non-zero combination coefficient indications corresponding to first N3 non-zero combination coefficients in a mapping order in the one or Q non-zero combination coefficient indication bitmaps, and N3 is an integer greater than 0.

39. The method according to claim 38, wherein N3 is $v * Q * L * M - \lfloor K_{NZ}/2 \rfloor$, wherein M represents a quantity of frequency-domain basis vectors selected by the terminal or configured by the network-side device in a transmission rank v, v represents the transmission rank, L represents a quantity of spatial-domain basis vectors selected by the terminal or configured by the network-side device, and $K_{NZ}$ is a quantity of non-zero coefficients indicated in the first part of the CSI report, or $K_{NZ}$ is a sum of quantities of non-zero coefficients associated with a plurality of Doppler-domain basis vectors indicated in the first part of the CSI report.

**40.** The method according to claim 38, wherein N3 is v * Q * L * M - X, wherein M represents a quantity of frequency-domain basis vectors selected by the terminal or configured by the network-side device in a transmission rank v, v represents the transmission rank, L represents a quantity of spatial-domain basis vectors selected by the terminal or configured by the network-side device, and X is a quantity of non-zero coefficients associated with a group 2 in a second part of the CSI report.

**41.** The method according to claim 38, wherein N3 is $v * L * M - \left\lfloor K_{NZ,q}/2 \right\rfloor$, wherein M represents a quantity of frequency-domain basis vectors selected by the terminal or configured by the network-side device in a transmission rank v, v represents the transmission rank, L represents a quantity of spatial-domain basis vectors selected by the terminal or configured by the network-side device, and $K_{NZ,q}$ is a quantity of non-zero coefficients associated with a q-th Doppler-domain basis vector indicated in the first part of the CSI report.

**42.** The method according to claim 1, wherein the sending, by the terminal, a parameter related to a target PMI combination coefficient comprises:
in a case that a quantity of non-zero combination coefficients is less than a threshold, mapping the parameter related to the target PMI combination coefficient to a group 1 in a second part of a CSI report for sending, wherein the second part of the CSI report does not comprise a group 2.

**43.** The method according to claim 42, wherein the mapping the parameter related to the target PMI combination coefficient to a group 1 in a second part of a CSI report for sending comprises:

determining sixth values associated with combination coefficients;
determining, based on the sixth values associated with the non-zero combination coefficients, a mapping order of parameters related to the target PMI combination coefficient associated with the non-zero combination coefficients; and
mapping, based on the mapping order, the parameters related to the target PMI combination coefficient to the group 1 for sending, wherein
the sixth value is obtained based on a basis vector index and a layer index that are associated with the combination coefficient, and the basis vector index comprises at least one of the following: a spatial-domain basis vector index i, a frequency-domain basis vector index f, and a Doppler-domain basis vector index q.

**44.** The method according to claim 42, wherein the threshold is determined based on one of the following: a configuration of a network-side device, a default rule, and a feedback of the terminal.

**45.** The method according to claim 2, 5, or 19, wherein a value of S comprises one of the following:

a preset value configured by the network-side device;
one of a plurality of candidate values configured by the network-side device;
a value of S determined by the terminal based on a maximum or minimum value of S configured by the network-side device;
a value determined by the terminal based on the first scaling factor configured by the network-side device; and
a value of S determined by the terminal based on a maximum or minimum value of S determined based on the first scaling factor configured by the network-side device.

**46.** The method according to claim 1, wherein the method further comprises:
sending, by the terminal, channel state information CSI through a physical uplink shared channel PUSCH or a physical uplink control channel PUCCH, wherein the CSI comprises the fed-back PMI combination coefficient, S inter-slot repetitions are configured for the PUSCH or the PUCCH, S is greater than or equal to 1, the CSI is sent in R slots in S slots, R is greater than or equal to 1, and R is less than or equal to S, the fed-back PMI combination coefficient is associated with a radio channel of a time domain window comprising W slots, W is greater than or equal to 1, a distance between a start slot of the W slots and a first slot determined in the R slots is δ slots, δ is greater than or equal to 0, a value of δ is indicated by a network-side device to the terminal or configured in a protocol by default, for a CSI reference slot, a distance between the CSI reference slot and a second slot determined in the R slots is n_CSI_ref slots, and n_CSI_ref is a capability value configured by the network-side device, stipulated in a protocol, or reported by the terminal.

47. The method according to claim 46, wherein the first slot or the second slot is determined based on at least one of the following rules:

that the first slot or the second slot is a 1st slot in the R slots; and
that the first slot or the second slot is a last slot in the R slots.

48. The method according to claim 46, wherein the CSI further comprises channel quality indication information, the CQI is associated with only first d slots or any d slots in the time domain window comprising the W slots, and d is greater than or equal to 1, and d is less than or equal to W; and
the method further comprises: in a case that each of the first d slots or any d slots is not a valid downlink slot, canceling, by the terminal, sending the reported CSI.

49. The method according to claim 46, wherein the fed-back PMI combination coefficient comprised in the CSI sent by the terminal is calculated based on B CSI-RS resources, and B is a configuration value of the network-side device or a capability value reported by the terminal; and
the method further comprises: canceling, by the terminal, current CSI sending in a case that CSI report reconfiguration, cell activation, BWP change, or semi-persistent SP-CSI report activation is performed, and a quantity of received CSI-RS resources is less than B.

50. A PMI combination coefficient feedback apparatus, comprising:

a determining module, configured to determine a target non-zero combination coefficient indication manner used to feed back a PMI combination coefficient; or
a sending module, configured to send a parameter related to a target PMI combination coefficient, wherein the parameter related to the target PMI combination coefficient comprises at least one of the following:

a non-zero combination coefficient indication bitmap, indicating positions of all non-zero combination coefficients;
a non-zero combination coefficient amplitude indication, indicating amplitudes of all the non-zero combination coefficients; and
a non-zero combination coefficient phase indication, indicating phases of all the non-zero combination coefficients.

51. A terminal, comprising a processor and a memory, wherein the memory stores a program or instructions that are executable on the processor, and when the program or instructions are executed by the processor, the steps of the PMI combination coefficient feedback method according to any one of claims 1 to 49 are implemented.

52. A readable storage medium, wherein a program or instructions are stored in the readable storage medium, and when the program or the instructions are executed by a processor, the steps of the PMI combination coefficient feedback method according to any one of claims 1 to 49 are implemented.

12

Network-side
device

11

11

Terminal

Terminal

FIG. 1

200

S210

A terminal determines a target non-zero combination coefficient
indication manner used to feed back a PMI combination coefficient

S212

The terminal sends a parameter related to a target PMI combination
coefficient

FIG. 2

Q=2 compression DFT basis (Wd)

$$\overline{W_1 \widetilde{W}_2 (W_f \otimes W_d)^H}$$

Predicted PMIs in reporting window

n_CSI_ref

δ slots

Pmi_1  Pmi_2  ...  Pmi_N4

CSI Reference slot

slot_k  slot_k+1

CSI Reportting repetition

d slots

N4 PMIs or say N4- DFT basis

FIG. 3

400

401

Determining module

402

Sending module

FIG. 4

FIG. 5

FIG. 6

## INTERNATIONAL SEARCH REPORT

| International application No. |
| --- |
| **PCT/CN2024/070388** |

| | |
| --- | --- |
| **A.** | **CLASSIFICATION OF SUBJECT MATTER** |

H04W 72/0446(2023.01)i

According to International Patent Classification (IPC) or to both national classification and IPC

| | |
| --- | --- |
| **B.** | **FIELDS SEARCHED** |

Minimum documentation searched (classification system followed by classification symbols)

IPC:H04W H04B

Documentation searched other than minimum documentation to the extent that such documents are included in the fields searched

Electronic data base consulted during the international search (name of data base and, where practicable, search terms used)

CNTXT: CNKI: WPABSC; ENTXTC; ENTXT; 3GPP: 预编码矩阵, 指示, 组合, 系数, 反馈, 位图, 幅度, 相位, 部分, 组, 信道状态信息, PMI, precoding matrix, indicate, bitmap, phrase, amplitude, part, group

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 113711512 A (NOKIA SHANGHAI BELL CO., LTD. et al.) 26 November 2021 (2021-11-26) description, paragraphs 40-62 and 115-147 | 1, 3, 50-52 |
| X | US 2022069880 A1 (SAMSUNG ELECTRONICS CO., LTD.) 03 March 2022 (2022-03-03) description, paragraphs 362-431, and claims 1-15 | 1, 3, 50-52 |
| A | CN 111835459 A (VIVO COMMUNICATION TECHNOLOGY CO., LTD.) 27 October 2020 (2020-10-27) entire document | 1-52 |
| A | CN 112671441 A (NOKIA TECHNOLOGIES OY) 16 April 2021 (2021-04-16) entire document | 1-52 |
| A | CN 115333586 A (DATANG MOBILE COMMUNICATIONS EQUIPMENT CO., LTD.) 11 November 2022 (2022-11-11) entire document | 1-52 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 April 2024** | **10 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/070388**

| Patent document cited in search report | | | Publication date (day/month/year) | Patent family member(s) | | | Publication date (day/month/year) |
|---|---|---|---|---|---|---|---|
| CN | 113711512 | A | 26 November 2021 | EP | 3720009 | A1 | 07 October 2020 |
| | | | | US | 2020322027 | A1 | 08 October 2020 |
| | | | | WO | 2020199222 | A1 | 08 October 2020 |
| | | | | US | 10848229 | B2 | 24 November 2020 |
| | | | | US | 2021028846 | A1 | 28 January 2021 |
| | | | | EP | 3949185 | A1 | 09 February 2022 |
| | | | | US | 11336356 | B2 | 17 May 2022 |
| | | | | US | 2022255608 | A1 | 11 August 2022 |
| | | | | EP | 3949185 | A4 | 09 November 2022 |
| | | | | EP | 3720009 | B1 | 22 February 2023 |
| | | | | CN | 113711512 | B1 | 25 August 2023 |
| | | | | CN | 116887424 | A | 13 October 2023 |
| | | | | JP | 7382418 | B2 | 16 November 2023 |
| | | | | US | 1909484 | B2 | 20 February 2024 |
| US | 2022069880 | A1 | 03 March 2022 | JP | 2022509944 | A | 25 January 2022 |
| | | | | JP | 7214297 | B2 | 30 January 2023 |
| | | | | KR | 20210061459 | A | 27 May 2021 |
| | | | | KR | 102534939 | B1 | 26 May 2023 |
| | | | | US | 2020162142 | A1 | 21 May 2020 |
| | | | | EP | 3864767 | A1 | 18 August 2021 |
| | | | | EP | 3864767 | A4 | 08 December 2021 |
| | | | | WO | 2020101454 | A1 | 22 May 2020 |
| | | | | US | 11381295 | B2 | 05 July 2022 |
| CN | 111835459 | A | 27 October 2020 | CN | 111835459 | B | 01 December 2023 |
| CN | 112671441 | A | 16 April 2021 | EP | 3809618 | A1 | 21 April 2021 |
| | | | | WO | 2021074486 | A1 | 22 April 2021 |
| | | | | FI | 20195893 | A1 | 17 April 2021 |
| | | | | FI | 129704 | B | 15 July 2022 |
| | | | | US | 2021119684 | A1 | 22 April 2021 |
| | | | | US | 11476913 | B2 | 18 October 2022 |
| CN | 115333586 | A | 11 November 2022 | WO | 2022237360 | A1 | 17 November 2022 |

Form PCT/ISA/210 (patent family annex) (July 2022)

**EP 4 648 512 A1**

## REFERENCES CITED IN THE DESCRIPTION

**Patent documents cited in the description**

- CN 202310008060